(19) Europäisches Patentamt
European Patent Office
Office européen des brevets

(11) EP 1 722 504 A1

(12) EUROPEAN PATENT APPLICATION
published in accordance with Art. 158(3) EPC

(43) Date of publication:
15.11.2006 Bulletin 2006/46

(21) Application number: 05781288.5

(22) Date of filing: 30.08.2005

(51) Int Cl.:
*H04L 9/08* (2006.01)

(86) International application number:
PCT/JP2005/015814

(87) International publication number:
WO 2006/030635 (23.03.2006 Gazette 2006/12)

(84) Designated Contracting States:
AT BE BG CH CY CZ DE DK EE ES FI FR GB GR HU IE IS IT LI LT LU LV MC NL PL PT RO SE SI SK TR

(30) Priority: 14.09.2004 JP 2004266478
14.07.2005 JP 2005206205

(71) Applicant: SONY CORPORATION
Tokyo 141-0001 (JP)

(72) Inventor: ASANO, Tomoyuki,
Sony Corporation
Tokyo 141-0001 (JP)

(74) Representative: Merryweather, Colin Henry
J.A. Kemp & Co.
14 South Square
Gray's Inn
GB-London WC1R 5JJ (GB)

# (54) INFORMATION PROCESSING METHOD, DECODING METHOD, INFORMATION PROCESSING DEVICE, AND COMPUTER PROGRAM

(57) A cipher text supplying configuration applying a tree structure and based on a CS scheme is provided, which enables a reduction of the amount of information to be stored in and the amount of calculation to be performed by, equipment that execute decryption of a cipher text. A Rabin Tree is generated as a one-way tree in which node-corresponding values are set so as to correspond to nodes constituting a hierarchical tree. A node-corresponding value $NV_a$ is set so as to be calculable by application of a function f based on a node-corresponding value $NV_b$ and a node-added variable $salt_b$ set so as to correspond to at least one lower-rank node. Thus, it is configured such that a node key NK is calculable by application of a function Hc with node-corresponding values NV corresponding to nodes as inputs. As a result of the present configuration, the amount of information required for a receiver to be held safely can be reduced, and also, the amount of calculation required for node key calculation can be reduced, whereby a secure cipher text distribution and decryption processing configuration is implemented.

FIG. 13

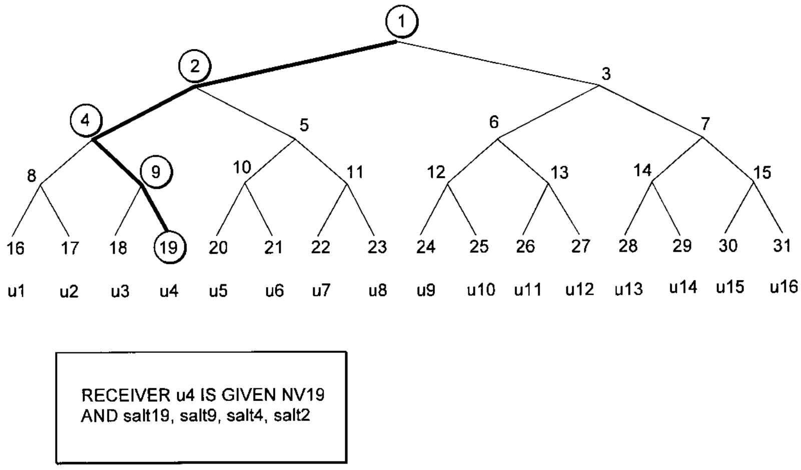


EP 1 722 504 A1

## Description

### Technical Field

The present invention relates to an information processing method, a decryption processing method, an information processing apparatus, and a computer program. More particularly, the present invention relates to an information processing method, a decryption processing method, an information processing apparatus, and a computer program, all implementing efficient and secure information distribution in which both the amount of computation required and the amount of data to be securely managed are reduced compared to existing schemes using RSA cryptosystem, by enhancing and making more efficient a Complete Subtree scheme (CS scheme) currently known in Broadcast Encryption schemes to which a hierarchical tree structure is applied, through use of a Rabin Tree set as a one-way tree.

### Background Art

Recently, various kinds of software data including audio data, e.g., music, image data, e.g., movies, game programs and various application programs (these are hereinafter referred to as content) have been circulated through networks such as the Internet, or through various information recording media such as compact discs (CDs), digital versatile discs (DVDs), mini discs (MDs). Such circulating content is reproduced and used by reproducing apparatus such as personal computers (PCs), players, or game equipment which is owned by users.

The rights of distribution or the like of various content such as music data and image data is generally held by their creators or their distributors. Consequently, at the time of the distribution of the content, a configuration for setting certain restricted access is generally adopted, i.e. , only the authorized users are permitted to use the content for preventing unauthorized duplication or the like.

In particular, in recent years, recording devices and storage media for recording information digitally have been gaining popularity. By means of such digital recording devices and storage media, for example, it is possible to repeat recording and reproducing without deteriorating images and sounds, and thus problems, such as distribution of fraudulently copied content through the Internet, and unauthorized copying of recording media such as a compact disc-recordable (CD-R), have been addressed.

As a method for preventing such unauthorized use of content, there is a system in which a key for decoding content or encrypted content is enciphered to be distributed for enabling only specific authorized users or authorized devices to decode the distributed data. For example, a configuration adopting a hierarchical tree structure being an embodiment of the Broadcast Encryption schemes is known.

Processing for supplying encryption data such as encryption keys, using a hierarchical tree structure is described with reference to the attached drawings.

A hierarchical tree structure shown in Fig. 1 uses a binary tree. The lowermost layer of the binary tree is called a leaf, and each of portions including an apex, each branch portion and the leaf is called a node. In the binary tree hierarchical tree structure shown in Fig. 1, the leaves are denoted by 8-15, and the nodes are denoted by 1-15, and further the root is denoted by 1.

Information processing apparatus such as a reproducer, a receiver as content utilization equipment are assigned to the leaves 8-15 in the binary tree hierarchical tree structure one by one.

Moreover, node keys are assigned to the nodes (including the leaves) 1-15 of the tree one by one. The node keys assigned to the leaves 8-15 are sometimes called leaf keys.

An information processing apparatus corresponding to each of the leaves is given node keys which are assigned to nodes in a path from the corresponding leaf to the root. In the configuration of Fig. 1, there are eight information processing apparatus assigned to the leaves 8-15 severally, and a node key is assigned to each of the nodes 1-15. An information processing apparatus 101 corresponding to the leaf 8 is given four node keys assigned to the nodes 1, 2, 4, 8. Moreover, an information processing apparatus 102 corresponding to the leaf 12 are given four node keys assigned to the nodes 1, 3, 6, 12. Each information processing apparatus keeps these node keys in custody safely.

A method for transmitting the information which only a selected information processing apparatus can obtain, by means of a setting involving node key distributing processing is described with reference to Fig. 2. For example, a configuration is supposed. In the configuration, content such as specific music, image data enciphered to be encrypted content is circulated in a state obtainable by everybody by means of a broadcast distribution or a recording medium such as a DVD storing the content, and a key (content key Kc) for decoding the encrypted content is supplied only to a specific user, i.e. a user or an information processing apparatus having an authorized right of using the content.

It is supposed that an information processing apparatus assigned to the leaf 14 shown in Fig. 2 is excluded (revoked) as an unauthorized apparatus, and that the other information processing apparatus are authorized information processing apparatus. In this case, a cipher text by which the information processing apparatus assigned to the leaf 14 cannot obtain the content key Kc, but by which the other information processing apparatus can obtain the content key Kc, is generated, and the cipher text is distributed through a network or by means of a recording medium storing the cipher text.

In this case, the content key may be enciphered for transmission by using some node keys owned jointly by as many information processing apparatus as possible, i.e., some node keys located at the upper part of the tree, among node keys except ones (marked × in Fig. 2) owned by the information processing apparatus to be revoked (excluded).

In the example shown in Fig. 2, the node keys at the nodes 2, 6, 15 are used for enciphering the content key Kc to generate a set of cipher texts to be supplied. Namely, cipher texts of E($NK_2$, Kc), E($NK_6$, Kc) and E($NK_{15}$, Kc) are generated, and are supplied while distributed through a network or stored in a recording medium. It should be noted that E (A, B) means data B enciphered with a key A. Moreover, NKn denotes an nth node key shown in the drawing. Consequently, the above formulae indicate a set of three cipher texts including the encryption data E($NK_2$, Kc) produced by encrypting the content key Kc with a node key $NK_2$, the encryption data E($NK_6$, Kc) produced by encrypting the content key Kc with a node key $NK_6$, and the encryption data E ($NK_{15}$, Kc) produced by encrypting the content key Kc with a node key $NK_{15}$.

If the three cipher texts are produced and then transmitted to all of the information processing apparatus through, e.g., a broadcast communication channel, information processing apparatus not to be revoked (ones corresponding to the leaves 8-13 and 15 shown in Fig. 2) each can decode any of the cipher texts with a node key owned by itself to obtain the content keyKc. However, the revoked (excluded) information processing apparatus corresponding to the leaf 14 does not hold any of the three node keys $NK_2$, $NK_6$ and $NK_{15}$ applied to the three cipher texts. Consequently, even if the information processing apparatus receives the cipher texts, the apparatus cannot perform the cipher text decoding processing, and thus the apparatus cannot obtain the content key Kc.

Among Broadcast Encryption schemes so far disclosed in academic conferences and the like is, e.g., a scheme presented as a Non-Patent Document 1. The Broadcast Encryption scheme mentioned above is named a Complete Subtree scheme (CS scheme) according to the Non-Patent Document 1.

However, if information is to be distributed using such a tree structure, there exists a problem that the number of messages to be broadcast increases with increasing number of information processing apparatus (user equipment) corresponding to the leaves and that key information such as node keys to be securely stored by each information processing apparatus (user equipment) is also increased.

For example, in the above-mentioned CS scheme, assuming that the total number of information processing apparatus (recipients) of a system is set to N and that the number of receivers to be excluded (revoked), i.e., receivers that cannot receive secret information to be broadcast, is set to r, the number of messages (cipher texts) to be broadcast equals $r \log (N/r)$, and the number of keys held by each receiver in a safe memory equals $\log N + 1$. It should be noted that throughout the present Description, the base of log is 2 unless otherwise specified.

In order to reduce the cost of manufacturing receivers, the issue is to reduce the number of these keys. As proposals for the key reduction, treaties are available, such as "Improving efficiency of tree structure-based key management scheme through one-way function" by Nojima et al. (Non-Patent Document 2), and "Efficient tree structure-based key management scheme using RSA cryptosystem" by Ogata et al. (Non-Patent Document 3).

The schemes proposed in these treaties attempt to reduce the number of keys to be owned by each receiver in the CS scheme to one through use of RSA cryptosystem. However, there is problem that a large amount of computation is required for using RSA cryptosystem, and thus the issue is to reduce the amount of computation.

As mentioned above, the information distribution configuration using a tree structure addresses the problems, such as the increased number of messages for distribution due to increased number of information processing apparatus (user equipment) corresponding to the leaves, and the increased number of key information such as node keys for safe storage on the side of each information processing apparatus (user equipment), with additional load problem as to the amount of computation required for key calculation in each receiver. For example, an increase in the amount of information to be stored by, and an increase in computational load required of a receiver would entail another increase in the secure memory area, and calculation processing capability of the user equipment, which in turn leads to an increase in the manufacturing cost of the user equipment. Moreover, a problem of processing delay due to the increased amount of computation also arises.

[Non-Patent Document 1] Advances in Cryptography - Crypto 2001, Lecture Notes in Computer Science 2139, Springer, 2001, pp.41-62 (D. Naor, M. Naor and J. Lotspiech, "Revocation and Tracing Schemes for Stateless Receivers")
[Non-Patent Document 2] Transactions of Symposium on Cryptography and Information Security 2004, pp.189-194
[Non-Patent Document 3] Transactions of Symposium on Cryptography and Information Security 2004, pp.195-199

## Disclosure of the Invention

The present invention has been made in view of such circumstances, and an object thereof is to provide an information processing method, a decryption processing method, an information processing apparatus, and a computer program, all implementing efficient and secure information distribution with compressed required computation amount and reduced securely managed data amount compared with existing schemes using RSA cryptosystem, by enhancing and making more efficient a Complete Subtree scheme (CS scheme) currently known in Broadcast Encryption schemes to which a hierarchical tree structure is applied, through use of a Rabin Tree set as a one-way tree.

Furthermore, specifically, in the present invention, a Rabin Tree which is based on Rabin cryptography is applied to the CS scheme, whereby to reduce the number of keys held safely by each receiver, to one. Each receiver derives as many as log N + 1 keys, which were required in the CS scheme, from one key by calculation. Moreover, the present invention provides an information processing method, a decryption processing method, an information processing apparatus, and a computer program, all enabling a significant reduction in amount of computation by applying Rabin cryptography, as later described in detail, when compared to the schemes disclosed by Nojima et al. and Ogata et al. applying RSA cryptosystem.

A first aspect of the present invention is

an information processing method for generating a hierarchical tree which is applied to processing for supplying cipher texts decryptable only by certain selected equipment except excluded (revoked) equipment, by applying a Broadcast Encryption scheme based on a hierarchical tree configuration, the information processing method characterized by having:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;

a node key calculating step of calculating node keys NK corresponding to the respective nodes constituting the one-way tree, by application of a function Hc using the node-corresponding values NV corresponding to the respective nodes as inputs; and

an information-for-supply determining step of selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

Furthermore, in an embodiment of the information processing method of the present invention, the one-way tree generating step is characterized by generating the one-way tree having a setting in which a node-corresponding value for a higher-rank node is calculable by encrypting processing (forward computation) to which a Rabin cryptography based on a node-corresponding value for a lower-rank node is applied, and in which the node-corresponding value for the lower-rank node is calculable by decrypting processing (inverse computation) to which a Rabin cryptography based on the node-corresponding value for the higher-rank node is applied.

Furthermore, in an embodiment of the information processing method of the present invention, the information processing method is characterized by further having a cipher text generating step of generating cipher texts by executing encrypting processing by selectively applying the node keys set so as to correspond to the respective nodes of the hierarchical tree.

Furthermore, in an embodiment of the information processing method of the present invention, the one-way tree generating step is characterized by generating the one-way tree in which

in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node in a breadth first order in the binary tree satisfy a relationship of the following expression

[Math 19]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

Furthermore, in an embodiment of the information processing method of the present invention, the one-way tree generating step is characterized by generating the one-way tree by executing,

in a hierarchical tree having a binary tree configuration with a number N of terminal nodes,

using, as inputs, a number of leaves as the number of node terminals: N, and a size of a modulus M: |M|,

a step 1: Determine two large primes of a size |M|/2, and calculate a product M thereof;

a step 2: Determine the mapping function for outputting an element of $Z_M$: H;

a step 3: Randomly select a node-corresponding value $NV_1$ for a root node being a highest-rank node of the binary tree as a value such that $NV_1 \in Z^*_M$;
a step 4: Perform the following processing a, b while incrementing 1 by 1 from 2 to 2N-1 using 1 as a counter

a. Find a minimum positive integer $salt_l$ such that $tmp_l$ is a quadratic residue modulo M, in the following expression

[Math 20]

$$temp_l = (NV_{\lfloor l/2 \rfloor} - H(l \,\|\, salt_l)) \bmod M$$

b. Find $tmp_1^{1/2}$ mod M, and determine any of four solutions as a node-corresponding value $NV_1$ for a node 1; and

a step 5: Output
2N-1 |M|-bit numbers (node-corresponding values) : $NV_1$, $NV_2$, ..., $NV_{2N-1}$, and
2N-2 numbers (node-added variables) : $salt_2$, $salt_3$, ⋯, $salt_{2N-1}$,
and set them as the node-corresponding values and the node-added variables for the respective nodes 1 (1 = 1 through 2N-1) of the binary tree.

Furthermore, in an embodiment of the information processing method of the present invention, the node key calculating step is characterized by being a step of calculating node keys NK by application of a function Hc using node-corresponding values NV corresponding to the respective nodes as inputs, wherein the function Hc is a hash function for mapping a node-corresponding value NV into data of a bitlength corresponding to a size of a node key.

Furthermore, in an embodiment of the information processing method of the present invention, the one-way tree generating step is characterized by generating the one-way tree in which
in a hierarchical tree having a binary tree configuration with a number N of terminal nodes, node-corresponding values $NV_1$ (1 = 2, 3, ..., 2N-1) for respective nodes 1 to which node numbers 1 are given from a higher-rank node in a breadth first order in the binary tree satisfy a relationship of the following expression

[Math 21]

$$NV_{\lfloor l/2 \rfloor} = (NV_l^2 \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

Furthermore, in an embodiment of the information processing method of the present invention, the one-way tree generating step is characterized by generating the one-way tree by executing,
in a hierarchical tree having a binary tree configuration with a number N of terminal nodes,
using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_l$ for a root node being a highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 22]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M| -bit numbers (node-corresponding values): $NV_1$, $NV_2$, ..., $NV_{2N-1}$, and
2N-2 numbers (node-added variables) : $salt_2$, $salt_3$, ..., $salt_{2N-1}$,
and set them as the node-corresponding values and the node-added variables for the respective nodes 1(1 = 1 through 2N-1) of the binary tree.

Furthermore, a second aspect of the present invention is
an information processing method for generating a hierarchical tree applied to processing for supplying cipher texts decryptable only by certain selected equipment, using a Broadcast Encryption scheme based on a hierarchical tree configuration, the information processing method
characterized by having:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
an intermediate label generating step of generating intermediate labels which are intermediate labels (IL) set as values from which values of labels corresponding to some selected special subsets, among labels (LABEL) respectively corresponding to subsets set on the basis of a SD (Subset Difference) scheme to which the hierarchical tree is applied, are calculable by computational processing;
a label generating step of generating the labels corresponding to the special subsets by computational processing based on the intermediate labels, and further generating labels not corresponding to the special subsets by a computation based on the generated labels; and
a labels-for-supply determining step of determining labels for supply to a receiver corresponding to a terminal node of the hierarchical tree, and selecting
the special subset-noncorresponding labels not corresponding to the special subsets, and
a node-corresponding value as a minimum intermediate label and node-added variables required to calculate a node-corresponding value for any node included in a path from a receiver-corresponding node to a root as a highest-rank node, as information for supply to the receiver corresponding to the terminal node of the one-way tree, and
wherein the one-way tree generating step
generates the one-way tree in which
in a hierarchical tree having a binary tree configuration with a number N of terminal nodes, node-corresponding values $NV_1$ (1 = 2, 3, ..., 2N-1) for respective nodes 1 to which node numbers 1 are given from a higher-rank node of a binary tree in a breadth first order in the binary tree satisfy a relationship of the following expression

[Math 23]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{salt1}$ (1) represents a value obtained by applying the function H to 1 as many as $salt_1$ times.

Furthermore, in an embodiment of the information processing method of the present invention, the one-way tree generating step is characterized by generating the one-way tree by executing,
in the hierarchical tree having the binary tree configuration with the number N of terminal nodes,
using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for the root node being the highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 24]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1(1=1 1 through 2N-1) of the binary tree.

Furthermore, a third aspect of the present invention is
a decryption processing method for executing processing for decrypting cipher texts encrypted with node keys respectively corresponding to nodes constituting a hierarchical tree, by applying a Broadcast Encryption scheme based on a hierarchical tree configuration, the decryption processing method characterized by having:

a cipher text selecting step of selecting a cipher text to which a node key generable on the basis of a node-corresponding value NV and node-added variablessalt held by a self apparatus, from the cipher texts;
a node key calculating step of calculating the node key applied to the cipher text on the basis of the node-corresponding value NV and the node-added variables salt held by the self apparatus; and
a decrypting step of executing processing for decrypting the cipher text on the basis of the calculated node key.

Furthermore, in an embodiment of the decryption processing method of the present invention, the cipher text selecting step is characterized by being a step of finding, in a hierarchical tree in which respective nodes are given node numbers in a breadth first order with a root as a highest-rank node of the hierarchical tree numbered 1, a node number coinciding with any node number included in nodes in a path from a receiver to the root, among node numbers for node keys used for encryption.

Furthermore, in an embodiment of the decryption processing method of the present invention, the node key calculating step is characterized by including a step of calculating
node-corresponding values in a path from a self node to a root being a highest-rank node, among node-corresponding values $NV_l$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 25]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

Furthermore, in an embodiment of the decryption processing method of the present invention, the node key calculating step is characterized by including a step of calculating on the basis of the node-corresponding value held by the self apparatus, or node-corresponding values in a path from a self node to a root being a highest-rank node, and further on the basis of the following expression

$$NK = Hc(NV)$$

where NK is a node key; NV is a node-corresponding value; and Hc is a mapping function.

Furthermore, in an embodiment of the decryption processing method of the present invention, the node key calculating step is characterized by including a step of calculating
node-corresponding values in a path from a self node to a root being a highest-rank node, among node-corresponding

values $NV_1$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 26]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

Furthermore, a fourth aspect of the present invention is a decryption processing method for executing processing for decrypting cipher texts encrypted with subset keys respectively corresponding to subsets set on the basis of a SD (Subset Difference) scheme which is a Broadcast Encryption scheme based on a hierarchical tree configuration, the decryption processing method characterized by having:

a cipher text selecting step of selecting a cipher text generated by applying a subset key derivable by pseudo-random number generating processing based on a label held by a self apparatus, or a label calculable on the basis of a node-corresponding value NV as an intermediate label, and node-added variables salt held by the self apparatus, from the cipher texts;
a label calculating step of calculating a label corresponding to a special subset by executing computational processing based on the node-corresponding value NV and the node-added variables salt, if the subset key to be applied to the cipher text is underivable by the pseudo-random number generating processing based on the label held;
a step of generating the subset key by the pseudo-random number generating processing based on the label held or the label calculated; and
a decrypting step of executing processing for decrypting the cipher text by applying the generated subset key, and wherein the label calculating step
includes a step of calculating
node-corresponding values in a path from a self node to a root being a highest-rank node, among node-corresponding values $NV_l$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 27]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_l$ times.

Furthermore, a fifth aspect of the present invention is an information processing apparatus for generating a hierarchical tree which is applied to processing for supplying cipher texts decryptable only by certain selected equipment except excluded (revoked) equipment, by applying a Broadcast Encryption scheme based on a hierarchical tree configuration, the information processing apparatus characterized by having:
a one-way tree generating means for generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
a node key calculating means for calculating node keys NK corresponding to the respective nodes constituting the one-way tree, by application of a function Hc using the node-corresponding values NV corresponding to the nodes as inputs; and
an information-for-supply determining means for selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

Furthermore, in an embodiment of the information processing apparatus of the present invention, the one-way tree generating means is characterized by being configured to generate the one-way tree having a setting in which a node-corresponding value for a higher-rank node is calculable by encrypting processing (forward computation) to which a Rabin cryptography based on a node-corresponding value for a lower-ranknode is applied, and in which the node-corresponding value for the lower-rank node is calculable by decrypting processing (inverse computation) to which a Rabin cryptography based on the node-corresponding value for the higher-rank node is applied.

Furthermore, in an embodiment of the information processing apparatus of the present invention, the information processing apparatus is characterized by further having a cipher text generating means for generating cipher texts by executing encrypting processing by selectively applying the node keys set so as to correspond to the respective nodes of the hierarchical tree.

Furthermore, in an embodiment of the information processing apparatus of the present invention, the one-way tree generating means is characterized by being configured to generate the one-way tree in which
in a hierarchical tree having a binary tree configuration with a number N of terminal nodes, node-corresponding values $NV_l$ (1 = 2, 3, ···, 2N-1) for respective nodes 1 to which node numbers 1 are given from a higher-rank node in a breadth first order in the binary tree satisfy a relationship of the following expression

[Math 28]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

Furthermore, in an embodiment of the information processing apparatus of the present invention, the one-way tree generating means is characterized by being configured to execute processing for generating the one-way tree by executing,
in a hierarchical tree having a binary tree configuration with a number N of terminal nodes,
using, as inputs, a number of leaves as the number of node terminals: N, and a size of a modulus M: |M|, a step 1: Determine two large primes of a size |M|/2, and calculate a product M thereof;
a step 2: Determine the mapping function for outputting an element of $Z_M$: H;
a step 3: Randomly select a node-corresponding value $NV_1$ for a root node being a highest-rank node of the binary tree as a value such that $NV_1 \in Z^*_M$;
a step 4: Perform the following processing a, b while incrementing 1 by 1 from 2 to 2N-1 using 1 as a counter

a. Find a minimum positive integer $salt_l$ such that $tmp_l$ is a quadratic residue modulo M, in the following expression

[Math 29]

$$temp_l = (NV_{\lfloor l/2 \rfloor} - H(l \,\|\, salt_l)) \bmod M$$

b. Find $tmp_1^{1/2}$ mod M, and determine any of four solutions as a node-corresponding value $NV_1$ for a node 1; and

a step 5: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1(1 = 1 through 2N-1) of the binary tree.

Furthermore, in an embodiment of the information processing apparatus of the present invention, the node key calculating means is characterized by being configured to calculate node keys NK by application of a function Hc using node-corresponding values NV corresponding to the respective nodes as inputs, wherein the function Hc is a hash function for mapping a node-corresponding value NV into data of a bitlength corresponding to a size of a node key.

Furthermore, in an embodiment of the information processing apparatus of the present invention, the one-way tree generating means is characterized by being configured to generate the one-way tree in which

in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node in a breadth first order in the binary tree satisfy a relationship of the following expression

[Math 30]

$$NV_{\lfloor l/2 \rfloor} = (NV_l^2 \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

Furthermore, in an embodiment of the information processing apparatus of the present invention, the one-way tree generating means is characterized by being configured to generate the one-way tree by executing,
in a hierarchical tree having a binary tree configuration with a number N of terminal nodes,
using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for a root node being a highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 31]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values): $NV_1$, $NV_2$, ..., $NV_{2N-1}$, and
2N-2 numbers (node-added variables): $salt_2$, $salt_3$, ..., $salt_{2N-1}$,
and set them as the node-corresponding values and the node-added variables for the respective nodes 1 (1 = 1 through 2N-1) of the binary tree.

Furthermore, a sixth aspect of the present invention is
an information processing apparatus for generating a hierarchical tree applied to processing for supplying cipher texts decryptable only by certain selected equipment, using a Broadcast Encryption scheme based on a hierarchical tree configuration, the information processing apparatus characterized by having:

a one-way tree generating means for generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
an intermediate label generating means for generating intermediate labels which are intermediate labels (IL) set as values from which values of labels corresponding to some selected special subsets, among labels (LABEL) respectively corresponding to subsets set on the basis of a SD (Subset Difference) scheme to which the hierarchical tree is applied, are calculable by computational processing;
a label generating means for generating the labels corresponding to the special subsets by computational processing based on the intermediate labels, and further generating labels not corresponding to the special subsets by a computation based on the generated labels; and
a labels-for-supply determining means for determining labels for supply to a receiver corresponding to a terminal node of the hierarchical tree, and selecting
the special subset-noncorresponding labels not corresponding to the special subsets, and

a node-corresponding value as a minimum intermediate label and node-added variables required to calculate a node-corresponding value for any node included in a path from a receiver-corresponding node to a root as a highest-rank node, as information for supply to the receiver corresponding to the terminal node of the one-way tree, and wherein the one-way tree generating means
is configured to generate the one-way tree in which
in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node of a binary tree in a breadth first order in the binary tree satisfy a relationship of the following expression

[Math 32]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

Furthermore, in an embodiment of the information processing apparatus of the present invention, the one-way tree generating means is characterized by being configured to generate the one-way tree by executing,
in the hierarchical tree having the binary tree configuration with the number N of terminal nodes,
using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for the root node being the highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 33]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1 (1 = 1 through 2N-1) of the binary tree.

Furthermore, a seventh aspect of the present invention is
a decryption processing apparatus for executing processing for decrypting cipher texts encrypted with node keys respectively corresponding to nodes constituting a hierarchical tree, by applying a Broadcast Encryption scheme based on a hierarchical tree configuration, the decryption processing apparatus characterized by having:

a cipher text selecting means for selecting a cipher text to which a node key generable on the basis of node-corresponding values NV and node-added variables salt held by a self apparatus, from the cipher texts;
a node key calculating means for calculating the node key applied to the cipher text on the basis of the node-corresponding value NV and the node-added variables salt held by the self apparatus; and
a decrypting means for executing processing for decrypting the cipher text on the basis of the calculated node key.

Furthermore, in an embodiment of the decryption processing apparatus of the present invention, the cipher text selecting means is characterized by being configured to find, in a hierarchical tree in which respective nodes are given node numbers in a breadth first order with a root as a highest-rank node of the hierarchical tree numbered 1, a node number coinciding with any node number included in nodes in a path from a receiver to the root, among node numbers for node keys used for encryption.

Furthermore, in an embodiment of the decryption processing apparatus of the present invention, the node key calculating means is characterized by being configured to execute processing for calculating node-corresponding values in a path from a self node to a root being a highest-rank node, among node-corresponding values $NV_1$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 34]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

Furthermore, in an embodiment of the decryption processing apparatus of the present invention, the node key calculating means is characterized by being configured to execute processing for calculating on the basis of the node-corresponding value held by the self apparatus, or node-corresponding values in a path from a self node to a root being a highest-rank node, and further on the basis of the following expression

$$NK = Hc\ (NV)$$

where NK is a node key; NV is a node-corresponding value; and Hc is a mapping function.

Furthermore, in an embodiment of the decryption processing apparatus of the present invention, the node key calculating means is characterized by being configured to execute processing for calculating node-corresponding values in a path from a self node to a root being a highest-rank node, among node-corresponding values $NV_1$ (1 = 2, 3, ..., 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 35]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{salt1}$ (1) represents a value obtained by applying the function H to 1 as many as $salt_1$ times.

Furthermore, an eighth aspect of the present invention is

a decryption processing apparatus for executing processing for decrypting cipher texts encrypted with subset keys respectively corresponding to subsets set on the basis of a SD (Subset Difference) scheme which is a Broadcast Encryption scheme based on a hierarchical tree configuration, the decryption processing apparatus characterized by having:

a cipher text selecting means for selecting a cipher text generated by applying a subset key derivable by pseudo-random number generating processing based on a label held by a self apparatus, or a label calculable on the basis of a node-corresponding value NV as an intermediate label, and node-added variables salt held by the self apparatus, from the cipher texts;

a label calculating means for calculating a label corresponding to a special subset by executing computational processing based on the node-corresponding value NV and the node-added variables salt, if the subset key to be applied to the cipher text is underivable by the pseudo-random number generating processing based on the label held;

a means for generating the subset key by the pseudo-random number generating processing based on the label held or the label calculated; and

a decrypting means for executing processing for decrypting the cipher text by applying the generated subset key, and wherein the label calculating means

is configured to execute processing for calculating
node-corresponding values in a path from a self node to a root being a highest-rank node, among node-corresponding values $NV_1$ (1 = 2, 3, ⋯, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 36]

$$NV_{\lfloor l/2 \rfloor} = (NV_l^2 \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

Furthermore, a ninth aspect of the present invention is
a computer program for generating a hierarchical tree which is applied to processing for supplying cipher texts decryptable only by certain selected equipment except excluded (revoked) equipment, by applying a Broadcast Encryption scheme based on a hierarchical tree configuration, the computer program characterized by having:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
a node key calculating step of calculating node keys NK corresponding to the respective nodes constituting the one-way tree, by application of a function Hc using the node-corresponding values NV corresponding to the respective nodes as inputs; and
an information-for-supply determining step of selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

Furthermore, a tenth aspect of the present invention is
a computer program for executing processing for decrypting cipher texts encrypted with node keys respectively corresponding to nodes constituting a hierarchical tree, by applying a Broadcast Encryption scheme based on a hierarchical tree configuration, the computer program characterized by having:

a cipher text selecting step of selecting a cipher text to which a node key generable on the basis of node-corresponding values NV and node-added variables salt held by a self apparatus, from the cipher texts;
a node key calculating step of calculating a node key applied to the cipher text on the basis of the node-corresponding values NV and node-added variables salt held by the self apparatus; and
a decrypting step of executing processing for decrypting the cipher text on the basis of the calculated node key.

It should be noted that the computer program of the present invention is a computer program that can be supplied by a storage medium, a communication medium, e.g., a storage medium such as a CD or an FD, an MO, or a communication medium such as a network, in a computer-readable form to, e.g., a computer system that can execute various program codes. By supplying such a program in a computer-readable form, processing according to the program is realized on the computer system.

Further objects, features and advantages of the present invention will become apparent from a more detailed description that is based on later-described embodiments of the present invention and accompanying drawings. It should be noted that the system used in the present Description means a logical set configuration of a plurality of apparatus, and is not limited to one wherein apparatus each having its own configuration are grouped within the same enclosure.

According to the configuration of the embodiments of the present invention, in an information distribution configuration to which a hierarchical tree structure being one embodiment of Broadcast Encryption schemes is applied, it is configured to generate a Rabin Tree as a one-way tree in which node-corresponding values are set so as to correspond to respective nodes constituting the hierarchical tree, to set such that a node-corresponding value $NV_a$ is calculable by application of a function f based on a node-corresponding value $NV_b$ and a node-added variable $salt_b$ set so as to correspond to at least one lower-rank node, and such that node keys corresponding to the respective nodes are calculable by using the node-corresponding values NV corresponding to the respective nodes as inputs, and by applying a function Hc. As a result of the present configuration, unlike the conventional CS scheme in which each receiver needed to hold log N + 1 node keys securely, in the configuration to which the present invention is applied, the number of keys each receiver must hold can be reduced. Moreover, the node-added variables salt need not be held securely, and each of the node-added variables salt may have a small size of two bits on average, whereby the amount of information required for secure storage by the receiver is reduced. Furthermore, when compared to the schemes using RSA cryptosystem in which the number of keys held securely by a receiver is reduced to one similarly to the present invention, in the scheme of the present invention, it is configured such that the operation of a power residue, which is a heavy load as the amount of computation required of the receiver, involves only one squiring, which is about 1/17 the amount of computation in the schemes using RSA cryptosystem, and thus is an extremely small value. In this way, by applying the configuration of the present invention, the amount of information required for secure storage by the receiver can be reduced, and moreover, the amount of computation required for node key calculation by the receiver can be reduced, whereby an efficient cipher text distributing, decrypting processing configuration is implemented.

Furthermore, according to the configuration of the embodiments of the present invention, a Rabin Tree Configuration Example 2 in which a node-added variable setting is modified is used, whereby the amount of computation required for node key calculation by the receiver can be reduced, to implement efficient processing.

Brief Description of Drawings

Fig. 1 is a view for illustrating a binary tree hierarchical tree structure.
Fig. 2 is a view for illustrating a method by which the information obtainable only by selected information processing apparatus is transmitted in a binary tree hierarchical tree structure.
Fig. 3 is a view for illustrating a hierarchical tree structure which is applied in a Complete Subtree (CS) scheme and in which each of nodes bifurcates.
Fig. 4 is a view for illustrating node keys owned by a receiver assigned to a leaf, in the Complete Subtree (CS) scheme.
Fig. 5 is a view for illustrating a configuration for selectively supplying secret information only to nonrevoked receivers in the CS scheme.
Fig. 6 is a view for illustrating correspondence between different subtrees in a tree structure.
Fig. 7 is a view for illustrating a tree structure defined by using a forward permutation and an inverse permutation in RSA cryptosystem.
Fig. 8 is a flow diagram for illustrating processing for generating a Rabin Tree as a one-way permutation tree applied to the present invention, and a procedure for calculating node-corresponding values, node-added variables.
Fig. 9 is a view for illustrating a tree structure of the Rabin Tree as the one-way permutation tree applied to the present invention.
Fig. 10 is a view for illustrating data given to a receiver, in the CS scheme to which the Rabin Tree is applied.
Fig. 11 is a diagram showing a flow for setup processing.
Fig. 12 is a flow diagram for illustrating a procedure for information distributing processing.
Fig. 13 is a view for illustrating data given to a receiver, in the CS scheme to which the Rabin Tree is applied.
Fig. 14 is a flow diagram for illustrating a procedure for cipher text decrypting processing in a receiver.
Fig. 15 is a view for illustrating the configuration of an information processing apparatus for executing node key determining processing, cipher text generating processing in the CS scheme.
Fig. 16 is a view for illustrating the functional configuration of an information processing apparatus as a receiver for executing the cipher text decrypting processing in the CS scheme.
Fig. 17 is a flow diagram for illustrating Rabin Tree generating processing and a node-corresponding value, node-added variable calculating procedure, in a case where a Rabin Tree Configuration Example 2 is applied.
Fig. 18 is a view for illustrating data given to a receiver, in the CS scheme to which the Rabin Tree Configuration Example 2 is applied.
Fig 19 is a diagram showing a node key calculating technique in a case where the Rabin Tree Configuration Example 2 is applied.
Fig. 20 is a flow diagram for illustrating a procedure for cipher text decrypting processing in a receiver.
Fig. 21 is a view for illustrating the definition of a subset in a Subset Difference (SD) scheme.
Fig. 22 is a view for illustrating the setting and configuration of labels in the Subset Difference (SD) scheme.
Fig. 23 is a view for illustrating the setting of subsets in the Subset Difference (SD) scheme.
Fig. 24 is a view showing labels held by each receiver where the total number of receivers is set to N=16 in the SD scheme.
Fig. 25 is a view for illustrating details of the labels held by each receiver in the SD scheme.
Fig. 26 is a view for illustrating details of the labels held by each receiver in the SD scheme.

Fig. 27 is a view for illustrating details of subsets to which a specific receiver u4 belongs, in the SD scheme.
Fig. 28 is a view for illustrating a configuration example of a first special subset $SS_{P(y),S(y)}$ in which nodes bear a parent-child relationship.
Fig. 29 is a view showing correspondence between the labels corresponding to special subsets and values $NV_1$, $NV_2$, ···, $NV_{2N-1}$ used as 2N-1 intermediate labels calculated by an algorithm illustrated with reference to Fig. 8.
Fig. 30 is a view for illustrating processing for determining labels for supply to a receiver.
Fig. 31 is a diagram showing a flow for setup processing.
Fig. 32 is a view showing subsets used to revoke receivers u5, u11, u12 in a hierarchical tree configuration in which the total number of receivers is set to N=16.
Fig. 33 is a view showing a flow for illustrating a procedure for information distributing processing.
Fig. 34 is a view for illustrating a specific example of subset key deriving processing.
Fig. 35 is a view showing a flowchart for illustrating a procedure for cipher text receiving through subset key acquiring, cipher text decrypting processing executed by a receiver.
Fig. 36 is a flow diagram for illustrating a detailed procedure for subset key deriving processing in a receiver, in the SD scheme to which a Rabin Tree is applied.
Fig. 37 is a view for illustrating the configuration of an information processing apparatus for executing label determining processing, cipher text generating processing in the SD scheme.
Fig. 38 is a view for illustrating the functional configuration of an information processing apparatus as a receiver for executing cipher text decrypting processing in the SD scheme.
Fig. 39 is a view showing a block diagram as a hardware configuration example of the information processing apparatus.
Fig. 40 is a view for illustrating processing for determining labels for supply to a receiver in a case where the Rabin Tree Configuration Example 2 is applied.
Fig. 41 is a view for illustrating a Basic LSD scheme.
Fig. 42 is a view for illustrating the number of labels held by each receiver in the Basic LSD scheme.
Fig. 43 is a view for illustrating a configuration for reducing the number of labels in the Basic LSD scheme using a Rabin Tree.

## Best Modes for Carrying Out the Invention

Below, details of an information processing method, a decryption processing method, an information processing apparatus, and a computer program are described with reference to the drawings.
It should be noted that the description is given according to the following items.

1. Outline of Complete Subtree (CS) scheme
2. Configuration of CS scheme to which Rabin Tree Configuration Example 1 is applied
3. Cipher text distributing, decrypting processing in which Rabin Tree Configuration Example 1 is applied to CS scheme
4. Discussion on reduction of amount of computation in cipher text distribution configuration, in CS scheme to which Rabin Tree Configuration Example 1 is applied
5. Configuration of CS scheme to which Rabin Tree Configuration Example 2 is applied
6. Cipher text distributing, decrypting processing in which Rabin Tree Configuration Example 2 is applied
7. On effects of application of Rabin Tree Configuration Example 2
8. Outline of Subset Difference (SD) scheme
9. Configuration for reducing the number of labels in SD scheme
10. Configuration for reducing the number of labels in SD scheme using Rabin Tree Configuration Example 1
11. Cipher text distributing, decrypting processing in which Rabin Tree Configuration Example 1 is applied to SD scheme
12. Cipher text distributing, decrypting processing according to SD scheme using Rabin Tree Configuration Example 2
13. On effects of application of Rabin Tree Configuration Example 2
14. Outline of Basic Layered Subset Difference (Basic LSD) scheme
15. Configuration for reducing the number of labels in Basic LSD scheme using Rabin Tree
16. Outline of General Layered Subset Difference (General LSD) scheme
17. Configuration for reducing the number of labels in General LSD scheme using Rabin Tree
18. Discussion on reduction of amount of computation in cipher text distribution configuration, in SD scheme to which Rabin Tree is applied

[1. Outline of Complete Subtree (CS) scheme]

First, a Complete Subtree (CS) scheme is outlined, which is known as a Broadcast Encryption scheme to which an existing hierarchical tree structure is applied.

It should be noted that in the following description, it is supposed that the total number N of information processing apparatus (receivers) set so as to correspond to leaves of a hierarchical tree structure equals 2 to an nth power, for ease of description. Moreover, throughout the following description, the base of a function log is 2 in all instances. It should be noted that equipment assigned to the leaves of the hierarchical tree structure may include various information processing apparatus, such as, e.g., PCs, portable terminals, as long as they are capable of executing below-described secret information decrypting processing. These apparatus are herein described generically as receivers. Furthermore, cipher text supplying processing in the present invention is construed to include not only processing for distributing cipher texts by means of communication via a communication network, but also processing for supplying cipher texts stored in a recording medium.

(1.1)Outline of Complete Subtree (CS) scheme

Referring to Fig. 3 et. Seq., the Complete Subtree (CS) scheme is outlined.

In the Complete Subtree (CS) scheme described in the aforementioned Non-Patent Document 1 [Advances in Cryptography - Crypto 2001, Lecture Notes in Computer Science 2139, Springer, 2001, pp.41-62 (D. Naor, M. Naor and J. Lotspiech, "Revocation and Tracing Schemes for Stateless Receivers")], as shown in Fig. 3, a binary tree in which each of nodes bifurcates is used as a hierarchical tree structure. Fig. 3 shows an example in which the number of receivers is N=16. The receivers are assigned to leaves of this binary tree (ul-u16 in Fig. 3), respectively. Moreover, any node of the tree is used to represent "a set consisting of receivers assigned to leaves of a subtree rooted at the node". Anode i 201 in Fig. 3 represents a set consisting of the receivers u5 and u6.

And a key (node key) is defined for each of the component nodes of the binary tree shown in Fig. 3. Each receiver is given node keys assigned to nodes in a path from a leaf to which it is assigned to the root (apex) of the tree, and the receiver holds these node keys in a secure memory. The defining of the tree, the defining of the node keys, the assigning of the receivers, the distributing of the node keys and the like are performed by a reliable management center called "Trusted Center (TC)".

As shown in Fig. 4, sixteen receivers ul-ul6 are assigned to a hierarchical tree, and there are thirty-one nodes 1-31. The receiver u4 is given five node keys assigned to the nodes 1, 2, 4, 9, 19. Namely, if the total number of receivers is N, each receiver holds log N + 1 node keys.

Referring to Fig. 5, how secret information (e.g., a content key for decrypting encrypted content) is transmitted to nonrevoked receivers using this setting is described. It is supposed here that the management center (TC) is a sender of the secret information. Now, let receivers u2, u11, u12 be revoked receivers. Namely, by excluding (revoking) the receivers u2, u11, u12 as unauthorizedequipment, only receivers except these are enabled to receive the information securely, i.e., to perform decryption based on cipher texts broadcast.

When transmitting the secret information, the management center (TC) generates and broadcasts a set of cipher texts without using, as encryption keys, node keys respectively assigned to nodes in paths from leaves to which the revoked receivers u2, u11, u12 are assigned to the root of the tree.

The node keys respectively assigned to the leaves or nodes in the paths from the leaves to which the revoked receivers u2, u11, u12 are assigned to the root of the tree are keys owned by these revoked receivers, and thus, if these keys are used, the revoked equipment can obtain the secret information. Therefore, the sender generates and broadcasts a set of cipher texts without using these keys.

When the nodes in the paths from the leaves to which the revoked receivers u2, u11, u12 are assigned to the root of the tree, as well as the paths are excluded from the tree, one or more subtrees remain, which are, e.g., a subtree rooted at a node 5, and a subtree rooted at a node 12.

The sender of the secret information transmits a set of cipher texts into which the secret information is encrypted using node keys assigned to the nodes nearest to the roots of these subtrees, i.e., nodes 5, 7, 9, 12, 16 in an example shown in Fig. 5. For example, supposing that the secret information for transmission is a content key Kc to be applied to decryption of encrypted content, and that the node keys assigned to the nodes 5, 7, 9, 12, 16 are NK5, NK7, NK9, NK12, NK16, the sender of the secret information generates a set of cipher texts

E (NK5, Kc), E (NK7, Kc), E (NK9, Kc), E (NK12, Kc), E (NK16, Kc),

and distributes the generated cipher text set via a network or supplies a recording medium storing it. It should be noted that E(A, B) means data B encrypted with a key A.

The above-mentioned set of cipher texts is not decryptable only by the revoked receivers u2, u11, u12, but is decryptable by the other receivers. By generating and transmitting such a cipher text set, efficient and secure transmission of secret information can be implemented.

Each receiver can obtain the secret information by decrypting one of the transmitted cipher texts which it can decrypt, i.e., one cipher text encrypted using the node key corresponding to a node in a path from a leaf to which it is assigned to the root. In the above example, holding the node key for the node 9, the receiver u4 can decrypt the cipher text E(NK9, Kc) encrypted using this key. In this way, there must always be one cipher text a nonrevoked receiver can decrypt in the cipher text set.

(1.2) Reduction of the number of keys in CS scheme

Observing the above-mentioned CS scheme, one can understand the following. Namely, in the CS scheme, a leaf of a subtree rooted at a certain node is also a leaf of a subtree rooted at an ancestor of the node.

For example, as shown in Fig. 6, u5, u6 as leaves of a subtree P 235 rooted at a node j 232 are also leaves of a subtree A 230 rooted at an ancestor node of the node j 232, e.g., a node i.

Thus, a receiver holding the node key for a certain node also holds the node key for an ancestor node thereof. For example, as shown in Fig. 6, when a node i 231 is an ancestor of the node j 232, the receivers (u5, u6) having the node keys for the node j 232 always hold the node key for the node i 231. However, the reverse is not necessarily true.

Having such a property, if a node key is set for each of nodes of a tree such that a node key for a node which is an ancestor thereof can be derived thereform by calculation, the number of keys, i.e., the storage capacity of a receiver can be reduced, compared to having a plurality of node keys independently.

However, it should be required that a node key for a higher-rank node cannot derive a node key for a descendant nodethereof. The reason therefor is as follows. For example, in Fig. 6, when the node i 231 is the ancestor of the node j 232, the receivers (u5, u6) having the node key for the node j 232 always have the node key for the node i 231, but receivers (u1-u8) having the node key for the node i 231 do not necessarily have the node key for the node j 232. In the configuration of Fig. 6, of the receivers u1-u8, only the receivers u5, u6 are permitted to have the node key for the node j 232, and the other receivers u1-u4, u7, u8 are nodes not permitted to have the node key for the node j 232. And these latter receivers should not be permitted to derive the node key for the node j 232 from the node key for the node i 231.

To implement this, in the present invention, a tree structure is configured, in which node keys for its respective nodes are set using a function, i.e., a one-way function, $y = F(x)$, such that y can be easily calculated from x, but the reverse calculation is difficult.

(1.3) Reduction of the number of keys using RSA cryptosystem

A scheme using the RSA cryptosystem is described, which is proposed by Nojima et al. and Ogata et al. in the aforementioned Non-Patent Document 2 "Transactions of Symposium on Cryptography and Information Security 2004, pp. 189-194" and Non-Patent Document 3 "Transactions of Symposium on Cryptography and Information Security 2004, pp. 195-199". In this scheme, as shown in Fig. 7, a forward permutation (f) and an inverse permutation ($f^{-1}$) are used. Supposing that the modulus is M, the encryption exponent is e, and the decryption exponent is d in the RSA cryptosystem, it is the forward permutation (f) that is executable if the modulus M and the encryption exponent e are known, whereas it is the inverse permutation ($f^{-1}$) that its execution is difficult if the decryption exponent d is not known.

Details of the RSA cryptosystem are introduced in, e.g., A.J. Menezes, P.C. van Oorschot and S.A Vanstone, "Handbook of Applied Cryptography," CRC Press, 1996.

In the scheme using the RSA cryptosystem, only the management center secretly holds the decryption exponent d, with the modulus M and the encryption exponent e being published to receivers. The management center determines a secret value: $K \in Z^*_M$

and sets this as a key $NK_1$ for the root. Namely,

$NK_1 = K$

It should be noted that $K \in Z^*_M$ means that K is an element of a group $Z^*_M$ (i.e., a group consisting of those having inverse elements, among elements of a group $Z_M = \{0, 1, \cdots, M-1\}$).

A key for any node 1 except the root is calculated from a key for its parent node

[Math 37]

$$NK_{\lfloor l/2 \rfloor}$$

where $\lfloor i \rfloor$ represents the largest integer of i et seq.,
and its node number 1, according to the following expression

[Math 38]

$$NK_{l} = (NK_{\lfloor l/2 \rfloor} \oplus H(l))^{d} \bmod M$$

where ⊕ represents the Exclusive-Or operation.
In the above expression, H is a public function for mapping an input of any size into an element of $Z_M$.

In this way, it is only the management center knowing the decryption exponent d that can obtain a key for a child node from a key for a parent node. On the other hand, a receiver knowing the key $NK_1$ for the child node can derive, using the modulus M, the encryption exponent e, and the public function H, according to the following expression

[Math 39]

$$NK_{\lfloor l/2 \rfloor} = (NK_{l}^{e} \oplus H(l)) \bmod M$$

the key (node key) for the parent node

[Math 40]

$$NK_{\lfloor l/2 \rfloor}$$

[2. Configuration of CS scheme to which Rabin Tree Configuration Example 1 is applied]

(2.1) Example method for configuring Rabin Tree

In the present invention, a Rabin Tree is used which is set as a one-way tree. It should be noted that "Rabin Tree" is not a general term, but is a term used for explaining the present invention. A Rabin Tree is configured according to the following procedure, after numbering nodes of a complete binary tree having N leaves such that the root is 1, and the subsequent nodes are 2, 3, ···, 2N-1, from the left to higher-rank ones in a breadth first order.

Similarly to RSA cryptosystem, a product M of two large primes are determined by the management center and published. The management center determines
a secret value: $Y \in Z^*_M$
and sets this as the value $NV_1$ corresponding to the root (node 1). It should be noted that $Y \in Z^*_M$ means that Y is an element of a group $Z^*_M$.

A value $NV_l$ corresponding to any node 1 (1 = 2, 3, ···, 2N-1) excluding the root is obtained using a node number 1 and a node-corresponding value corresponding to its parent node

[Math 41]

$$NV_{\lfloor l/2 \rfloor}$$

First, $tmp_1$ is defined by the following expression.

[Math 42]

$$temp_l = (NV_{\lfloor l/2 \rfloor} - H(l \,\|\, salt_l)) \bmod M$$

Such a minimum positive integer $salt_1$ is to be found, that the value $tmp_1$ defined by the above expression is a quadratic residue modulo M where M is the above-mentioned product M of two large primes. The value $salt_l$ is a node-added variable set so as to correspond to a node 1.

It should be noted that in the above expression, $1\|$ $salt_1$ indicates that 1 is connected to $salt_1$, and H is a public function for mapping an input of any size into the group $Z_M$ determined by the aforementioned product M of two large primes. Examples of such a function include SHA-1 as a compression function that produces a 160-bit output with respect to an input of any length. Namely, using SHA-1, an |M|-bit value can be used as H ($1\|salt_1$) , where the |M|-bit value is obtained by adding as many as |M|- 160 zero bits to an output obtained from $1\|salt_1$ being inputted to SHA-1. It should be noted that SHA-1 as a compression function is introduced in, e.g., A.J. Menezes, P.C. van Oorschot and S.A Vanstone, "Handbook of Applied Cryptography," CRC Press, 1996.

Here, a certain number K being a quadratic residue modulo M means that a number a such that

$$a^2 \equiv K \pmod M$$

exists, and this is expressed as

$$K \in QR_M$$

Whether the certain number K satisfies $K \in QR_M$ can be judged from whether or not the number K satisfies both of the following expressions, if prime factors p, q of M are known.

[Math 43]

$$\left(\frac{a}{p}\right) = a^{(p-1)/2} \equiv 1 \pmod p$$

and

$$\left(\frac{a}{q}\right) = a^{(q-1)/2} \equiv 1 \pmod q$$

It should be noted that in the above expressions, (a/p) is the Legendre symbol.

Namely, if and only if the above expressions are satisfied, K satisfies $K \in QR_M$.

Furthermore, one who knows the prime factors p, q of M can also find a number a such that

$$a^2 \equiv K \pmod{M}$$

A method therefor is disclosed, e.g., at page 114 of "Modern Cryptography" by Tatsuaki Okamoto and Hirosuke Yamamoto (published by Sangyo Tosho).
When $K \in QR_M$,
there are four numbers a such that

$$a^2 \equiv K \pmod{M}$$

Conversely,
when $K \in QR_M$,
to find a number a such that

$$a^2 \equiv K \pmod{M}$$

is difficult for one who does not know the prime factors p, q of M. It has been proven that this is actually equivalent to factoring M.
In the above way, when a minimum positive integer such that

$$tmp_1 \in QR_M$$

has been found,

$$tmp_1^{1/2} \bmod M$$

is calculated, and any of four numbers obtained as its solutions is set as a value corresponding to a node 1, i.e., a node-corresponding value $NV_1$ for a node 1.
In this way, from the value $NV_1$ for the root, node-corresponding values $NV_2$, $NV_3$ for its child nodes 2, 3 are determined, and by repeating this up to $NV_{2N-1}$, values (node-corresponding values) for all the nodes are determined.
The node-corresponding value $NV_1$ (1 = 2, 3, ..., 2N-1) for any node 1 thus determined satisfies a relationship of the following expression.

[Math 44]

$$NV_{\lfloor l/2 \rfloor} = (NV_l^{\,2} + H(l \,\|\, salt_l)) \bmod M$$

··· (Eq. 1)

Namely, it is easy to find, from a node-corresponding value $NV_1$ and a node-added variable $salt_1$ for a certain node, a node-corresponding value for its parent node

[Math 45]

$$NV_{\lfloor l/2 \rfloor}$$

since the function H and the modulus M are published.

An example algorithm for configuring a Rabin Tree being a binary tree having N leaves is shown below. Inputs to this algorithm are

[INPUT]

Number of leaves constituting the binary tree: N, and

Size of the modulus M: |M|

and outputs from this algorithm are

[OUTPUT]

M,

Mapping function for outputting elements of $Z_M$: H,

2N-1 |M|-bit numbers (node-corresponding values): $NV_1$, $NV_2$, ···, $NV_{2N-1}$, and

2N-2 numbers (node-added variables): $salt_2$, $salt_3$, ···, $salt_{2N-1}$.

The algorithm for obtaining the above [OUTPUT] on the basis of the above [INPUT] is as follows.

1. Determine two large primes each having a size |M|/2, and calculate their product M.
2. Determine a function H for mapping an input of any size into an element of $Z_M$.
3. Randomly select a value $NV_1 \in Z^*_M$ as the node-corresponding value for the root node.
4. Perform the following processing a, b, while incrementing 1 by 1 from 2 to 2N-1 using 1 as a counter.

    a. Find a minimum positive number $salt_1$ such that the following expression

    [Math 46]

    $$temp_l = (NV_{\lfloor l/2 \rfloor} - H(l \| salt_l)) \bmod M$$

    ··· (Eq. 2)

    is a quadratic residue modulo M.

    b. Find $tmp_1^{1/2}$ mod M, and determine any of its four solutions as a node-corresponding value $NV_1$ for a node 1.

5. Output M, H, 2N-1 |M|-bit numbers (node-corresponding values): $NV_1$, $NV_2$, ···, $NV_{2N-1}$, and 2N-2 numbers (node-added variables): $salt_2$, $salt_3$, ···, $salt_{2N-1}$ and end.

The output value $NV_1$ is the node-corresponding value for any node 1 in the Rabin Tree. It should be noted that the above output covers the node-corresponding values for all the nodes since the total number of nodes is 2N-1 in the complete binary tree having N leaves.

A flow for the above algorithm is shown in Fig. 8. Each of steps in the flow is described. In step S101, the number N of leaves constituting the binary tree, as well as the size |M| of the modulus M are inputted.

In step S102, the modulus M and the mapping function H are determined, after which the value $NV_1 \in Z^*_M$ as the node-correspondingvalue for the root node is randomly selected. In step S103, 1 = 2 is set as an initial value for the value 1.

In step S104, a minimum positive integer $salt_l$ such that $tmp_l$ defined in the above Eq. 2 is a quadratic residue modulo M is found. And this is set as a node-added variable.

In step S105, $tmp_1^{1/2}$ mod M is found, and any of four solutions found is determined as a node-corresponding value $NV_l$ for a node 1.

In step S106, whether or not 1 = 2N-1 is determined. If 1 ≠ 2N-1, the processing proceeds to step S107, in which 1 is incremented by 1, after which steps S104, S105 are executed. Until it is determined in step S107 that 1 = 2N-1, steps S104, S105 are repeatedly executed. When it is determined in step S107 that 1 = 2N-1, in step S108, the modulus M, the mapping function H, 2N-1 |M|-bit numbers (node-corresponding values) : $NV_1$, $NV_2$, ···, $NV_{2N-1}$, and 2N-2 numbers (node-added variables) : $salt_2$, $salt_3$, ···, $salt_{2N-1}$ are outputted, and then the processing ends.

A configuration of the Rabin Tree in which the node-corresponding values $NV_1$ for its nodes are determined by the above processing is shown in Fig. 9. In the tree constituted by the node-corresponding values $NV_l$ determined by the above processing, it is easy to find, from a node-corresponding value $NV_1$ and a node-added variable $salt_1$ for a

certain node, a node-corresponding value for its parent node

[Math 47]

$$NV_{\lfloor l/2 \rfloor}$$

but the reverse operation is difficult.

In Fig. 9, each of arrow-headed straight lines shown along functions f indicates that the node-corresponding value for a higher-rank node can be obtained by applying a function f, with the node-corresponding value $NV_1$ for a lower-rank node as an input. The function f is a computation using a forward computation (squaring modulo M) F. The node-corresponding value f or the parent node of a node (child node) can be calculated according to the aforementioned Eq. 1, from the node-corresponding value $NV_1$ and $salt_1$, by applying its published function H and modulus M.

In Fig. 9, each of arrow-headed straight lines shown along functions $f^{-1}$ indicates that the node-corresponding value for a lower-rank node can be obtained by applying a function $f^{-1}$, with the node-corresponding value for a higher-rank node as an input. The function $f^{-1}$ is a computation using an inverse computation (finding square roots modulo M) $F^{-1}$. In order to obtain, from the node-corresponding value for a higher-rank node, the node-corresponding value for a child node thereof, secret information p, q (primes of M) should be known, and thus only the management center can perform this calculation.

In this way, a one-way tree is generated, in which as to one way from a lower rank to a higher rank, a node-corresponding value NV can be calculated according to the aforementioned Eq. 1 by applying the published function H and modulus M, but in which as to the opposite way, computation is difficult. A one-way tree constituted by node-corresponding values $NV_1$ having such a setting is called "Rabin Tree". This is because Rabin cryptography uses operation of squaring modulo M for encryption (forward computation) and operation of finding square roots modulo M for decryption (inverse computation).

Namely, node-corresponding values set for nodes in a Rabin Tree as a one-way tree has the following setting. Namely, its configuration is such that the node-corresponding value for a higher-rank node is calculated by encrypting processing (forward computation) to which a Rabin cryptography based on the node-corresponding value for a lower-rank node is applied, and such that the node-corresponding value for a lower-rank node is calculated by decrypting processing (inverse computation) to which a Rabin cryptography based on the node-corresponding value for the higher-rank node is applied. Under this configuration, calculation of node-corresponding values from lower-rank to higher-rank nodes can be performed according to the aforementioned Eq. 1 by applying the published function H and modulus M, whereas calculation of node-corresponding values from higher-rank to lower-rank nodes is difficult by using only the published function H and modulus M, and thus can be performed only by the management center who knows the secret information p, q (primes of M). It should be noted that Rabin cryptography is described in detail, e.g., at pp . 292-294 in the above-mentioned literature: A.J. Menezes, P.C. van Oorschot and S.A Vanstone, "Handbook of Applied Cryptography," CRC Press, 1996. By the way, addition "+" in (Eq. 1) and subtraction "-" in (Eq. 2) may be substituted for by Exclusive-Or "XOR".

(2.2) Configuration for reducing the number of keys using Rabin Tree

In the Rabin Tree configured as mentioned above, node keys $NK_1$ are determined for respective nodes in the tree, similarly to those in the CS scheme. It is configured such that these node key values are calculable using the node-corresponding values $NV_l$ determined above. Namely, a node key $NK_l$ for any node 1 is set to

$$NK_1 = Hc\ (NV_1)$$

It should be noted that a function Hc is a hash function for mapping a value of a size |M| into a random number of a size C. For example, in a case of C being 160 bits, the above-mentioned function SHA-1 is available as a function for outputting a 160-bit value with respect to an input of any size. Moreover, in a case of C being 128 bits, MD5 or the like is known as a function for outputting a 128-bit value with respect to an input of any size. Thus, these functions are applicable. It should be noted that MD5 is also described in detail in the above-mentioned literature: A.J. Menezes, P.C. van Oorschot and S.A Vanstone, "Handbook of Applied Cryptography," CRC Press, 1996.

Since node keys are used for encrypting information, such as session keys, to be transmitted to receivers, this size C may be determined to be equal to the size of a key for an encryption algorithm used therefor. For example, if AES (Advanced Encryption Standard FIPS197) with a 128-bit key is used as an encryption algorithm, C may be set to 128 bits. Moreover, if the size of a key used for an encryption function is |M|, $NK_1 = NV_1$ may alternatively be used. Namely, non-transformation function may otherwise be used as Hc.

Furthermore, the N leaves of this Rabin Tree are numbered $leaf_1$, $leaf_2$, ···, $leaf_N$ (i.e., the node number of the leftmost $leaf_1$ being N, the node number of $leaf_i$ is N-1+i), and a receiver ui is assigned to a $leaf_i$. The receiver ui is given a value $NV_{N-1+i}$ corresponding to the leaf (node) $leaf_i$ and log N node-added variables $salt_1$ corresponding to nodes in a path from the $leaf_i$ to the root. When receivers are assigned as shown in Fig. 10, a receiver u4 assigned to a node 19 being a leaf, is given a node-corresponding value $NV_{19}$ and node-added variables $salt_{19}$, $salt_9$, $salt_4$, $salt_2$ for nodes in a path from the node 19 to the root.

By such a setting, the receiver u4 can obtain values for all the nodes in the path from the node 19 to the root, i.e., their node-corresponding values NV, using the given node-corresponding value $NV_{19}$, and $salt_{19}$, $salt_9$, $salt_4$, $salt_2$ being node-added variables for the nodes in the path from the node 19 to the root. Moreover, the node keys $NK_1$ for the respective nodes can be calculated from the node-corresponding values $NV_1$, as mentioned above, i.e., from

$$NK_1 = Hc\ (NV_1)$$

In the receiver assignment configuration shown in Fig. 10, the receiver u4 assigned to the node 19 being a leaf, is given the node-corresponding value $NV_{19}$ and $salt_{19}$, $salt_9$, $salt_4$, $salt_2$ being the node-added variables for the nodes in the path from the node 19 to the root. Calculation of the node-corresponding values NV and calculation of the node keys NK for higher-rank nodes (node number = 1, 2, 4, 9) in the receiver u4 is executed according to the following procedure.

(a1) Calculate a node-corresponding value $NV_9$ for the higher-rank node 9 from the node-corresponding value $NV_{19}$ for the node 19

$$NV_9 = ((NV_{19})^2 + H(19 \| salt_{19}))\ mod\ M$$

(a2) Calculate a node-corresponding value $NV_4$ for the higher-rank node 4 from the node-corresponding value $NV_9$ for the node 9

$$NV_4 = ((NV_9)^2 + H(9 \| salt_9))\ mod\ M$$

(a3) Calculate a node-corresponding value $NV_2$ for the higher-rank node 2 from the node-corresponding value $NV_4$ for the node 4

$$NV_2 = ((NV_4)^2 + H(4 \| salt_4))\ mod\ M$$

(a4) Calculate a node-corresponding value $NV_1$ for the higher-rank node 1 from the node-corresponding value $NV_2$ for the node 2

$$NV_1 = ((NV_2)^2 + H(2 \| salt_2))\ mod\ M$$

From a computation based on the above expressions, the node-corresponding values for the higher-rank nodes are calculated from the node-corresponding values for the lower-rank nodes.

Furthermore, the node keys can be calculated from the node-corresponding values for the nodes, by the following expressions, respectively.

(b1) Calculate a node key $NK_{19}$ for the node 19 from the node-corresponding value $NV_{19}$ for the node 19

$$NK_{19} = Hc\ (NV_{19})$$

(b2) Calculate a node key $NK_9$ for the node 9 from the node-corresponding value $NV_9$ for the node 9

$$NK_9 = Hc\ (NV_9)$$

(b3) Calculate a node key $NK_4$ for the node 4 from the node-corresponding value $NV_4$ for the node 4

$$NK_4 = Hc\ (NV_4)$$

(b4) Calculate a node key $NK_2$ for the node 2 from the node-corresponding value $NV_2$ for the node 2

$$NK_2 = Hc\ (NV_2)$$

(b5) Calculate a node key $NK_1$ for the node 1 from the node-corresponding value $NV_1$ for the node 1

$$NK_1 = Hc\ (NV_1)$$

By the way, the receiver u4 must keep the node-corresponding value $NV_{19}$ in custody secretly, but does not have to keep the node-added variables salt secretly. Thus, it may alternatively be configured such that all the receivers hold all the $salt_1$.

Here, let the size of each node-added variable salt be considered. A certain number is a quadratic residue modulo M with a probability of about 1/4. Hence, when four values are tested as $salt_1$, it is expected that at least one $salt_1$ such that $tmp_1$ is a quadratic residue exists on average, from which it is further expected that a size required to represent a node-added variable $salt_1$ is two bits.

On the other hand, there may be a case where none of the four values is such that $tmp_l$ is a quadratic residue. For example, when L values are tested as node-added variables $salt_1$, $tmp_l$ is not a quadratic residue (or is a quadratic non-residue) with probability $3^L/4^L$. Hence, if L=4, none of $tmp_l$ is a quadratic residue with probability $3^4/4^4 \fallingdotseq 42.2\%$. However, supposing that an 8-bit value as a node-added variable $salt_l$ is considered, and that as many as 256 numbers are tested, none of $tmp_1$ is a quadratic residue with probability $3^{256}/4^{256} \fallingdotseq 1.0 \times 10^{-32}$ , which is an extremely small value. Hence, even if a large value, such as $2^{30} \fallingdotseq 10^9$ or $2^{40} \fallingdotseq 10^{12}$, is considered as the number N of leaves, the probability with which a node-added variable $salt_1$ such that $tmp_1$ is a quadratic residue at any node is not found is so small as to be negligible.

[3. Cipher text distributing, decrypting processing in which Rabin Tree Configuration Example 1 is applied to CS scheme]

Next, cipher text distributing processing and cipher text decrypting processing are described, which uses the Rabin Tree being a tree structure in which the node-corresponding value $NV_1$ corresponding to any node 1 of a binary tree is set by the above-mentioned processing. It should be noted that the description is given for each of the following processing

(3-1) Setup processing
(3-2) Information distributing processing
(3-3) Information receiving and decrypting processing

(3-1) Setup processing

Setup processing is performed only once at the time of start-up of a system. The subsequent information distributing, and receiving and decrypting processing is executed every time information to be transmitted occurs. The latter processing is executed, e.g., every time information recording media, such as DVDs, having new content stored therein are to be delivered, or every time new information is to be distributed via a network. It should be noted that the setup processing may be executed by the management center (TC) independent of an entity that actually executes cipher text distribution, or may be executed by the entity that actually executes cipher text distribution. Here, an example is described, in which the management center (TC) executes the setup processing.

a. Step 1

The management center (TC) defines a tree being a binary tree having N leaves. For each of nodes in the tree, its corresponding number is set as k (k = 1, 2, ···, 2N-1)]. However, the root being the highest-rank node is set to 1, and the subsequent nodes are sequentially numbered in the breadth first order. Namely, node-corresponding numbers 1-31 such as shown in Fig. 10 are set. As a result of this processing, the node numbers 1 to 2N-1 are set to the respective nodes in the binary tree. Furthermore, receivers um (m = 1, 2, ···, N) are assigned to the leaves of the tree, respectively.

b. Step 2

First, the management center (TC) determines the size |M| of the modulus M.

Next, by using the number N of leaves of the tree structure, the size |M| of the modulus M as inputs, the management center (TC) produces a Rabin Tree which is a binary tree having N leaves according to the algorithm described with reference to the flow of Fig. 8. First, the management center determines the modulus M, and the mapping function H for mapping a value of any size into a random element of $Z_M$. Then, it randomly selects a value $NV_1 \in Z^*_M$ as the node-corresponding value for the root node, after which it determines 2N-1 |M|-bit numbers (node-corresponding values): $NV_1$, $NV_2$, ···, $NV_{2N-1}$, and 2N-2 numbers (node-added variables) : $salt_2$, $salt_3$, ···, $salt_{2N-1}$. Since salt are not secret, the management center (TC) may publish these values. Moreover, the management center (TC) publishes the modulus M and the mapping function H. Furthermore, it determines and publishes the function Hc for mapping the value for the size |M| into a random number of a size C.

The Rabin Tree configuration, in which the node-corresponding values $NV_1$ for the nodes are defined by the above processing, is set as the configuration of Fig. 9 described earlier. In the tree constituted by the node-corresponding values $NV_1$ determined by the above processing, it is easy to obtain, from the values $NV_1$ and $salt_1$ for a certain node, the node-corresponding value for its parent node, but the reverse operation is difficult.

Furthermore, the management center (TC) calculates the node key $NK_1$ for a node 1 of the tree from the node-corresponding value $NV_1$, i.e., from

$$NK_1 = Hc\ (NV_1)$$

c. Step 3

The management center (TC) gives node keys to receivers um (m = 1, 2, ···, N) set so as to correspond to the leaves as the terminal nodes in the tree, on the basis of the following rule. The receivers are assigned to the leaves of the tree, i.e., node numbers 16-31, as shown in Fig. 10. In an example shown in Fig. 10, there are sixteen receivers u1-u16 assigned to the node numbers 16-31.

It should be noted that a path from a leaf to which a receiver um is assigned to the root is denoted by a path m [path-m]. Moreover, a set of nodes on a path m [path-m] is denoted by path nodes m [PathNodes-m].

In the example of Fig. 10,

$$\text{PathNodes-1} = \{1, 2, 4, 8, 16\}$$

$$\text{PathNodes-4} = \{1, 2, 4, 9, 19\}$$

$$PathNodes\text{-}11 = \{1, 3, 6, 13, 26\}$$

A line connecting the nodes 1, 2, 4, 8, 16 shown in Fig. 10 is a path 1 [path-1] for the receiver u1, and is constituted by PathNodes-1 = {1, 2, 4, 8, 16}. A path 4 [path-4] for a receiver u4 is a line connecting the nodes 1, 2, 4, 9, 19 shown in Fig. 10, and is constituted by PathNodes-4 = {1, 2, 4, 9, 19}.

The management center (TC) gives each receiver um

(a) a node-corresponding value $NV_1$ for a leaf node (leaf) to which the receiver um is assigned, and
(b) salt values corresponding to path nodes excluding the root in a path for the receiver um.

In the configuration shown in Fig. 10, the receiver u4 assigned to the node 19 being a leaf is given a node-corresponding value $NV_{19}$ for the node 19, and $salt_{19}$, $salt_9$, $salt_4$, $salt_2$ being node-added variables for the nodes in a path from the node 19 to the root.

Namely, a receiver ui is given a node-corresponding value $NV_{N-1+i}$ corresponding to a leaf (node) $leaf_i$, and log N node-added variables $salt_l$ in a path from $leaf_i$ to the root.

Each receiver keeps the node-corresponding value secret to prevent its leakage. It should be noted that the node-added variables salt may be public, and thus are not required to be held secretly.

A flow for the above-mentioned setup processing is shown in Fig. 11. Each of steps in the flow of Fig. 11 is described.

First, in step S201, the management center (TC) defines a binary tree having N leaves. The root being the highest-rank node in the binary tree is set to 1, and the subsequent nodes are sequentially numbered in the breadth first order. Namely, node-corresponding numbers 1-31 such as shown in Figs. 9, 10 are set. Furthermore, receivers um (m=1, 2, ···, N) are assigned to the leaves of the tree, respectively.

Next, in step S202, the management center (TC) determines the size |M| of the modulus M. Furthermore, by using the number N of leaves of the tree structure, the size |M| of the modulus M as inputs, the management center (TC) determines the modulus M, and the mapping function H for mapping a value of any size into a random element of $Z_M$, and then produces a Rabin Tree being a binary tree having N leaves, according to the algorithm described with reference to the flow of Fig. 8. First, the management center (TC) randomly selects a value $NV_1 \in Z^*_M$ as the node-corresponding value for the root node, after which it determines node-corresponding values corresponding to the nodes 1 to 2N-1, i.e., 2N-1 |M|-bit numbers (node-corresponding values) : $NV_1$, $NV_2$, ···, $NV_{2N-1}$, and 2N-2 numbers (node-added variables) corresponding to the nodes 2 to 2N-2: $salt_2$, $salt_3$, ···, $salt_{2N-1}$. Furthermore, it publishes the modulus M and the mapping function H. Furthermore, it determines and publishes the function Hc for mapping the value for the size |M| into a random number of a size C.

Furthermore, the management center (TC) calculates the node key $NK_1$ for any node 1 of the tree from the node-corresponding value $NV_1$, i.e., from

$$NK_1 = Hc\ (NV_1)$$

In step S203, the management center (TC) gives each of receivers um (m = 1, 2, ..., N) set so as to correspond to the leaves as the terminal nodes of the tree

(a) a node-corresponding value $NV_1$ for the leaf node (leaf) to which the receiver um is assigned, and
(b) salt values corresponding to path nodes excluding the root in a path for the receiver um.

(3-2) Information distributing processing

Information distribution, i.e., transmission of secret information is implemented by the management center (TC) broadcasting one or more cipher texts. Each of the cipher texts is obtained by encrypting the secret information using one of node keys. A method for selecting node keys used for the encryption is similar to that in the Complete Subtree scheme (CS scheme).

In the example shown in Fig. 5, five cipher texts are to be transmitted. In the example shown in Fig. 5, receivers u2, u11, u12 are revoked receivers. Namely, by excluding (revoking) the receivers u2, u11, u12 as unauthorized equipment, only the receivers except these are enabled to receive the information securely, i.e., to perform decryption based on the cipher texts broadcast.

When the information is to be transmitted, a set of cipher texts is generated and broadcast without using, as encryption keys, node keys respectively assigned to nodes in paths from leaves to which the revoked receivers u2, u11, u12 are assigned to the root of the tree. When the nodes in the paths from the leaves to which the revoked receivers u2, 11, u12 are assigned to the root of the tree, as well as the paths are excluded from the tree, one or more subtrees remain, which are, e.g., a subtree rooted at a node 5, and a subtree rooted at a node 12.

The sender of the secret information transmits a set of cipher texts into which the secret information is encrypted using node keys assigned to the nodes nearest to the roots of these subtrees, i.e., nodes 5, 7, 9, 12, 16 in the example shown in Fig. 5. For example, supposing that the secret information for transmission is a content key Kc to be applied to decryption of encrypted content, and that the node keys assigned to the nodes 5, 7, 9, 12, 16 are $NK_5$, $NK_7$, $NK_9$, $NK_{12}$, $NK_{16}$, the sender of the secret information generates a set of five cipher texts

E ($NK_5$, Kc), E ($NK_7$, Kc), E ($NK_9$, Kc), E ($NK_{12}$, Kc), E ($NK_{16}$, Kc),

and distributes the generated cipher text set via a network or supplies a recording medium storing it. It should be noted that E(A, B) means data B encrypted with a key A.

The above-mentioned cipher text set is not decryptable only by the revoked receivers u2, u11, u12, but is decryptable by the other receivers. By generating and transmitting such a cipher text set, efficient and secure transmission of secret information can be implemented.

Techniques for finding the node keys used for this encryption include a technique similar to the Complete Subtree scheme (CS scheme) , or a method to which a representation tree is applied.

A procedure for information distributing processing is described with reference to a flow of Fig. 12. In step S301, the management center (TC) selects receivers it will revoke (exclude) from information distribution.

Furthermore, in step S302, the management center (TC) selects node keys applied to generation of cipher texts, i.e., to encryption of secret information for transmission, and in step S303, generates used node key specifying information as index data for selecting a decryptable cipher text on the part of a receiver who receives the cipher texts. This information includes tag information or a representation code representing which node keys have been selected.

In step S304, the management center (TC) encrypts the secret information for transmission with the selected node keys, and in step S305, transmits the encrypted information together with the node key specifying information using a broadcasting channel, or distributes the information as stored in an information recording medium. It should be noted that the above processing is not necessarily performed in this order.

It should be noted that the node keys used for the encryption may be those produced by the management center (TC) during the setup phase and kept in custody, or may be those derived later from the node-corresponding values $NV_1$ for the leaves and salt values for the nodes kept in custody by the management center (TC) during the setup phase.

It should be noted that if there is no revoked receiver, the node key $NK_1$ for the root is used for encrypting the secret information. In this case, all the receivers are enabled to decrypt transmitted information.

(3-3) Information receiving and decrypting processing

Next, processing for receiving and decrypting the above-mentioned cipher texts is described. The above-mentioned cipher texts are supplied to the receivers by broadcasting. Alternatively, they are supplied to the receivers as stored in an information recording medium. These cipher texts can be received by all the receivers, irrespective of the receivers being revoked or not. However, since the revoked receivers cannot obtain node keys to be applied to decryption of the cipher texts, the revoked receivers cannot decrypt the received information.

Each of nonrevoked receivers select a cipher text it can decrypt from the received cipher text set. Among the node keys used for encrypting the cipher texts contained in the received cipher text set, there is a node key derivable from the node-corresponding value $NV_1$ and salt which the nonrevoked receiver directly holds itself.

The nonrevoked receiver derives a node-corresponding value $NV_k$ corresponding to a node key $NK_k$ used for the encryption from the node-corresponding value $NV_l$ and salt, and further derives the node key $NK_k$ from the node-corresponding value $NV_k$, to decrypt the cipher text using the derived node key, whereby it can obtain the secret information. In order for the receiver to find a cipher text for decryption, the receiver may only have to use the aforementioned node key specifying information.

In the cipher text extracting processing, a receiver um extracts node numbers k of the node keys used for the encryption, and find one coinciding with a node number included in path nodes m [PathNodes-m] corresponding to the receiver um.

Since the receiver um holds the node-corresponding value $NV_1$ for the leaf 1 to which it is assigned, the receiver obtains, from the node-added variable $salt_1$ which it holds similarly to the $NV_1$, a node-corresponding value for the parent node of the node 1

[Math 48]

$$NV_{\lfloor l/2 \rfloor}$$

using the following expression

[Math 49]

$$NV_{\lfloor l/2 \rfloor} = (NV_l^{\,2} + H(l \,\|\, salt_l)) \bmod M$$

and further, by repeating this, it derives the node-corresponding value $NV_k$ for any node k in a path from its own node 1 to the root. And from the node-corresponding value $NV_k$, the node key $NK_k$ for the node k is derived from

$$NK_k = Hc\ (NV_k)$$

The derived node key is applied to decrypt the cipher text.

A specific example is described with reference to Fig. 13. Supposing now that a receiver u4 (node number = 19) is not revoked, let processing for the receiver u4 be considered. When the receiver u4 (node number = 19) is not revoked, any node key used for encryption necessarily coincides with a node number included in path nodes 4 [PathNodes-4] = {1, 2, 4, 9, 19} corresponding to the receiver u4.

Supposing that secret information is [Kc] , a cipher text set containing any of E ($NK_1$, Kc) , E ($NK_2$, Kc) , E ($NK_4$, Kc) , E ($NK_9$, Kc), E($NK_{19}$, Kc) is distributed via a network or supplied in a recording medium storing it. It should be noted that E (A, B) means data A encrypted with a key B. The receiver u4 detects one, from the cipher text set received, which coincides with a node number included in the path nodes 4 [PathNodes-4] = {1, 2, 4, 9, 19} corresponding to the receiver u4.

After having determined that which one of the node keys $NK_1$, $NK_2$, $NK_4$, $NK_9$, $NK_{19}$ is applied to the encryption of the cipher text, the receiver u4, in order to calculate the determined node key, calculates the node key from the node-corresponding values for the higher-rank nodes by applying the node-corresponding value $NV_4$ and node-added variables $salt_2$, $salt_4$, $salt_9$, $salt_{19}$ it holds, and further calculates the node keys from the node-corresponding values calculated. The technique used therefor is, as mentioned above, as follows.

$$NV_9 = ((NV_{19})^2 + H\ (19 \| salt_{19}))\ mod\ M$$

$$NV_4 = ((NV_9)^2 + H\ (4 \| salt_4))\ mod\ M$$

$$NV_2 = ((NV_4)^2 + H\ (2 \| salt_2))\ mod\ M$$

$$NV_1 = ((NV_2)^2 + H\ (1 \| salt_1))\ mod\ M$$

From a computation based on the above expressions, the node-corresponding values for the higher-rank nodes are calculated from the node-corresponding values for the lower-rank nodes.

Furthermore, the node keys are calculated from the node-corresponding values for the respective nodes, by using the following expressions.

$$NK_{19} = Hc\ (NV_{19})$$

$$NK_9 = Hc\ (NV_9)$$

$$NK_4 = Hc\ (NV_4)$$

$$NK_2 = Hc\ (NV_2)$$

$$NK_1 = Hc\ (NV_1)$$

The receiver u4 decrypts the cipher text contained in the cipher text set by applying any of the node keys $NK_{19}$, $NK_9$, $NK_4$, $NK_2$, $NK_1$ included in the path nodes 4 [PathNodes-4] ={1,2,4,9, 19}, whereby it can obtain the secret information [Kc].

Processing by the receiver um is described with reference to a flow of Fig. 14. First, in step S401, the receiver um receives the cipher text set. These cipher texts are received via a network or via an information recording medium.

In step S402, from the node keys used for encrypting the cipher texts contained in a received cipher text set, the receiver extracts a cipher text which is encrypted with a node key calculable on the basis of a node-corresponding value derivable from the node-corresponding value NV, node-added variables salt which it directly holds. This is equivalent to processing by which the receiver um detects a node key coinciding with a node number included in the path nodes m [PathNodes-m] corresponding to this receiver um, from the cipher text set. Note here that the receiver cannot determine an encryption for decryption means that the receiver is revoked.

Furthermore, in step S403, the receiver um calculates the node keys used for the encryption by applying the node-corresponding value NV and node-added variables salt which it holds. This calculation is executed as processing in which the higher-rank node-corresponding values are calculated from the aforementioned (Eq. 1), and further a necessary node key $NK_k$ is obtained on the basis of the calculated node-corresponding values, according to the following expression.

$$NK_k = Hc\ (NV_k)$$

Once the node keys used for the encryption have been calculated, the processing proceeds to step S404, in which the receiver decrypts the cipher text by applying the calculated node key, whereby it obtains the secret information.

It should be noted that the secret information may include, e.g., a content key for decrypting encrypted content in a television broadcasting system. In this case, the receiver receives the encrypted content, decrypts it by using the content key for output. It should be noted that the above processing is not necessarily performed in this order.

Referring next to Figs. 15, 16, the functional configurations are described of an information processing apparatus for supplying cipher texts, and of an information processing apparatus for receiving and decrypting the cipher texts. The information processing apparatus for supplying cipher texts executes processing for determining node keys applied to generating cipher texts and processing for generating the cipher texts. A receiver for executing cipher text decrypting processing executes node key generating processing and cipher text decrypting processing using a generated node key.

Referring first to Fig. 15, the configuration of the information processing apparatus for supplying cipher texts is described. An information processing apparatus 410 has a one-way tree (Rabin Tree) generating means 411, a node key generating means 412, an information-for-supply (a node-corresponding value NV, node-added variables salt) determining means 413, a cipher text generating means 414, a cipher text supplying means 415.

The information processing apparatus 410 is an information processing apparatus for executing processing for supplying cipher texts decryptable only by certain selected equipment except excluded (revoked) equipment, by applying a Broadcast Encryption scheme based on a hierarchical tree configuration. The one-way tree (Rabin Tree) generating means 411 generates a Rabin Tree as a one-way tree through which node-corresponding values NV corresponding to nodes constituting the hierarchical tree can be derived (see Eq. 1) by applying a node-corresponding value NV and a node-added variable salt for at least one lower-rank node.

The node key generating means 412 calculates node keys NK for the nodes by

$$NK = Hc\ (NV)$$

on the basis of the node-corresponding values, respectively.

The information-for-supply determining means 413 supplies a receiver corresponding to a terminal node of the hierarchical tree with the node-corresponding value $NV_1$ for the receiver-corresponding node, and node-added variables salt for nodes included in a path from the receiver-corresponding node to the root as the highest-rank node.

The cipher text generating means 414 selectively applies the node keys NK generated by the node key generating means 412 on the basis of the node-corresponding values respectively set so as to correspond to the nodes of the Rabin Tree generated by the one-way tree (Rabin Tree) generating means 411, to execute encrypting processing to generate the cipher texts. The cipher text supplying means 415 supplies the cipher texts thus generated, via a network or in a medium storing them.

Referring next to Fig. 16, the functional configuration of the information processing apparatus as a receiver for executing the cipher text decrypting processing is described.

An information processing apparatus 420 as a receiver for executing the cipher text decrypting processing has a cipher text selecting means 421, a node key calculating means 422, a decrypting means 423, a memory 424.

The cipher text selecting means 412 executes processing for selecting, from the cipher texts for processing, a cipher text generated by applying a higher-rank node key calculable from the node-corresponding value $NV_l$ and node-added variables salt which it holds in its memory 424. Specifically, as mentioned above, it first calculates the higher-rank node-corresponding values by using the aforementioned (Eq. 1) while applying the node-corresponding value NV and node-added variables salt which it holds, and then executes processing for obtaining a necessary node key $NK_k$ on the basis of the calculated node-corresponding values, according to the following expression.

$$NK_k = Hc\ (NV_k)$$

The decrypting means 423 executes the cipher text decrypting processing on the basis of a calculated node key calculated in the node key calculating means 422.

[4. Discussion on reduction of amount of computation in cipher text distribution configuration in CS scheme to which Rabin Tree Configuration Example 1 is applied]

Against the aforementioned CS scheme key reduction method based on RSA cryptosystem, the above-mentioned CS scheme cipher text distribution configuration according to the present invention using a Rabin Tree has an advantage that the amount of computation required of a receiver is small. This is described.

In the key reduction method according to the CS scheme using RSA cryptosystem, in order for a receiver to derive, from a key $NK_1$ for a certain node, a key for its parent node

[Math 50]

$$NK_{\lfloor l/2 \rfloor}$$

the receiver performs calculation using the following expression.

[Math 51]

$$NK_{\lfloor l/2 \rfloor} = (NK_l^{\,e} \oplus H(l)) \bmod M$$

Here, an XOR and hashing with the function H demand only an extremely small amount of computation, compared to the operation of finding a power residue. Thus, the core of the above calculation is the operation of finding a power residue

$$NK_1^{e} \bmod M$$

In a system using RSA cryptosystem, in order to reduce the amount of computation, it is desired to use an encryption exponent e as small as possible, with its Hamming weight as small as possible. However, it has been pointed out that a small e, such as e = 3, would not provide enough security, and thus, use of a value

$$e = 2^{16} + 1$$

is widely recommended.

When the value $2^{16} + 1$ is used as the encryption exponent e, several methods are available to find an eth power of a certain number x. If a "repeated square-and-multiply algorithm" (see p. 614 of the aforementioned literature: A.J. Menezes, P.C. van Oorschot and S.A Vanstone, "Handbook of Applied Cryptography," CRC Press, 1996 ) is used, sixteen squarings and one multiplication are required. Here, squaring is a particular case of multiplication, and thus, by using this, the amount of computation can be reduced, compared to multiplication. In view of this, the amount of the above computation becomes bulkier than seventeen squarings. Moreover, even if 3 is used as the encryption exponent e in a scheme using RSA cryptosystem, a computation $NK_1^e$ mod M involves one multiplication and one squaring, which hence reduces the amount of computation in the present invention to a value smaller than 1/2.

By contrast, in the cipher text distribution configuration based on the CS scheme to which the above-mentioned Rabin Tree according to the present invention is applied, a receiver performs a computation based on the aforementioned (Eq. 1) on the basis of the node-corresponding value $NV_1$ and node-added variables salt which it owns, i.e.,

[Math 52]

$$NV_{\lfloor l/2 \rfloor} = (NV_l^{\,2} + H(l \,\|\, salt_l)) \bmod M$$

The core of this computation is also the operation of finding a power residue. However, in the above expression, the operation of finding a power residue is

$$NV_1^{2} \bmod M$$

which involves only one squaring. Hence, the present invention can reduce the amount of computation to about 1/17 compared to the scheme using RSA cryptosystem.

In this way, in the conventional CS scheme, each receiver needed to hold log N + 1 node keys safely, whereas in the cipher text distribution configuration based on the CS scheme to which the which it owns Rabin Tree according to the present invention is applied, the number of keys each receiver must hold safely can be reduced to one (the node-corresponding value NV for a leaf node). Unlike node keys in the CS scheme, in the configuration of the present invention, node-added variables salt are not required to be held safely. Moreover, since the node keys in the CS scheme are used as encryption keys, each of themhas sizes ranging from tens to hundreds of bits, whereas each of the node-added variables has a small size of 2 bits on average.

Furthermore, similarly to the present invention, when compared to a system using RSA cryptosystem in which the number of keys each receiver should hold safely is reduced to one, the present scheme has a feature that the operation of finding a power residue, which is a heavy load on the receiver in terms of the amount of computation, involves only one squaring, and this reduces the amount of computation to such an extremely small value as about 1/17 compared to the scheme using RSA cryptosystem.

In this way, by applying the configuration of the present invention, the amount of information required for secure storage by each receiver can be reduced, and the amount of computation required for node key calculation by the receiver can also be reduced, whereby an efficient cipher text distributing, decrypting processing configuration can be implemented.

[5. Configuration of CS scheme to which Rabin Tree Configuration Example 2 is applied]

Next, a processing example is described, to which a Rabin Tree, which is different from that in the above-mentioned Rabin Tree Configuration Example 1, is applied. It should be noted that "Rabin Tree" is not, as mentioned above, a general term, but is a term used for explaining the present invention. A Rabin Tree, which is different from that in the above-mentioned Rabin Tree Configuration Example 1, is configured according to the following procedure, after numbering nodes of a complete binary tree having N leaves such that the root is 1 and the subsequent nodes are 2, 3, ···, 2N-1, from the left to higher-rank ones in the breadth first order.

Similarly to RSA cryptosystem, the management center determines and publishes a product M of two large primes. The management center determines

a secret value: $Y \in Z^*_M$

and sets this as the value $NV_1$ corresponding to the root (node 1). It should be noted that $Y \in Z^*_M$ means that Y is an element of a group $Z^*_M$.

A value $NV_1$ corresponding to any node 1 (1 = 2, 3, ···, 2N-1) excluding the root is obtained using its node number 1, and a node-corresponding value corresponding to its parent node

[Math 53]

$$NV_{\lfloor l/2 \rfloor}$$

First, $tmp_1$ is defined by the following expression.

[Math 54]

$$temp_l = (NV_{\lfloor l/2 \rfloor} \oplus H^{salt_l}(l)) \bmod M$$

A minimum positive integer $salt_1$ such that the value $tmp_1$ defined by the above expression is a quadratic residue modulo M is to be found. The value $salt_l$ is a node-added variable set so as to correspond to any node 1.

It should be noted that in the above expression, H is a public function for mapping an input of any size into the size |M| of the aforementioned product M of two large primes, and $H^{salt1}$ (1) represents a value obtained by applying the function H as many as $salt_1$ times to 1. For example, if

Saltl = 3

then

$$H^{saltl}(l) = H(H(H(l)))$$

It should be noted that examples of the mapping function H include SHA-1 as a compression function that produces a 160-bit output with respect to an input of any length. Namely, using SHA-1, an |M|-bit value can be used as H (l), where the |M|-bit value is obtained by adding as many as |M|-160 zero bits to an output obtained from 1 being inputted to SHA-1. It should be noted that SHA-1 as a compression function is introduced in, e.g., A.J. Menezes, P.C. van Oorschot and S.A Vanstone, "Handbook of Applied Cryptography," CRC Press, 1996.

In the above way, when a minimum positive integer such that

$$tmp_1 \in QR_M$$

has been found,

$$tmp_1^{1/2} \bmod M$$

is calculated, and any of four numbers obtained as its solutions is set as a value corresponding to a node 1, i.e., a node-corresponding value $NV_1$ for a node 1.

In this way, from the value $NV_1$ for the root, the management center determines node-corresponding values $NV_2$, $NV_3$ for its child nodes 2, 3, and by repeating this, determines values (node-corresponding values) for all the nodes up to $NV_{2N-1}$.

The node-corresponding values $NV_1$ (1 = 2, 3, ..., 2N-1) for nodes 1 thus determined satisfy a relationship of the following expression

[Math 55]

$$NV_{\lfloor l/2 \rfloor} = (NV_l^{\,2} \oplus H^{salt_l}(l)) \bmod M$$

··· (Eq. 3)

Namely, it is easy to find, from a node-corresponding value $NV_1$ and a node-added variable $salt_1$ for a certain node, a node-corresponding value for its parent node

[Math 56]

$$NV_{\lfloor l/2 \rfloor}$$

since the function H and the modulus M are published.

An example algorithm for configuring a Rabin Tree being a binary tree having N leaves is shown below. Inputs to this algorithm are

[INPUT]

Number of leaves constituting the binary tree: N,

Size of the modulus M: |M|, and

Mapping function H for outputting |M|-bit numbers and outputs from this algorithm is

[OUTPUT]

2N-1 |M|-bit numbers (node-corresponding values): $NV_1$, $NV_2$, ···, $NV_{2N-1}$, and

2N-2 numbers (node-added variables): $salt_2$, $salt_3$, ···, $salt_{2N-1}$.

The algorithm for obtaining the above [OUTPUT] on the basis of the above [INPUT] is as follows.

1. Determine two large primes each having a size |M|/2, and calculate their product M.
2. Randomly select a value $NV_1 \in Z^*_M$ as the node-corresponding value for the root node.
3. Perform the following processing a, b, while incrementing 1 by 1 from 2 to 2N-1 using 1 as a counter.

   a. Find a minimum positive number $salt_l$ such that the following expression

[Math 57]

$$temp_l = (NV_{\lfloor l/2 \rfloor} \oplus H^{salt_l}(l)) \bmod M$$

··· (Eq. 4)

is a quadratic residue modulo M.

b. Find $tmp_1^{1/2}$ mod M, and determine any of its four solutions as a node-corresponding value $NV_1$ for a node 1.

4. Output 2N-1 |M|-bit numbers (node-corresponding values): $NV_1$, $NV_2$, ···, $NV_{2N-1}$, and 2N-2 numbers (node-added variables): $salt_2$, $salt_3$, ..., $salt_{2N-1}$, and end.

The output value $NV_1$ is the node-corresponding value for the node 1 in the Rabin Tree. It should be noted that the above output covers the node-corresponding values for all the nodes since the total number of nodes is 2N-1 in the complete binary tree having N leaves.

A flow for the above algorithm is shown in Fig. 17. Each of steps in the flow is described. In step S421, the number N of leaves constituting the binary tree, the size |M| of the modulus M, and the mapping function H for outputting |M|-bit numbers are inputted.

In step S422, the value $NV_1 \in Z^*_M$ as the node-corresponding value for the root node is randomly selected. In step S423, 1 = 2 is set as an initial value for the value 1.

In step S424, a minimum positive integer $salt_1$ such that $tmp_1$ defined in the above Eq. 4 is a quadratic residue modulo M is found. And this is set as a node-added variable.
In step S425, $tmp_1^{1/2}$ mod M is found, and any of its four solutions found is determined as the node-corresponding value $NV_1$ for the node 1.

In step S426, whether or not 1 = 2N-1 is determined. If 1 ≠ 2N-1, the processing proceeds to step S427, in which 1 is incremented by 1, after which steps S424, S425 are executed. Until it is determined in step S427 that 1 = 2N-1, steps S424, S425 are repeatedly executed. When it is determined in step S427 that 1 = 2N-1, in step S428, 2N-1 |M|-bit numbers (node-corresponding values): $NV_1$, $NV_2$, ···, $NV_{2N-1}$, and 2N-2 numbers (node-added variables) : $salt_2$, $salt_3$, ···, $salt_{2N-1}$ are outputted, and then the processing ends.

The Rabin Tree, in which the node-corresponding values $NV_1$ for its nodes are determined by the above processing, has a configuration similar to that of Fig. 9 described earlier. In the tree constituted by the node-corresponding values $NV_1$ determined by the above processing, it is easy to find, from a node-corresponding value $NV_1$ and a node-added variable $salt_1$ for a certain node, a node-corresponding value for its parent node

[Math 58]

$$NV_{\lfloor l/2 \rfloor}$$

but the reverse operation is difficult.

It should be noted that as described earlier, each of arrow-headed straight lines shown along functions f in Fig. 9 indicates that the node-corresponding value for a higher-rank node can be obtained by applying a function f, with the node-corresponding value $NV_1$ for a lower-rank node as an input. The function f is a computation using a forward computation (squaring modulo M) F. The node-corresponding value for the parent node of a certain node (child node) can be calculated according to the aforementioned Eq. 3, from the node-corresponding value $NV_1$ and $salt_1$, by applying the published function H and modulus M.

In Fig. 9, each of arrow-headed straight lines shown along functions $f^{-1}$ indicates that the node-corresponding value for a lower-rank node can be obtained by applying a function $f^{-1}$, with the node-corresponding value for a higher-rank node as an input. The function $f^{-1}$ is a computation using an inverse computation (finding square roots modulo M) $F^{-1}$. In order to obtain, from the node-corresponding value for a higher-rank node, the node-corresponding value for a child node thereof, secret information p, q (primes of M) should be known, and thus only the management center can perform this calculation.

In this way, a one-way tree is generated, in which as to one way from a lower rank to a higher rank, a node-corresponding value NV can be calculated according to the aforementioned Eq. 3 by applying the published function H and modulus M, but in which as to the opposite way, the computation is difficult. A one-way tree constituted by node-corresponding values $NV_1$ having such a setting is called "Rabin Tree". This is because Rabin cryptography uses operations of squaring modulo M for encryption (forward computation) and operations of finding square roots modulo M for decryption (inverse computation).

Namely, node-corresponding values set for nodes in a Rabin Tree as a one-way tree has the following setting. Namely, its configuration is such that the node-corresponding value for a higher-rank node is calculated by encrypting processing (forward computation) to which a Rabin cryptography based on the node-corresponding value for a lower-rank node is applied, and such that the node-corresponding value for the lower-rank node is calculated by decrypting processing (inverse computation) to which a Rabin cryptography based on the node-corresponding value for the higher-rank node is applied. Under this configuration, calculation of node-corresponding values from lower-rank to higher-rank nodes can be performed according to the aforementioned Eq. 3 by applying the published function H and modulus M, whereas calculation of node-corresponding values from higher-rank to lower-rank nodes is difficult by using only the published function H and modulus M, and thus can be performed only by the management center who knows the secret information p, q (primes of M). It should be noted that Rabin cryptography is described in detail, e.g., at pp . 292-294 in the above-mentioned literature: A.J. Menezes, P.C. van Oorschot and S.A Vanstone, "Handbook of Applied Cryptography," CRC Press, 1996.

[6. Cipher text distributing, decrypting processing in which Rabin Tree Configuration Example 2 is applied]

Next, using the Rabin Tree being of a tree structure in which node-corresponding values $NV_1$ corresponding to respective nodes 1 of a binary tree are set by the above-mentioned processing, cipher text distributing processing and cipher text decrypting processing are described. Their processing phases are

(6-1) Setup processing
(6-2) Information distributing processing
(6-3)Information receiving and decrypting processing Since the phases "(6-1) Setup processing" and "(6-2) Information distributing processing" involve processing substantially similar to that for the setup and the information distribution described earlier in the item [3. Cipher text distributing, decrypting processing in which Rabin Tree Configuration Example 1 is applied to CS scheme], they are described in a simpler way.

(6-1) Setup processing

Setup processing is basically similar to that described in the item "(3-1) Setup processing" in the aforementioned [3. Cipher text distributing, decrypting processing in which Rabin Tree Configuration Example 1 is applied to CS scheme] , except processing for setting the Rabin Tree configuration described in the above-mentioned [5. Configuration of CS scheme to which Rabin Tree Configuration Example 2 is applied]. This setup is performed only once at the time of start-up of a system. The subsequent information distributing, and receiving and decrypting processing is executed every time information to be transmitted occurs. The latter processing is executed, e.g., every time information recording media, such as DVDs, having new content stored therein are to be delivered, or every time new information is to be distributed via a network.

A Rabin Tree Configuration Example 2 is set according to the processing sequence described earlier with reference to the flow of Fig. 17. As a result, the Rabin Tree as a one-way tree shown in Fig. 9 is set. Its nodes are set so as to correspond to |M|-bit numbers (node-corresponding values): $NV_1$, $NV_2$, ···, $NV_{2N-1}$, and (node-added variables) : $salt_2$, $salt_3$, ···, $salt_{2N-1}$, respectively. This setting makes it easy to obtain, from the values $NV_l$ and $salt_l$ for a certain node, the node-corresponding value for its parent node, but the reverse operation is difficult.

The management center (TC) gives each receiver um

(a) a node-corresponding value $NV_1$ for a leaf node (leaf) to which the receiver um is assigned, and
(b) salt values corresponding to path nodes excluding the root, in a path for the receiver um.

Each receiver keeps the node-corresponding value secret so as to prevent its leakage. It should be noted that the node-added variables salt may be published, and thus are not required to be held secretly.

This setup processing sequence is similar to that described earlier with reference to Fig. 11. However, the Rabin Tree to be set should have the Rabin Tree configuration described in the aforementioned [5. Configuration of CS scheme to which Rabin Tree Configuration Example 2 is applied]

(6-2) Information distributing processing

Information distribution, i.e., transmission of secret information is implemented by the management center (TC) broadcasting one or more cipher texts. This processing is similar to that described in the item "(3-2) Information distributing processing" of [3. Cipher text distributing, decrypting processing in which Rabin Tree Configuration Example 1 is applied to CS scheme]. Each of the cipher texts is obtained by encrypting the secret information using one of node keys. A method for selecting node keys used for the encryption is similar to that in the Complete Subtree scheme (CS scheme).
In the example shown in Fig. 5, five cipher texts are to be transmitted. In the example shown in Fig. 5, receivers u2, u11, u12 are revoked receivers. Namely, by excluding (revoking) the receivers u2, u11, u12 as unauthorizedequipment, only the receivers except these are enabled to receive the information securely, i.e., to perform decryption based on the cipher texts broadcast.
When the information is to be transmitted, a set of cipher texts is generated and broadcast without using, as encryption keys, node keys respectively assigned to nodes in paths from leaves to which the revoked receivers u2, u11, u12 are assigned to the root of the tree. When the nodes in the paths from the leaves to which the revoked receivers u2, 11, u12 are assigned to the root of the tree, as well as the paths are excluded from the tree, one or more subtrees remain, which are, e.g., a subtree rooted at a node 5, and a subtree rooted at a node 12.
The sender of the secret information transmits a set of cipher texts into which the secret information is encrypted using node keys assigned to the nodes nearest to the roots of these subtrees, i.e., nodes 5, 7, 9, 12, 16 in the example shown in Fig. 5. For example, supposing that the secret information for transmission is a content key Kc to be applied to decryption of encrypted content, and that the node keys assigned to the nodes 5, 7, 9, 12, 16 are $NK_5$, $NK_7$, $NK_9$, $NK_{12}$, $NK_{16}$, the sender of the secret information generates a set of five cipher texts
$E(NK_5, K_C)$, $E(NK_7, Kc)$ , $E(NK_9, Kc)$ , $E(NK_{12}, Kc)$ , $E(NK_{16}, Kc)$,
and distributes the generated cipher text set via a network or supplies a recording medium storing it. It should be noted that E(A, B) means data B encrypted with a key A.
The above-mentioned cipher text set is not decryptable only by the revoked receivers u2, u11, u12, but is decryptable by the other receivers. By generating and transmitting such a cipher text set, efficient and secure transmission of secret information can be implemented.
Techniques for finding the node keys used for this encryption include a technique similar to the Complete Subtree scheme (CS scheme), or a method to which a representation tree isapplied. An information distributing processing procedure is similar to that described earlier with reference to the flow of Fig. 12.

(6-3) Information receiving and decrypting processing

Next, processing for receiving and decrypting the above-mentioned cipher texts is described. The above-mentioned cipher texts are supplied to the receivers by broadcasting. Alternatively, they are supplied to the receivers as stored in an information recording medium. These cipher texts can be received by all the receivers, irrespective of the receivers being revoked or not. However, since the revoked receivers cannot obtain node keys to be applied to decryption of the cipher texts, the revoked receivers cannot decrypt the received information.
Each of nonrevoked receivers select a cipher text it can decrypt from the received cipher text set. Among the node keys used for encrypting the cipher texts contained in the received cipher text set, there is a node key derivable from the node-corresponding value $NV_1$ and salt which the nonrevoked receiver directly holds itself.
The nonrevoked receiver derives a node-corresponding value $NV_k$ corresponding to a node key $NK_k$ used for the encryption from the node-corresponding value $NV_l$ and salt, and further derives the node key $NK_k$ from the node-corresponding value $NV_k$, to decrypt the cipher text using the derived node key, whereby it can obtain the secret information. In order for the receiver to find the cipher text for decryption, the receiver may only have to use the aforementioned node key specifying information.
In the cipher text extracting processing, a receiver um extracts node numbers k of the node keys used for the encryption, and find one coinciding with a node number included in path nodes m [PathNodes-m] corresponding to the receiver um.
Since the receiver um holds the node-corresponding value $NV_1$ for the leaf 1 to which it is assigned, the receiver obtains, from the node-added variable $salt_1$ which it holds similarly to the $NV_1$, a node-corresponding value for the parent node of the node 1

[Math 59]

$$NV_{\lfloor l/2 \rfloor}$$

using the following expression

[Math 60]

$$NV_{\lfloor l/2 \rfloor} = (NV_l^{\,2} \oplus H^{salt_l}(l)) \bmod M$$

and further, by repeating this, it derives the node-corresponding value $NV_k$ for any node k in a path from its own node 1 to the root. And from the node-corresponding value $NV_k$, the node key $NK_k$ for the node k is derived from

$$NK_k = Hc\ (NV_k)$$

The derived node key is applied to decrypt the cipher text.

A specific example is described with reference to Fig. 18. Supposing now that a receiver u4 (node number = 19) is not revoked, let processing for the receiver u4 be considered. When the receiver u4 (node number = 19) is not revoked, any node key used for encryption necessarily coincides with a node number included in path nodes 4 [PathNodes-4] = {1, 2, 4, 9, 19} corresponding to the receiver u4.

Supposing that secret information is [Kc] , a cipher text set containing any of $E(NK_1, Kc)$ , $E(NK_2, Kc)$ , $E(NK_4, Kc)$ , $E(NK_9, Kc)$, $E(NK_{19}, Kc)$ is distributed via a network or supplied in a recording medium storing it. It should be noted that E (A, B) means data A encrypted with a key B. The receiver u4 detects one, from the cipher text set received, which coincides with a node number included in the path nodes 4 [PathNodes-4] = {1, 2, 4, 9, 19} corresponding to the receiver u4.

After having determined that which one of the node keys $NK_1$, $NK_2$, $NK_4$, $NK_9$, $NK_{19}$ is applied to the encryption of the cipher text, the receiver u4, in order to calculate the determined node key, calculates the node key from the node-corresponding values for the higher-rank nodes by applying the node-corresponding value $NV_4$ and node-added variables $salt_2$, $salt_4$, $salt_9$, $salt_{19}$ it holds, and further calculates the node keys from the node-corresponding values calculated. The technique used therefor is shown in Fig. 19. Namely, processing according to the following procedure is performed.

$$NV_9 = ((NV_{19})^2 \text{ XOR } H^{salt19}\ (19)) \bmod M$$

$$NV_4 = ((NV_9)^2 \text{ XOR } H^{salt9}\ (9)) \bmod M$$

$$NV_2 = ((NV_4)^2 \text{ XOR } H^{salt4}\ (4)) \bmod M$$

$$NV_1 = ((NV_2)^2 \text{ XOR } H^{salt2}\ (2)) \bmod M$$

From a computation based on the above expressions, the node-corresponding values for the higher-rank nodes are calculated from the node-corresponding values for the lower-rank nodes.

Furthermore, the node keys are calculated from the node-corresponding values for the respective nodes, by using the following expressions

$$NK_{19} = Hc\ (NV_{19})$$

$$NK_9 = Hc\ (NV_9)$$

$$NK_4 = Hc\ (NV_4)$$

$$NK_2 = Hc\ (NV_2)$$

$$NK_1 = Hc\ (NV_1)$$

The receiver u4 decrypts the cipher text contained in the cipher text set by applying any of the node keys $NK_{19}$, $NK_9$, $NK_4$, $NK_2$, $NK_1$ included in the path nodes 4 [PathNodes-4] = {1, 2, 4, 9, 19}, whereby it can obtain the secret information [Kc].

Processing by the receiver um is described with reference to a flow of Fig. 20. First, in step S451, the receiver um receives a cipher text set. These cipher texts are received via a network or via an information recording medium.

In step S452, from the node keys used for encrypting the cipher texts contained in the cipher text set received, the receiver extracts a cipher text which is encrypted with a node key calculable on the basis of a node-corresponding value derivable from the node-corresponding value NV, node-added variables salt which it directly holds. This is equivalent to processing by which the receiver um detects a node key coinciding with a node number included in the path nodes m [PathNodes-m] corresponding to this receiver um, from the cipher text set. Note here that the receiver cannot determine an encryption for decryption means that the receiver is revoked.

Furthermore, in step S453, the receiver um calculates the node keys used for the encryption by applying the node-corresponding value NV and node-added variables salt which it holds. This calculation is executed as processing in which the higher-rank node-corresponding values are calculated from the aforementioned (Eq. 3), and further a necessary node key $NK_k$ is obtained on the basis of the calculated node-corresponding values, according to the following expression

$$NK_k = Hc\ (NV_k)$$

Once the node keys used for the encryption have been calculated, the processing proceeds to step S454, in which the receiver decrypts the cipher text by applying the calculated node key, whereby it obtains the secret information.

It should be noted that the secret information may include, e.g., a content key for decrypting encrypted content in a television broadcasting system. In this case, the receiver receives the encrypted content, decrypts it by using the content key for output. It should be noted that the above processing is not necessarily performed in this order. As to the functional configuration of an information processing apparatus for supplying cipher texts and an information processing apparatus for receiving and decrypting the cipher texts, configurations similar to those described earlier with reference to Figs. 15, 16 may be applicable.

[7. On effects of application of Rabin Tree Configuration Example 2]

In the cipher text distribution configuration according to the CS scheme using the above-mentioned Rabin Tree Configuration Example 2, the node-added variables (salt) set so as to correspond to the respective nodes are different from those in the aforementioned Rabin Tree Configuration Example 1. Namely, in the Rabin Tree Configuration Example 1,

[Math 61]

$$temp_l = (NV_{\lfloor l/2 \rfloor} - H(l \parallel salt_l)) \bmod M$$

determines, as $salt_1$, a minimum positive integer (or non-negative integer) such that $tmp_1 \in QR_M$. Here, let an example using a hash function, such as SHA-1 or MD5, as the function H be considered. Since SHA-1 or MD5 treats 512 bits as a block, if the size of an input exceeds 512 bits but is equal to or smaller than 1024 bits, a processing time about twice the case of an input of 512 bits or less is required.

Here, if the size of 1 is 512 bits, even if the size of $salt_1$ is some bits, the size of 1 $\|salt_1$ exceeds 512 bits. When as many $salt_1$ are tested as the condition $tmp_1$ in $QR_M$ is satisfied, and if an Ath $salt_1$ has satisfied the condition, the above setting would require a time as long as 2A operations of H using the input of 512 bits or less, even only for the calculation of H.

By contrast, as in the present embodiment, when a node-added variable (salt) is set as a minimum positive integer $salt_1$ such that $tmp_1$ is a quadratic residue modulo M in the following expression

[Math 62]

$$temp_l = (NV_{\lfloor l/2 \rfloor} \oplus H^{salt_l}(l)) \bmod M$$

an input to H is only 1, which just equals 512 bits. Hence, the time required for performing one round of calculation of H is reduced to 1/2, compared to the aforementioned method (Rabin Tree Configuration Example 1). Here, if H outputs random values, each $salt_1$ is such that $tmp_1 \in QR_M$ with a probability of about 1/4, which is the same as in the aforementioned method (Rabin Tree Configuration Example 1), and thus it should be reminded that an expected value as a number of $salt_1$ to be tested, i.e., an expected value as a number of calculations of the function H is also the same.

[8. Subset Difference (SD) scheme]

The above-mentioned processing examples are examples in which Rabin Trees are applied to the Complete Subtree (CS) scheme. Next, examples are described, in which the Rabin Trees are applied to a Subset Difference (SD) scheme which is different from the Complete Subtree (CS) scheme.

As mentioned above, in the Complete Subtree (CS) scheme, each node of a hierarchical tree is used to represent "a set consisting of receivers assigned to leaves of a subtree rooted at the node". By contrast, in a Subset Difference (SD) scheme, two nodes i, j (where i is an ancestor node of j) of a hierarchical tree are used to represent "a set obtained by subtracting (a set consisting of leaves of a subtree rooted at the node j) from (a set consisting of leaves of a subtree rooted at the node i)".

It should be noted that below-listed symbols are used in the following description.

P(i): The parent node of a node i, and its node number
S(i): The sibling node of the node i (i.e., a node different from the node i and having the same parent as the node i), and its node number
LC(i): A child node on the left side of the node i, and its node number
RC(i): A child node on the right side of the node i, and its node number

**[0241]** For example, a set $S_{i,j}$ defined by a node i 531 and a node j 532 of Fig. 21 is obtained by subtracting u5, u6 from a set of receivers u1-u8. Namely, $S_{i,j}$ = {u1, u2, u3, u4, u7, u8}. Such a set is defined as to all the pairs of nodes i, j where the node i is an ancestor of the node j (i.e., the node j is not the same as the node i, and the node i exists in a path from the node j to the root).

A subset key $SK_{i,j}$ is set as a key corresponding to any subset $S_{i,j}$. The subset key SKi,j is set as a key owned jointly by the subset $S_{i,j}$ = {u1, u2, u3, u4, u7, u8} obtained by excluding u5, u6 from the set consisting of u1-u8, and by transmitting information in which secret information is encrypted using the subset key $SK_{i,j}$ as an encryption key, its decryption can be implemented only by the subset $S_{i,j}$ = {u1, u2, u3, u4, u7, u8}, and thus u5, u6 can be revoked (excluded).

Under such a setting, the number of sets to which a single receiver belongs equals a number O (N) indicated by the following expression

[Math 63]

$$\sum_{k=1}^{\log N}(2^k - k) = O(N)$$

Therefore, when a key (subset key) is assigned to each of the sets (subsets) independently, each receiver must hold O (N) subset keys securely. However, the number of subset keys increases tremendously as the total number N of receivers increases, and consequently, it is actually difficult to have each equipment hold these tremendous amounts of information securely.

To overcome this difficulty, the following technique has been devised in the Subset Difference (SD) scheme. Similarly to the aforementioned Complete Subtree (CS) scheme, the management center (TC) is to perform the defining of a hierarchical tree, the defining of subsets, the defining and distributing of keys, and the like.

First, as shown in Fig. 22 (A), the management center (TC) , paying attention to a certain internal node (i.e., a node which is not a leaf) i, randomly selects a C-bit value S by setting a label for the node i as LABELi.

Next, as shown in Fig. 22 (B), LABELi = S is inputted to a C-bit-input 3C-bit-output pseudo-random number generator G. The output is divided into C-bit parts from the left (from the highest-order bit side) , and these parts are denoted as $G_L$ (S), $G_M$(S), $G_R$ (S), respectively. Then, a label for a child node k on the left side of the node i shown in Fig. 22 (A) is set as $G_L$(S), and a label for a child node on the right side of the node i is set as $G_R$(S).

Now, as a result of this processing, as to the node k being the child node on the left side of the node i in Fig. 22, given the node i being set as the initial point, a label $LABEL_{i,k}$ of the node k is $LABEL_{i,k}$ = $G_L$(S). Let this be T. Next, the label $LABEL_{i,k}$ of the node k, i.e., $LABEL_{i,k}$ = $G_L$(S) = T is inputted this time to the pseudo-random number generator G shown in Fig. 22 (B) , and $G_L$(T) , $G_M$(T) , $G_R$(T) into which the output is divided as the C-bit parts from the left are set as follows.

$G_L$(T) = a label $LABEL_{i,LC(k)}$ of a child node LC(k) on the left side of the node k, given the node i being the initial point

$G_M$(T) = a key (this is supposed to be a subset key $SK_{i,k}$ corresponding to a set $S_{i,k}$) of the node k, given the node i being the initial point

$G_R$(T) = a label $LABEL_{i,RC(k)}$ of a child node RC(k) on the right side of the node k, given the node i being the initial point

By repeating this processing, labels are produced, which correspond to all the nodes being descendants of the node i, given the node i being the initial point. It should be noted that according to the above-mentioned definition, any set $S_{i,i}$ is a null set, and when the node i is set as the initial point, a key for the node i is not needed. Thus, it should be reminded that $G_M$(S) being the middle part of an output obtained by inputting any $LABEL_i$ into the pseudo-random number generator G is not used.

Let this be indicated using the example of Fig. 22 (A). The label S for the node i being the initial point is determined. $G_R$(S) is the label for the child node on the right side of the node i, given the node i being the initial point. Furthermore, $G_L$($G_R$(S)) obtained by inputting $G_R$(S) into the pseudo-random number generator G is a label $LABEL_{i,j}$ for a node j, given the node i being the initial point. The processing for producing labels corresponding to all the nodes which are descendants of the node i, given the node i being the initial point, is performed on all the internal nodes i.

These processing steps are performed by the management center (TC) at the time of a system setup. The pseudo-random number generator (or a pseudo-random number generating function) G has been specified and published by the management center (TC) . Thus, by using this, a receiver given the $LABEL_{i,j}$ is enabled to calculate labels $LABEL_{i,n}$ for all nodes n which are descendants of the node j, given the node i being the initial point, and calculate subset keys $SK_{i,n}$ for the node j and its descendant nodes n, given the node i being the initial point.

As a result of such a setting, as shown in Fig. 23 (A), a certain receiver u needs to hold only labels for nodes a, b, c, which are nodes directly branching from nodes in a path from a leaf u to which the receiver is assigned to a node i, given the node i being the initial point, as to any internal node i in a path from the leaf u to the root of the tree.

Subset keys for these nodes a, b, c and their descendant nodes, given the node i being the initial point, can be produced. In Fig. 23 (A), by paying attention to the node i, there are three nodes a, b, c which directly branch from the nodes in the path from u to i. Thus, the receiver u is given these three labels from the management center (TC) during its system setup and holds them.

The leaf u can obtain a subset key $SK_{i,a}$ corresponding to a subset $S_{i,a}$ by processing with the pseudo-random number generator G based on a label $LABEL_{i,a}$ for the node a. Namely,

$$G_M(LABEL_{i,a}) = SK_{i,a}$$

The subset $S_{i,a}$ is, as shown in Fig. 23 (a), a subset in which leaves of a subtree rooted at the node a are set as revoked equipment. Thus, the subset $S_{i,a}$ is a subset in which only leaves of a subtree rooted at the node i excluding the leaves of the subtree rooted at the node a are set as leaves to which information is to be distributed.

Moreover, the leaf u can obtain a subset key $SK_{i,b}$ corresponding to a subset $S_{i,b}$ by processing with the pseudo-random number generator G based on a label $LABEL_{i,b}$ for the node b. Namely,

$$G_M(LABEL_{i,b}) = SK_{i,b}$$

The subset $S_{i,b}$ is, as shown in Fig. 23 (b), a subset in which leaves of a subtree rooted at the node b are set as revoked equipment. Thus, the subset $S_{i,b}$ is a subset in which only leaves of a subtree rooted at the node i excluding the leaves of the subtree rooted at the node b are set as leaves to which information is to be distributed.

Moreover, the leaf u can obtain a subset key $SK_{i,c}$ corresponding to a subset $S_{i,c}$ by processing with the pseudo-random number generator G based on a label $LABEL_{i,c}$ for the node c. Namely,

$$G_M(LABEL_{i,c}) = SK_{i,c}$$

The subset $S_{i,c}$ is, as shown in Fig. 23 (c), a subset in which the node c (leaf c) is set as revoked equipment. Thus, the subset $S_{i,c}$ is a subset in which only leaves of a subtree rooted at the node i excluding the leaf c are set as leaves to which information is to be distributed.

In addition to these three configurations, there can be various other configurations for revoking leaves except the leaf u in a hierarchical tree in which i is set as the initial point. For example, if only a leaf d 251 of Fig. 23 (a) is to be revoked, it is required to set a subset $S_{i,d}$, and apply a subset key $SK_{i,d}$. However, a key corresponding to any node, leaf, i.e., a subset key can be generated by pseudo-random number generating processing based on a higher-rank label. Therefore, the leaf u can generate the subset key $SK_{i,d}$ for revoking the leaf d 251 on the basis of the label $LABEL_{i,a}$ for the node a held by the leaf u.

This applies similarly to the other subset configurations. Thus, as shown in Fig. 23 (A), as to any internal node i in the path from the leaf to which the certain receiver u is assigned to the root of the tree, the certain receiver u may have to hold only the labels for the nodes a, b, c, which are nodes directly branching from the nodes in the path from this leaf u to i, given the node i being the initial point.

Fig. 24 is a view showing labels held by each of receivers if the total number of receivers is set to N=16. Now, let a receiver u4 be considered. Each of internal nodes 1, 2, 4, 9 in a path to the root 1 from a node 19 being a leaf to which the receiver is assigned, is the initial point (node i). If the node 1 is set as the initial point, nodes directly branching from the nodes in the path from the node 19 to the node 1 total four, i.e., nodes 3, 5, 8, 18, and thus the receiver u4 holds four labels, namely,

$LABEL_{1,3}$,
$LABEL_{1,5}$,
$LABEL_{1,8}$,
$LABEL_{1,18}$

Similarly, if the node 2 is set as the initial point, the receiver u4 holds three labels

$LABEL_{2,5}$,
$LABEL_{2,8}$,
$LABEL_{2,18}$

If the node 4 is set as the initial point, the receiver u4 holds two labels

$LABEL_{4,8,}$
$LABEL_{4,18}$

If the node 9 is set as the initial point, the receiver u4 holds one label

$LABEL_{9,18}$

Moreover, the receiver u4 holds one label

$LABEL_{1,\phi}$

which corresponds to a set (this is denoted as a subset $S_{1,\phi}$) used in a special case where there is no revoked receiver and thus including all the receivers.

Namely, labels LABEL which u4 holds in a configuration of Fig. 24 can be rearranged as follows. As indicated also in Fig. 24,

Four labels, where j = 3, 5, 8, 18 for i = 1

Three labels, where j = 5, 8, 18 for i = 2
Two labels, where j = 8, 18 for i = 4
One label, where j = 18 for i = 9
One LABEL for the case of no revocation
Thus, there are eleven labels overall.

Here, it has been arranged, for consistency in the description, such that u4 has a label corresponding to the subset $S_{1,\phi}$. However, instead of a label, it may otherwise be arranged such that u4 directly holds a subset key corresponding to the subset $S_{1,\phi}$.

As mentioned above, as to any internal node in a leaf-to-root path, each receiver must hold as many labels as hierarchical depths of the internal nodes, plus one special label. Thus, given the number of transmitters/receivers being N, the number of labels each receiver holds equals a number obtained by calculation with the following expression.

[Math 64]

$$1+\sum_{k=1}^{\log N} k = \frac{1}{2}\log^2 N + \frac{1}{2}\log N + 1$$

Each receiver holds the number of labels indicated by the above expression, and can produce a necessary subset key by using the published pseudo-random number generating function G. The receiver must hold these labels securely.

[9. Configuration for reducing the number of labels in SD scheme]

A configuration for reducing the number of labels in the Subset Difference (SD) scheme is described. Observing the above-mentioned Subset Difference (SD) scheme, one can understand the following.

Namely, there are cases where a label $LABEL_{i,j}$ is

(A) given directly to a receiver by the management center (TC), and
(B) derived by the receiver from a label except those, by using the pseudo-random number generator G.

However, as to any label for which the nodes i and j bear a parent-child relationship (having a distance of 1, i.e., being continuous in hierarchy), the above case (B) does not exist, and there can exist only the case (A) where the label $LABEL_{i,j}$ is given directly to the receiver by the management center (TC).

The reason therefor is as follows. In order for a certain receiver to produce the $LABEL_{i,j}$ using the pseudo-random number generator G, the receiver must know a $LABEL_{i,k}$ produced by using a node k which is an ancestor of the node j. However, since the nodes i, j bear a parent-child relationship, there exists no such node k which is an ancestor of the node j and a descendant of the node i, nor is any receiver given the $LABEL_i$.

A description is given with reference to a configuration example of Fig. 25. A $LABEL_{2,8}$ is given directly to a receiver u4 by the management center (TC), but not given directly to a receiver u5. The receiver u5 calculates, from a $LABEL_{2,4}$ given by the management center (TC), $G_L(LABEL_{2,4})$ using the pseudo-random number generator G to derive the $LABEL_{2,8}$.

By contrast, as shown in Fig. 26, a $LABEL_{2,5}$ in which a node 2 and a node 5 bear a parent-child relationship is given directly to receivers u1, u2, u3, u4 belonging to a subset $S_{2,5}$. Since receivers except these do not belong to that set, they cannot derive the $LABEL_{2,5}$ even by calculation. Namely, such a label is only given directly to the receivers by the management center (TS), and is never derived by using the pseudo-random number generator G.

Moreover, in the SD scheme, when a certain node i is the parent node of two different nodes j, k, and the node j is the parent node of a node n different from them, one can see that a receiver belonging to any subset $S_{j,n}$ must always belong to any subset $S_{i,k}$.

For example, as shown in Fig. 27, a receiver U4 belonging to a subset $S_{9,18}$ also belongs to any of subsets $S_{4,8}$, $S_{2,5}$, $S_{1,3}$. Namely,

$$S_{9,18} = \{u4\}$$

$$S_{4,8} = \{u3, u4\}$$

$$S_{2,5} = \{u1, u2, u3, u4\}$$

$$S_{1,3} = \{u1, u2, u3, u4, u5, u6, u7, u8\}$$

Moreover, a receiver u3, which is a receiver belonging to the subset $S_{4,8}$ paired with the receiver u4, also belongs to any of the subsets $S_{2,5}$, $S_{1,3}$.

In the present invention, the number of labels held by a receiver is reduced by applying a Rabin Tree to any label $LABEL_{i,j}$ in which the nodes i and j bear a parent-child relationship and to the label $LABEL_{1,\phi}$ corresponding to the subset $S_{1,\phi}$ being a set used in the special case where there is no revoked receiver and thus including all the receivers.

In the above-mentioned Subset Difference (SD) scheme, each receiver holds a total of log N labels $LABEL_{i,j}$, in each of which the nodes i and j bear a parent-child relationship, one for each internal node in a path from a leaf to which the receiver is assigned to the root of a tree. In the present invention, it is set such that a total of log N + 1 labels, which are these labels $LABEL_{i,j}$ plus the label $LABEL_{1,\phi}$ corresponding to the subset $S_{1,\phi}$ being a set used in the special case where there is no revoked receiver and thus including all the receivers, can be derived from a single value, whereby the number of labels held by the receiver is reduced.

It should be noted that by applying a Rabin Tree, a forward permutation y = F (x) and an inverse permutation $x = F^{-1}$ (y) can be configured, in which it is simple to calculate y from x (forward calculation), but it is difficult to perform a reverse calculation. The reverse calculation can be performed easily only by one who knows a certain piece of secret information (trap door), but is difficult for the others.

In the original SD scheme, as already described with reference to Fig. 24, the receiver u4 needed to hold a total of eleven labels securely. Namely,
four labels, where j = 3, 5, 8, 18 for i = 1
$LABEL_{1,3}$,
$LABEL_{1,5}$,
$LABEL_{1,8}$,
$LABEL_{1,18}$,
three labels, where j = 5, 8, 18 for i = 2
$LABEL_{2,5}$,
$LABEL_{2,8}$,
$LABEL_{2,18}$,
two labels, where j = 8, 18 for i = 4
$LABEL_{4,8}$,
$LABEL_{4,18}$,
one label, where j = 18 for i = 9
$LABEL_{9,18}$, and
one LABEL for the case of no revocation
$LABEL_{1,\phi}$
Although even by applying the configuration of the present invention, the receiver must still hold the labels in each of which the nodes i, j bear a parent-child relationship, namely,
$LABEL_{1,3}$,
$LABEL_{2,5}$,
$LABEL_{4,8}$,
$LABEL_{9,18}$,
and also, the label LABEL for the case of no revocation
$LABEL_{1,\phi}$,
in the present invention, by applying a Rabin Tree, it is set such that a total of log N + 1 labels, which are these labels and the label $LABEL_{1,\phi}$ corresponding to the subset $S_{1,\phi}$ being a set used in the special case where there is no revoked receiver and thus including all the receivers, can be derived from a single value, whereby the number of labels held by the receiver is reduced.

[10. Configuration for reducing the number of labels in SD scheme using Rabin Tree Configuration Example 1]

Below, a configuration for reducing the number of labels in the SD scheme using a Rabin Tree is described in detail. It should be noted that a Rabin Tree herein applied is the Rabin Tree applied to the aforementioned CS scheme, i.e., the Rabin Tree generated according to the algorithm described with reference to the flow of Fig. 8 in the item "(2.1) Example method for configuring a Rabin Tree in [2. Configuration of CS scheme to which Rabin Tree Configuration Example 1 is applied].

Namely, as already described with reference to Figs. 8 to 10, the Rabin Tree is of a tree structure in which 2N-1 |M|-bitnumbers (node-corresponding values) : $NV_1$, $NV_2$, ..., $NV_{2N-1}$, and 2N-2 numbers (node-added variables) : $salt_2$, $salt_3$, ..., $salt_{2N-1}$ are set in a binary tree having N leaves, and has a configuration such that it is easy to obtain, from the node-corresponding value $NV_1$ and the node-added variable $salt_1$ for a certain node, the node-corresponding value for its parent node, but the reverse operation is difficult. In Fig. 9, each of arrow-headed straight lines shown along functions f indicates that the node-corresponding value for a higher-rank node can be obtained by applying a function f, with the node-corresponding value $NV_1$ for a lower-rank node as an input. The function f is a computation using a forward computation (squaring modulo M) F. The node-corresponding value for the parent node of a certain node (child node) can be calculated according to the aforementioned Eq. 1, from the node-corresponding value $NV_1$ and $salt_1$ for the child node, by applying its published function H and modulus M.

In Fig. 9, each of arrow-headed straight lines shown along functions $f^{-1}$ indicates that the node-corresponding value for a lower-rank node can be obtained by applying a function $f^{-1}$, with the node-corresponding value for a higher-rank node as an input. The function $f^{-1}$ is a computation using an inverse computation (finding square roots modulo M) $F^{-1}$. In order to obtain, from the node-corresponding value for a higher-rank node, the node-corresponding value for a child node thereof, secret information p, q (primes of M) should be known, and thus only the management center can perform this calculation.

A tree constituted by node-corresponding values $NV_1$ having such a setting is called "Rabin Tree". This is because Rabin cryptography uses operations of squaring modulo M for encryption (forward computation) and operations of finding square roots modulo M for decryption (inverse computation). It should be noted that Rabin cryptography is described in detail, e.g. , at pp. 292-294 in the above-mentioned literature: A.J. Menezes, P.C. van Oorschot and S.A Vanstone, "Handbook of Applied Cryptography," CRC Press, 1996.

Below, a configuration for reducing the number of labels in the SD scheme using the Rabin Tree is described in detail.

In the present invention, the number of labels held by a receiver is reduced by applying a Rabin Tree to any label $LABEL_{i,j}$ corresponding to any subset in which the nodes i and j bear a parent-child relationship (having a distance of 1, i.e., being continuous in hierarchy), and to the label $LABEL_{1,\phi}$ corresponding to the subset $S_{1,\phi}$ being a set used in the special case where there is no revoked receiver and thus including all the receivers.

It should be noted that of all the subsets $S_{i,j}$ defined in the hierarchical tree, any in which the nodes i and j bear a parent-child relationship is denoted as a first special subset (Special Subset) $SS_{i,j}$. It should be reminded here that each node of the tree excluding the root has the only one parent node, and thus that j, which takes n = 2, 3, ..., 2N-1, is used only once as j in a $SS_{i,j}$. Furthermore, a subset $S_{1,\phi}$ defined as an entire tree-set including all the leaves of the tree and thus rooted at the root is defined as a second special subset $SS_{1,\phi}$.

Furthermore, for labels $LABEL_{i,j}$ (j = 2, 3, ···, 2N-1) corresponding to the first special subsets $SS_{i,j}$, intermediate labels $IL_{i,j}$ are defined, and for the second special subset $SS_{1,\phi}$, the intermediate label $IL_{1,\phi}$ is defined.

Furthermore, these intermediate labels are set to correspond to the node-corresponding values $NV_l$ of the above-mentioned Rabin Tree. Namely,
the intermediate label $IL_{1,\phi}$ corresponding to the second special subset $SS_{1,\phi}$ is

$$IL_{1,\phi} = NV_1$$

and the intermediate labels $IL_{i,j}$ corresponding to the first special subsets $SS_{i,j}$ (j = 2, 3, ···, 2N-1) are defined as follows. A $NV_j$ (j = 2, 3, ···, 2N-1) set as the node-corresponding value corresponding to any of the nodes 1 to 2N-1 is set as an intermediate label $IL_{P(j),S(j)}$ corresponding to a first special subset $SS_{p(j),s(j)}$ specified by the sibling node and the parent node of a node j. Namely,

$$IL_{P(j),S(j)} = NV_j$$

where j = 2, 3, ···, 2N-1.
It should be noted that P(j) is the parent node of the node j, and S(j) is the sibling node of the node j.
By expressing the above processing in another way, correspondence between the node-corresponding values NV in the Rabin Tree and the intermediate labels IL is set as follows. Setting such that

$$IL_{1,\phi} = NV_1$$

is performed, and processing such that

$$IL_{j,2j} = NV_{2j+1}$$

$$IL_{j,2J+1} = NV_{2j}$$

is also performed, for j = 1, 2, ···, N-1.
Furthermore, a relationship between the label $LABEL_{i,j}$ and the intermediate label $IL_{i,j}$ is determined as follows.

$$LABEL_{i,j} = Hc\ (IL_{i,j})$$

It should be noted that a function Hc is a hash function for mapping a value of a size |M| into a random number of a size C. For example, in a case of C being 160 bits, the above-mentioned function SHA-1 is available as a function for outputting a 160-bit value with respect to an input of any size. Moreover, in a case of C being 128 bits, MD5 or the like is known as a function for outputting a 128-bit value with respect to an input of any size. Thus, these functions are applicable. It should be noted that MD5 is also described in detail in the above-mentioned literature: A.J. Menezes, P.C. van Oorschot and S.A Vanstone, "Handbook of Applied Cryptography," CRC Press, 1996.
Since node keys are used for encrypting information, such as session keys, to be transmitted to receivers, this size C may be determined to be equal to the size of a key for an encryption algorithm used therefor. For example, if AES (Advanced Encryption Standard FIPS197) with a 128-bit key is used as an encryption algorithm, C may be set to 128 bits.
A specific example is shown in Fig. 28. In Fig. 28, a $NV_j$ as a node-corresponding value is assigned to a node j 551.
The parent node of the node j 551 is a P(j) 552, and its sibling node is a S (j) 553. The first special subset $SS_{P(j),s(j)}$ specified by the sibling node S (j) 553 and the parent node P (j) 552 of the node j 551 is a subset $SS_{P(j),S(j)}$ 550 shown in Fig. 28.
At this time, a label corresponding to the subset $SS_{P(j),S(j)}$ is a $LABEL_{P(j),S(j)}$, and the $LABEL_{P(j),s(j)}$ is calculated on the basis of the intermediate label $IL_{P(j),S(j)}$ (this equals the node-corresponding value $NV_j$ for the node j 551). Namely, $LABEL_{P(j),S(j)} = Hc\ (IL_{P(j),S(j)})$
The above-mentioned expression is equivalent to

$$LABEL_{P(j),S(j)} = Hc\ (NV_j)$$

A processing example is shown in Fig. 29, for setting a node-corresponding value $NV_j$ as an intermediate label (IL), which is data for generating (a) the label $LABEL_{1,\phi}$ of the second special subset $SS_{1,\phi}$ used where there is no revoked receiver and thus corresponding to the entire tree including all the receivers, and (b) the label $LABEL_{i,j}$ corresponding to any first special subset $SS_{i,j}$ (where j = 2, 3, ···, 2N-1 as mentioned above) in which the nodes i and j bear a parent-child relationship.
In Fig. 29, [i $NV_k$ j] represents

$$NV_k = IL_{i,j}$$

where i is an ancestor of j.
For example, [1 $NV_3$ 2] represents

$$NV_3 = IL_{1,2}$$

In this way, the node-corresponding value $NV_j$ is set as the value corresponding to the intermediate label from which the labels of the above-mentioned first special subsets $SS_{i,j}$ and second special subset $SS_{1,\phi}$ are calculable.

Moreover, N leaves of the Rabin Tree shown in Fig. 29 are numbered $leaf_1$, $leaf_2$, ..., $leaf_N$ (i.e., the node number of the leftmost $leaf_1$ is N, and thus the node number of a $leaf_i$ is N-1+i), and a receiver ui is assigned to the $leaf_i$. The receiver ui is given a value $NV_{N-1+i}$ corresponding to the leaf (node) $leaf_i$ and log N node-added variables $salt_1$ corresponding to nodes in a path from the $leaf_i$ to the root. It should be noted that a node-corresponding value equals an intermediate label. When the receivers are assigned as shown in Fig. 29, a receiver u4 assigned to a node 19 being a leaf is given a node-corresponding value $NV_{19}$ for the node 19, and $salt_{19}$, $salt_9$, $salt_4$, $salt_2$ being node-added variables for nodes in a path from the node 19 to the root. The node-corresponding value $NV_{19}$ corresponds to an intermediate label $IL_{9,18}$.

Under such a setting, the receiver u4 can obtain values for all the nodes, i.e., the node-corresponding values NV (= intermediate labels IL) in the path from the node 19 to the root, by using the node-corresponding value $NV_{19}$ (= intermediate label $IL_{9,18}$) and the node-added variables $salt_{19}$, $salt_9$, $salt_4$, $salt_2$ for the nodes in the path from the node 19 to the root, given thereto. Correspondence between the node-corresponding values NV and the intermediate labels IL in the path from the node 19 to the root is set as follows.

$$NV_{19} = IL_{9,18}$$

$$NV_9 = IL_{4,8}$$

$$NV_4 = IL_{2,5}$$

$$NV_2 = IL_{1,3}$$

$$NV_1 = IL_{1,\phi}$$

Calculation of the node-corresponding values NV (intermediate labels) for higher-rank nodes (node number = 1, 2, 4, 9) in the receiver u4 is executed according to the following procedure.

(a1) Calculation of the node-corresponding value $NV_9$ (= intermediate label $IL_{4,8}$) for the higher-rank node 9 from the node-corresponding value $NV_{19}$ (= intermediate label $IL_{9,18}$) for the node 19:

$$NV_9 \text{ (= intermediate label } IL_{4,8}) = ((NV_{19})^2 + H(19 \| salt_{19})$$

$$\text{mode } M$$

(a2) Calculation of the node-corresponding value $NV_4$ (= intermediate label $IL_{2,5}$) for the higher-rank node 4 from the node-corresponding value $NV_9$ (= intermediate label $IL_{4,8}$) for the node 9:

$$NV_4 \text{ (= intermediate label } IL_{2,5}) = ((NV_9)^2 + H\ (9 \| salt_9) \text{ mode } M$$

(a3) Calculation of the node-corresponding value $NV_2$ (= intermediate label $IL_{1,3}$) for the higher-rank node 2 from the node-corresponding value $NV_4$ (= intermediate label $IL_{2,5}$) for the node 4:

$$NV_2 \text{ (= intermediate label } IL_{1,3}) = ((NV_4)^2 + H\ (4 \| salt_4) \text{ mode } M$$

(a4) Calculation of the node-corresponding value $NV_1$ (= intermediate label $IL_{1,\phi}$) for the higher-rank node 1 from the node-corresponding value $NV_2$ (= intermediate label $IL_{1,3}$) for the node 2:

$$NV_1 \text{ (= intermediate label } IL_{1,\phi}) = ((NV_2)^2 + H\ (2 \| salt_2) \text{ mode } M$$

Through a computation based on the above expressions, the node-corresponding values for the higher-rank nodes are calculated from the node-corresponding values for the lower-rank nodes.

Furthermore, the labels (LABEL) can be calculated from the node-corresponding values (intermediate labels) for the respective nodes.

(b1) Calculation of the label ($LABEL_{9,18}$) for the node 19 from the node-corresponding value $NV_{19}$ (= intermediate label $IL_{9,18}$) for the node 19:

$$LABEL_{9,18} = Hc\ (IL_{9,18})$$

(b2) Calculation of the label ($LABEL_{4,8}$) for the node 9 from the node-corresponding value $NV_9$ (= intermediate label $IL_{4,8}$) for the node 9:

$$LABEL_{4,8} = Hc\ (IL_{4,8})$$

(b3) Calculation of the label ($LABEL_{2,5}$) for the node 4 from the node-corresponding value $NV_4$ (= intermediate label $IL_{2,5}$) for the node 4:

$$LABEL_{2,5} = Hc\ (IL_{2,5})$$

(b4) Calculation of the label ($LABEL_{1,3}$) for the node 2 from the node-corresponding value $NV_2$ (= intermediate label $IL_{1,3}$) for the node 2:

$$LABEL_{1,3} = Hc\ (IL_{1,3})$$

(b5) Calculation of the label ($LABEL_{1,\phi}$) for the node 1 from the node-corresponding value $NV_1$ (= intermediate label

$IL_{1,\phi}$) for the node 1:

$$LABEL_{1,\phi} = Hc\ (IL_{1,\phi})$$

By the way, the receiver u4 needs to keep the node-corresponding value $NV_{19}$ secret, but does not need to keep the node-added variables salt secret.

By adopting the above-mentioned configuration, each of receivers, which are set so as to correspond to leaves in a binary tree configuration having the number of leaves = N, is enabled to generate, on the basis of a single intermediate label, log N labels $LABEL_{i,j}$ in each of which the nodes i and j bear a parent-child relationship, and the LABEL $IL_{1,\phi}$ being a label corresponding to the subset $S_{1,\phi}$ which is a set used in the special case where there is no revoked receiver and thus including all the receivers, among labels $LABEL_{i,j}$ which it originally should hold in the conventional SD scheme. As a result, the number of labels each receiver should keep secret is reduced by log N labels.

Here, let the size of each node-added variable be considered. A certain number is a quadratic residue modulo M with a probability of about 1/4. Thus, when four $salt_l$ values are tested, it is expected that there is at least one $salt_l$ such that $tmp_l$ is a quadratic residue modulo M on average. Consequently, it is expected that the size for representing a node-added variable $salt_l$ is two bits.

On the other hand, there may be a case where none of the four values is such that $tmp_l$ is a quadratic residue. For example, when Lvalues are tested as node-added variables $salt_l$, $tmp_l$ is not a quadratic residue (or is a quadratic non-residue) with probability $3^L/4^L$. Hence, where L=4, none of $tmp_l$ is a quadratic residue with probability $3^4/4^4 \fallingdotseq 42.2\%$. However, supposing that an 8-bit value as a node-added variable $salt_l$ is considered, and that as many as 256 numbers are tested, none of $tmp_1$ is a quadratic residue with probability $3^{256}/4^{256} \fallingdotseq 1.0 \times 10^{-32}$, which is an extremely small value. Hence, even if a large value, such as $2^{30} \fallingdotseq 10^9$ or $2^{40} \fallingdotseq 10^{12}$, is considered as the number N of leaves, the probability with which a node-added variable $salt_l$ such that $tmp_l$ is a quadratic residue at any node is not found is so small as to be negligible.

[11. Cipher text distributing, decrypting processing in which Rabin Tree Configuration Example 1 is applied to SD scheme]

Next, cipher text distributing, decrypting processing in which Rabin Tree Configuration Example 1 is applied to the SD scheme is described. Below, a description is given sequentially as to

(11-1) Setup processing
(11-2) Information distributing processing
(11-3) Receiving and decrypting processing

(11-1) Setup processing

Setup processing is performed only once at the time of start-up of a system. The subsequent information distributing, and receiving and decrypting processing is executed every time information to be transmitted occurs. For example, the latter processing is repeated every time content-stored recording media, such as DVD disks having new content stored therein, are created and distributed to users, or every time encrypted content is distributed via the Internet.

The setup processing is executed by the following steps 1-4. Each of the steps is described.

a. Step 1

First, the management center (TC) defines a hierarchical tree being a binary tree and having N leaves. It should be noted that this hierarchical tree is different from the above-mentioned one-way permutation tree. An identifier corresponding to any node in the hierarchical tree is set as k (k = 1, 2, ···, 2N-1). However, the root is set to 1, and as to its lower nodes, the identifiers (numbers) are given sequentially in the breadth first order. Namely, setting of node numbers (y) such as shown in Fig. 27 is performed. As a result of this processing, the node numbers y = 1 to 2N-1 are set to the respective nodes of the binary tree.

Receivers um (m= 1, 2, ···, N) are assigned to the respective leaves of the tree. In the example of Fig. 27, sixteen receivers u1-u16 are assigned to the node numbers y = 16 to 31.

Next, as to any internal node i (i = 1, 2, ···, N-1), a subset $S_{i,j}$ corresponding to any node j, which is a descendant of the node i, is defined. Furthermore, of all the above-defined subsets $S_{i,j}$, any in which the nodes i and j bear a parent-child relationship is denoted as a first special subset (Special Subset) $SS_{i,j}$. It should be reminded here that each node of the tree excluding the root has the only one parent node, and thus that j, which takes n = 2, 3, ···, 2N-1, is used only once as j in a $SS_{i,j}$. Furthermore, a second special subset $SS_{1,\phi}$ used where there is no revoked receiver and thus including all the receivers, is also defined.

b. Step 2

The management center (TC) first determines the size |M| of the modulus M (e.g., 1024 bits).

Furthermore, the management center determines and publishes a pseudo-random number generator G. The pseudo-random number generator G is the pseudo-random number generator G described earlier with reference to Fig. 22, which outputs a 3C-bit pseudo-random number from a C-bit input, and is thus similar to the pseudo-random number generator applied in the aforementioned SD scheme and explained in the literature by Noar et al.

Next, by using the number N of leaves of the tree structure, the size |M| of the modulus M as inputs, the management center determines the modulus M and the mapping function H for outputting a random element of $Z_M$ from a value of any size according to the algorithm described with reference to the flow of Fig. 8, to produce a Rabin Tree which is a binary tree having N leaves. First, the management center randomly selects a value $NV_1 \in Z^*_M$ as the node-corresponding value for the root node, after which it determines the node-corresponding values corresponding to the nodes 1 to 2N-1, i.e., 2N-1 |M|-bit numbers (node-corresponding values) : $NV_1$, $NV_2$, ···, $NV_{2N-1}$, and 2N-2 numbers (node-added variables) : $salt_2$, $salt_3$, ···, $salt_{2N-1}$. Since the values salt are not secret, the management center (TC) may publish these values. Moreover, the management center (TC) publishes the modulus M and the mapping function H. Furthermore, the management center determines and publishes the function Hc for mapping the value for the size |M| into a random number of a size C.

The management center (TC) sets the node-corresponding value $NV_1$ determined in the above-mentioned processing as an intermediate label IL as data for generating the label $LABEL_{1,\phi}$ for the second special subset $SS_{1,\phi}$ used where there is no revoked receiver and thus including all the receivers. Namely,

$$IL_{1,\phi} = NV_1$$

Furthermore, the label $LABEL_{1,\phi}$ for the second special subset $SS_{1,\phi}$ is set as a value to be calculated by computation (Hc) of the above-mentioned $IL_{1,\phi}$. Namely,

$$LABEL_{1,\phi} = Hc\ (IL_{1,\phi})$$

Furthermore, as to labels corresponding to the first special subsets $SS_{i,j}$ in each of which the nodes i and j bear a parent-child relationship, among all the subsets $S_{i,j}$, intermediate labels $IL_{i,j}$ as their generator data are determined as follows. Namely, any $NV_j$ (j = 2, 3, ···, 2N-1) excluding the root node-corresponding value $NV_1$, among the node-corresponding values $NV_1$ to $NV_{2N-1}$ set as the values corresponding to the nodes 1 to 2N-1 by the aforementioned Rabin Tree generating processing (see Fig. 8) is set as an intermediate label $IL_{P(j),S(j)}$ corresponding to a first special subset $SS_{P(j),S(j)}$ specified by the sibling node and the parent node of a node j. Namely,

$$NV_j = IL_{P(j),S(j)}$$

It should be noted that P(j) is the parent node of the node j, and S(j) is the sibling node of the node j.

Moreover, a $LABEL_{P(j),S(j)}$ is set as a value calculable on the basis of the intermediate label $IL_{P(j),S(j)}$ (this equals the node-corresponding value $NV_j$ for the node j 551). Namely,

$$LABEL_{P(j),S(j)} = Hc\ (IL_{P(j),S(j)})$$

The above expression is equivalent to

$$LABEL_{P(j),S(j)} = Hc\ (NV_j)$$

By expressing the above processing in another way, correspondence between the node-corresponding values NV in the Rabin Tree and the intermediate labels IL is set as follows.

$$IL_{1,\phi} = NV_1$$

Moreover, processing such that

$$IL_{j,2j} = NV_{2j+1}$$

$$IL_{j,2j+1} = NV_{2j}$$

is performed, and further the labels $LABEL_{i,j}$ corresponding to these special subsets are calculated from the intermediate labels $IL_{i,j}$ using the following expression, for setting as the labels $LABEL_{i,j}$ corresponding to the respective special subsets.

$$LABEL_{i,j} = Hc\ (IL_{i,j})$$

c. Step 3

Next, the management center (TC) inputs the label $LABEL_{i,j}$ of a first special subset $SS_{i,j}$ in which the nodes i and j bear a parent-child relationship, into the pseudo-random number generator G, to obtain labels $LABEL_{i,LC(j)}$ and $LABEL_{i,RC(j)}$ for the child nodes of the node j, given the node i being the initial point.

Namely, $G_L(LABEL_{i,j})$ representing the higher-order C bits of a 3C-bit random number obtained by inputting the C-bit $LABEL_{i,j}$ into the pseudo-random number generator G is set as the label $LABEL_{i,LC(j)}$ for a (non-special) subset $S_{i,LC(j)}$ corresponding to the left child node LC(j) of the node j, given the node i being the initial point. Furthermore, $G_R$ $(LABEL_{i,j})$ representing the lower-order C bits of the 3C-bit random number obtained by inputting the C-bit $LABEL_{i,j}$ into the pseudo-random number generator G is set as the label $LABEL_{i,RC(j)}$ for a (non-special) subset $S_{i,RC(j)}$ corresponding to the right child node $RC_{(j)}$ of the node j, given the node i being the initial point. Namely, the labels are set respectively as

$$LABEL_{i,LC(j)} = G_L(LABEL_{i,j})$$

$$LABEL_{i,RC(j)} = G_R(LABEL_{i,j})$$

Furthermore, by repeatedly inputting these outputs (labels) into the pseudo-random number generator G, labels corresponding to all the nodes which are descendants of the node j, given the node i being the initial point, are obtained. This processing is performed on the labels for all the special subsets $SS_{i,j}$, to obtain labels for all the subsets $S_{i,j}$ defined in step 1.

d. Step 4

Next, the management center (TC) determines labels for supply to a receiver um, i.e., labels held by the receiver um.

First, labels given to the receiver um in the original SD scheme are selected as tentatively selected labels. They are the labels $LABEL_{i,j}$ for the subsets $S_{i,j}$ each of which initiates at any internal node i in a path m (path-m) from a leaf to which the receiver um is assigned to the root and each of which corresponds to the node j directly branching from any node in a path from the leaf to i, and the label $LABEL_{1,\phi}$ corresponding to the above-mentioned second special subset $SS'_{1,\phi}$.

Referring to Fig. 30 et seq. , processing for determining the labels for supply to a receiver is described. For example, as the tentatively selected labels for a receiver u4 corresponding to a node number 19 of Fig. 30, eleven labels are selected, which are $LABEL_{1,3}$, $LABEL_{1,5}$, $LABEL_{1,8}$, $LABEL_{1,18}$, $LABEL_{2,5}$, $LABEL_{2,8}$, $LABEL_{2,18}$, $LABEL_{4,8}$, $LABEL_{4,18}$, $LABEL_{9,18}$, $LABEL_{1,\phi}$.

The management center (TC) re-selects labels for supply to the receiver um from these tentatively selected labels. It should be noted that of the above-mentioned eleven tentatively selected labels, labels for the first special subsets $SS_{i,j}$ in each of which the nodes i and j bear a parent-child relationship total four: $LABEL_{1,3}$, $LABEL_{2,5}$, $LABEL_{4,8}$, $LABEL_{9,18}$.

Of these tentatively selected labels, the management center (TC) specifies labels obtained by excluding those corresponding to the aforementioned first and second special subsets, as finally selected labels for, i.e., the labels for supply to, the receiver u4.

Furthermore,the management center (TC) gives the receiver the intermediate label $IL_{P(j),S(j)}$ (= node-corresponding value $NV_j$) for the special subset $SS_{P(j),S(j)}$ which initiates at the parent node P (j) of the leaf j to which the receiver is assigned and which corresponds to the sibling node S(j) of j. In the above example, the management center (TC) gives an $IL_{9,18}$ (= node-corresponding value $NV_{19}$) to the receiver u4. The receiver keeps the given labels and intermediate label (= node-corresponding value NV) securely.

Namely, first, as the labels (LABEL) which the receiver u4 needs to have, labels $LABEL_{i,j}$ having the following "i, j" pairs are specified as the tentatively selected labels.

j = 3, 5, 8, 18 for i = 1
j = 5, 8, 18 for i = 2
j = 8, 18 for i = 4
j = 18 for i = 9
One LABEL for the case of no revocation

Next, from the above-mentioned eleven tentatively selected labels, the labels obtained by excluding those corresponding to the aforementioned first and second subsets, and the single intermediate label are specified as the finally selected labels for, i.e., the labels for supply to, the receiver u4. Namely, labels $LABEL_{i,j}$ having the following "i, j" pairs are specified as the labels for supply.

j = 5, 8, 18 for i = 1
j = 8, 18 for i = 2
j = 18 for i = 4
Intermediate label $IL_{9,18}$ (= node-corresponding value $NV_{19}$)
The above six labels and one intermediate label are specified as the labels for supply.

It should be noted that in any receiver um except the receiver u4 shown in the above example, six labels and one intermediate label (= node-corresponding value NV) are given in the N = 16 setting configuration, although the combination of the six labels and one intermediate label (= node-corresponding value NV) given varies from one receiver to another.

It should be noted that the one intermediate label (= node-corresponding value NV) set as one of the labels for supply to the receiver um is the intermediate label $IL_{i,j}$ (= node-corresponding value) corresponding to the first special subset defined by the ancestor nearest to the receiver um in a hierarchical tree, i.e., one of the first special subsets $SS_{i,j}$ (where j = 2, 3, ..., 2N-1 as mentioned above) in each of which the nodes i and j bear a parent-child relationship. Namely, the one intermediate label for supply to the receiver corresponding to a leaf in the hierarchical tree is the intermediate label corresponding to the lowermost one of the aforementioned first special subsets $S_{i,j}$.

A flow for the processing performed by the management center (TC) in the above setup is shown in Fig. 31. First, in step S501, the management center defines a configuration of a hierarchical tree. In step S502, it also defines subsets so as to correspond to the set hierarchical tree. The subsets may be defined arbitrarily. The subsets may be set such that any leaf can be revoked individually, or such that specific leaves are grouped into a revocation unit according to information to be distributed, for example.

Next, in step S503, the management center sets parameters and generates a one-way tree. Here, the number of leaves = N, the size |M| of the modulus M being the parameters are inputted as parameters, to generate the Rabin Tree being a binary tree having N leaves, according to the algorithm described earlier with reference to the flow of Fig. 8, to calculate the node-corresponding value $NV_j$ corresponding to each node j. Note here that the node-corresponding value $NV_j$ for each node j satisfies the expression (Eq. 1).

In step S504, the management center sets the node-corresponding values $NV_j$ as the values of the intermediate labels, and calculates the labels corresponding to the special subsets on the basis of these intermediate labels (IL). Namely,

$$IL_{1,\phi} = NV_1$$

Moreover, for y = 1, 2, ⋯, N-1, it is set such that

$$IL_{j,2j} = NV_{2j+1}$$

$$IL_{j,2j+1} = NV_{2j}$$

It should be noted that the intermediate labels to be obtained here are intermediate labels corresponding to

(a) the second special subset $SS_{1,\phi}$ used where there is no revoked receiver and thus including all the receivers, and
(b) any first special subset $SS_{i,j}$ (where j = 2, 3, ⋯, 2N-1 as mentioned above) in which the nodes i and j bear a parent-child relationship.

Furthermore, on the basis of these intermediate labels, the labels corresponding to the special subsets are calculated. The labels corresponding to the special subsets are calculated on the basis of the intermediate labels. Namely, the labels $LABEL_{i,j}$ corresponding to these special subsets are calculated from the intermediate labels $IL_{i,j}$ using the following expression

$$LABEL_{i,j} = Hc\ (IL_{i,j})$$

whereby they are set as the labels $LABEL_{i,j}$ corresponding to the respective special subsets.

Next, in step S505, the management center calculates labels not corresponding to the special subsets on the basis of the labels corresponding to the special subsets. For example, a label $LABEL_{i,j}$ for a first special subset $SS_{i,j}$ is inputted to the pseudo-random number generator G to obtain the labels $LABEL_{i,LC(j)}$ and $LABEL_{i,RC(j)}$ of the child nodes of the node j, given the node i being the initial point. And by repeatedly executing this processing, all the labels corresponding to the set subsets are calculated.

Next, in step S506, the management center publishes parameters. The parameters to be published include, e.g., the modulus M. Furthermore, in step S507, it further publishes the pseudo-random number generator G, the function H for mapping a value of any size into a random element of $Z_M$, and the function Hc for mapping the value of the size |M| into a random number of the size C.

In step S508, the management center selects the labels and intermediate label for supply to each receiver set so as to correspond to a leaf of the hierarchical tree. This part of the processing is executed as the two-step processing involving selection of the tentatively selected labels and selection of the labels for supply, as mentioned earlier.

Namely, first, as the labels (LABEL) a receiver um needs to have, the labels given in the original SD scheme, i.e., the labels $LABEL_{i,j}$ of the subsets $S_{i,j}$ each of which initiates at any internal node i in a path m (path-m) from a leaf to which the receiver um is assigned to the root and each of which corresponds to the node j directly branching from any node in a path from the leaf to i, and the label $LABEL_{1,\phi}$ corresponding to the above-mentioned second special subset $SS'_{1,\phi}$ are selected as the tentatively selected labels. Thereafter, the labels $LABEL_{i,j}$ and one intermediate label (= node-corresponding value NV) which are obtained by excluding the aforementioned labels corresponding to the first and second special subsets are set as the labels for supply.

The one intermediate label set as one of the labels for supply is the intermediate label $IL_{i,j}$ (= node-corresponding value NV) corresponding to the first special subset defined by the parent node and the sibling node of a leaf n to which the receiver um is assigned, i.e., the first special subset $S_{i,j}$ (where j = N, N+1, ⋯, 2N-1 since j is a leaf) in which the node i is the parent node of the leaf n and the node j is the sibling node of the leaf n). For example, the intermediate label for supply to the receiver u4 to which the node number 19 is set as shown in Fig. 30 is the intermediate label $IL_{9,18}$ (= node-corresponding value $NV_{19}$).

In step S509, the management center supplies the receiver with the labels for supply to the receiver which have been determined in step S508, after which it ends the processing. It should be noted that the labels are supplied either by storing them in a tamper-resistant memory beforehand during manufacture of the receiver, or by using a means such as a secure communication channel or medium free from information leakage. It should be noted that the steps in the processing flow shown in Fig. 31 may not necessarily be in this order.

(11-2) Information distributing processing

Next, details of secret information transmission processing executed after the above-mentioned setup processing are described. Information distribution, i.e., transmission of secret information is performed by the management center (TC) broadcasting at least one cipher text. Each of the cipher texts is obtained by encrypting the secret information with one of subset keys. For example, the secret information transmitted by the management center is constituted as a set of a plurality of cipher texts obtained by encrypting the same secret information for transmission using different subset keys, respectively.

For example, if the secret information is a key, i.e., a content key Kc, to be applied to decryption of encrypted content, the management center generates and supplies a set of cipher texts obtained by encrypting the content key Kc with a plurality of subset keys. For example, cipher texts

$E(SK_{a,b}, Kc), E(SK_{c,d}, Kc), E(SK_{e,f}, Kc)$

are generated, and supplied through network distribution or a recording medium storing them. It should be noted that E (A, B) means data B encrypted with a key A. The above example represents a cipher text set consisting of three cipher texts encrypted by applying three different subset keys.

The subset keys $SK_{a,b}$, $SK_{c,d}$, $SK_{e,f}$ are subset keys corresponding to subsets selected by the management center (TC) , respectively, in order to set specific equipment as revoked equipment.

A receiver except the equipment for revocation can generate any of the subset keys applied to the encryption of the cipher texts on the basis of the labels the receiver holds (the labels and one intermediate label) , and only an authorized, selected receiver except the revoked equipment can acquire the content key Kc by decrypting any cipher text included in

$E(SK_{a,b}, Kc), E(SK_{c,d}, Kc), E(SK_{e,f}, Kc)$

Subsets used to revoke receivers u5, u11, u12 in a hierarchical tree configuration in which the total number of receivers is set to N=16 are shown in Fig. 32. The subsets used to revoke the receivers u5, u11, u12 are two subsets, which are $S_{2,20}$ and $S_{3,13}$ shown in Fig. 32.

Nonrevoked receivers are included in either of the two subsets $S_{2,20}$ and $S_{3,13}$, and the revoked receivers u5, u11, u12 are included in none of them. Thus, if secret information is encrypted using subset keys $SK_{2,20}$ and $SK_{3,13}$ corresponding to these subsets and then transmitted, only the nonrevoked receivers can decrypt the cipher texts to obtain the secret information.

A procedure for the information distributing processing is described with reference to a flow shown in Fig. 33. Each of steps in the flow shown in Fig. 33 is described.

First, in step S601, the management center (TC) selects revoked receivers, i.e., excluded equipment to which secret information for transmission is not supplied. It should be noted that all the receivers are set so as to correspond to the leaves of the hierarchical tree, respectively.

Next, in step S602, the management center determines subsets to be applied at the time of distribution of the secret information on the basis of the leaf positions in the hierarchical tree, corresponding to the determined revoked receivers. For example, in the example of Fig. 32, the receivers u5, u11, u12 are selected as the revoked receivers, and the subsets to be applied are the two subsets $S_{2,20}$ and $S_{3,13}$.

In step S603, the management center selects subset keys corresponding to the determined subsets. The management center (TC) holds the subset keys corresponding to the subsets beforehand. For example, in the example of Fig. 32, two subset keys $SK_{2,20}$ and $SK_{3,13}$ corresponding to the two subsets $S_{2,20}$ and $S_{3,13}$. are selected.

Next, in step S604, the management center generates a cipher text set by encrypting the secret information while using the subset keys selected in step S603. For example, in the example of Fig. 32, a cipher text set is generated by encrypting the secret information while using the two subset keys $SK_{2,20}$ and $SK_{3,13}$. In the example of Fig. 32, the following set of cipher texts

$E(SK_{2,20}, Kc) , E(SK_{3,13}, Kc)$

is generated by encrypting the secret information (e.g., a content key Kc) while using the two subset keys $SK_{2,20}$ and $SK_{3,13}$.

In step S605, the management center transmits (broadcasts) the cipher text set generated in step S604 to the receivers. The cipher text set to be transmitted is constituted by cipher texts decryptable only by the receivers excluding the revoked equipment. The revoked equipment cannot decrypt any of the cipher texts, and thus secure information distribution is enabled.

It should be noted that in transmitting the cipher text set, the subset specifying information contained in each cipher text as information about arrangement of the subset-corresponding cipher texts may be transmitted together. Each receiver can easily extract a cipher text to which a subset key generable by itself is applied, on the basis of this specifying information. As a specific scheme therefor, a configuration using key specifying codes disclosed in, e.g., Japanese Patent Application Publication No. 2001-352322 may be applicable.

It should be noted that the subset keys used for the encryption may be those produced during the setup phase and kept in custody by the management center (TC) , or may be derived from subset-based labels which have been produced during the setup phase and kept in custody, by using the pseudo-random number generator G.

It should be noted that if there is no revoked receiver, the secret information is encrypted using the aforementioned subset key $SK_{1,\phi} = G_M$ ($LABEL_{1,\phi}$) = $G_M$ ((Hc ($IL_{1,\phi}$) for the second special subset $SS_{1,\phi}$.

(11-3) Receiving and decrypting processing

Any nonrevoked receiver belongs to only one of the above-mentioned subsets. Thus, if a cipher text produced using a subset key corresponding to that subset is decrypted, the receiver can obtain the secret information. In order for the receiver to find the cipher text for decryption, the receiver may only have to use the aforementioned subset specifying information. After having designated the cipher text, the receiver derives the subset key from any of the labels or the intermediate label which it owns, and decrypts the cipher text using this subset key. A method for deriving the subset key is described below.

First, a receiver um determines whether or not the node j of the subset $S_{i,j}$ corresponding to any subset key $SK_{i,j}$ to be obtained for application to the cipher text decrypting processing falls under either of (A) and (B) mentioned below. The receiver judges whether the node j

(A) is a descendant of a node k for which the receiver directly has a label $LABEL_{i,k}$ (a case where j = k is included), or
(B) matches with a node k which is one of the child nodes of the node i and which is a node not existing in a path from a leaf n to which the receiver is assigned to the root (i.e., the sibling node of the child node of the node i existing in the path), or is a descendant thereof (i.e., the node j is a descendant of the node k constituting any first subset $SS_{i,k}$ among the subsets for which the receiver um is given labels in the SD scheme).

It should be noted that the node j is deemed to fall under (B), if there is no revoked receiver and thus the subset key $SK_{1,\phi}$ for the second special subset $SS_{i,\phi}$ is used for the encryption.

In the case of (B), intermediate labels for the special subsets $SS_{i,k}$ are derived from the intermediate label $IL_{P(n),S(n)}$ given to the receiver, as described below.

First, if i = P(n), j = k = S(n), the receiver already has this intermediate label (= node-corresponding value NV), and thus does not need to do anything particular. Otherwise, the receiver applies the published function F, i.e., the aforementioned (Eq. 1) , to the intermediate label $IL_{P(n),S(n)}$, to sequentially calculate intermediate labels (= node-corresponding values NV) corresponding to the higher-rank subsets. For the intermediate label $IL_{p(n),s(n)}$ owned by the receiver, an intermediate label $IL_{P(P(n)),S(P(n))}$ for a special subset $SS_{p(p(n)),s(p(n))}$ which initiates at the parent node P(P (n)) of the parent node P (n) of a leaf to which the receiver is assigned and which corresponds to the sibling node S(P (n)) of the node P (n) , can be obtained by the following expression in which the node-corresponding value NV in the aforementioned Eq. 1 is substituted for by the intermediate label, i.e.,

[Math 65]

$$IL_{P(P(n)),S(P(n))} = (IL_{P(n),S(n)})^2 + H(n \| salt_n)) \bmod M$$

··· (Eq. 5)

This is based on the above-mentioned relational expression (Eq. 1) for the node-corresponding values in the Rabin Tree described earlier.

Furthermore, the node-corresponding values NV (intermediate labels) for higher-rank nodes are calculated on the basis of the node-corresponding values NV (intermediate labels) for lower-rank nodes. For example, calculation of the node-corresponding values NV (intermediate labels) for higher-rank nodes (node number = 1, 2, 4, 9) in the receiver u4 shown in Fig. 30 is executed according to the following procedure.

(a1) $NV_9$ (= intermediate label $IL_{4,8}$) = $((NV_{19})^2 + H(19 \| salt_{19})$ mode M

(a2) $NV_4$ (= intermediate label $IL_{2,5}$) = $((NV_9)^2 + H(9 \| salt_9)$ mode M

(a3) $NV_2$ (= intermediate label $IL_{1,3}$) = $((NV_4)^2 + H(4 \| salt_4)$ mode M

(a4) $NV_1$ (= intermediate label $IL_{1,\phi}$) = $((NV_2)^2 + H(2 \| salt_2)$ mode M

Through a computation based on the above expressions, the node-corresponding values for the higher-rank nodes are calculated from the node-corresponding values for the lower-rank nodes, and furthermore, the labels (LABEL) can be calculated from the node-corresponding values (intermediate labels) for the respective nodes, by the following expressions.

(b1) $LABEL_{9,18} = Hc(IL_{9,18})$

(b2) $LABEL_{4,8} = Hc(IL_{4,8})$

(b3) $LABEL_{2,5} = Hc(IL_{2,5})$

(b4) $LABEL_{1,3} = Hc(IL_{1,3})$

(b5) $LABEL_{1,\phi} = Hc(IL_{1,\phi})$

In this way, an intermediate label $IL_{P(P(y)),S(P(y)}$ for a special subset $SS_{P(P(y)),S(P(y))}$ which initiates at a certain node y and its parent node (when y exists, the parent node P(P(y)) of a node P (y) ) and which corresponds to the sibling node S (P (y) ) of the node P (y) can be obtained by the following expression.

[Math 66]

$$IL_{P(P(y)),S(P(y))} = (IL_{P(y),S(y)})^2 + H(y \| salt_y)) \bmod M$$

Note here that the node y includes nodes existing in a path from the leaf to which the receiver is assigned to the root.

Moreover, for the intermediate label $IL_{1,2}$ or the intermediate label $IL_{1,3}$, the intermediate label $IL_{1,\phi}$ = K corresponding to the second special subset $SS_{1,\phi}$ can be obtained by the following expressions.

$$IL_{1,\phi} = ((IL_{1,2})^2 + H(3 \| salt_3) \bmod M$$

$$IL_{1,\phi} = ((IL_{1,3})^2 + H(2 \| salt_2) \bmod M$$

Specific intermediate label acquiring processing executed by a receiver is described with reference to Fig. 32. A receiver u4 assigned to a leaf 19 holds an intermediate label $IL_{9,18}$. By a computation using the modulus M, the encryption exponent e as the published parameters and the node number, the receiver can obtain an intermediate label $IL_{4,8}$ for a subset $S_{4,8}$ determined by the parent node 4 and the sibling node 8 of a node 9 as

$$IL_{4,8} = ((IL_{9,18})^2 + (19 \| salt_{19}) \bmod M$$

Similarly, the receiver can obtain an intermediate label $IL_{2,5}$ for a subset $S_{2,5}$ determined by the parent node 2 and the sibling node 5 of the node 4 as

$$IL_{2,5} = ((IL_{4,8})^2 + (9 \| salt_9) \bmod M$$

By repeating this processing, the receiver u4 can obtain higher-rank intermediate labels $IL_{1,3}$ and $IL_{1,\phi}$.
Once the receiver has derived the intermediate label $IL_{i,k}$ corresponding to any subset $S_{i,k}$ in the above way, the receiver obtains a label $LABEL_{i,k}$ as

$$LABEL_{i,k} = Hc\ (IL_{i,k})$$

Then, as described earlier with reference to Fig. 22, the receiver obtains the label $LABEL_{i,j}$ for a necessary subset $S_{i,j}$ using the pseudo-random number generator G, and further obtains a subset key $SK_{i,j}$ for that subset by

$$SK_{i,j} = G_M(LABEL_{i,j})$$

to decrypt the cipher text using this subset key $SK_{i,j}$.
A specific example of subset key deriving processing is described with reference to Fig. 34. As shown in Fig. 34, let it be supposed that receivers u2, u11, u12 are revoked, and that cipher texts encrypted using subset keys corresponding to a subset $S_{2,17}$ and a subset $S_{3,13}$ are distributed by broadcasting.
A receiver u4 holds six labels $LABEL_{1,5}$, $LABEL_{1,8}$, $LABEL_{1,18}$, $LABEL_{2,8}$, $LABEL_{2,18}$, $LABEL_{4,18}$, and one intermediate label $IL_{9,18}$ from which $IL_{1,\phi}$, $IL_{1,3}$, $IL_{2,5}$, $IL_{4,8}$ can be derived. The receiver u4 corresponds to (A) mentioned above. Namely, the receiver u4 directly holds, for the subset $S_{2,17}$, the label $LABEL_{2,8}$ using a node 8 which is an ancestor of a node 17, and thus, by applying the pseudo-random number generator G to this label as many times as required, the receiver u4 can obtain a subset key $SK_{2,17}$.
Moreover, under the same setting, a receiver u5 holds six labels $LABEL_{1,4}$, $LABEL_{1,11}$, $LABEL_{1,21}$, $LABEL_{2,11}$, $LABEL_{2,21}$, $LABEL_{5,21}$, and one intermediate label $IL_{10,21}$ (= node-corresponding value $NV_{20}$) from which $IL_{1,\phi}$, $IL_{1,3}$, $IL_{2,4}$, $IL_{5,11}$ can be derived. The receiver u5 corresponds to (B) mentioned above. Namely, the receiver u5 does not directly hold any label $LABEL_{2,k}$ using a node k which is an ancestor of the node 17, for the subset $S_{2,17}$. For this reason, the receiver first derives the intermediate label $IL_{2,4}$ corresponding to the node 4, which is an ancestor of the node 17, from the intermediate label $IL_{10,21}$ (= node-corresponding value $NV_{20}$) which it holds, using the earlier-mentioned technique, and then obtains the label $LABEL_{2,4}$, after which by applying the pseudo-random number generator G to this label as many times as required, it can obtain the subset key $SK_{2,17}$.
If there is no revoked receiver at all and thus the second special subset $SS'_{1,\phi}$ is used as the subset, the receiver um obtains the intermediate label $IL_{1,\phi}$ (node-corresponding value $NV_1$) by the above-mentioned processing, and using this intermediate label, the receiver calculates the label $LABEL_{1,\phi}$ as

$$\text{label } LABEL_{1,\phi} = Hc\ (IL_{1,\phi})$$

and then inputs this to the pseudo-random number generator G, to obtain C bits in the middle part of its output. Namely, the receiver obtains the subset key $SK_{1,\phi}$ corresponding to the subset $S_{1,\phi}$ by

$$SK_{1,\phi} = G_M(LABEL_{1,\phi})$$

and uses this to decrypt the cipher text.

A procedure for the cipher text receiving through subset key acquiring and cipher text decrypting processing executed by a receiver is described with reference to a flowchart of Fig. 35.

When having received the cipher texts in step 701, the receiver determines, in step S702, one of the plurality of cipher texts it will decrypt, from a cipher text set consisting of the plurality of cipher texts. This is processing for extracting a cipher text encrypted with a subset key which it can generate. Here, the fact that the receiver cannot determine a cipher text for decryption means that the receiver is revoked. This cipher text selecting processing is executed on the basis of, e.g., the subset specifying information conveyed together with the cipher texts.

Once the cipher text has been determined, the receiver derives the subset key used for encrypting that cipher text, using the above-mentioned technique, in step S703.

Adetailedprocedure for the subset keyderivingprocessing is described with reference to Fig. 36. First, in step S801, a receiver um judges whether or not the node j of the subset $S_{i,j}$ corresponding to any subset key $SK_{i,j}$ to be obtained for application to the cipher text decrypting processing

(A) is a descendant of a node k for which the receiver directly has a label $LABEL_{i,k}$ (a case where j = k is included), or
(B) matches with a node k which is one of the child nodes of the node i and which is a node not existing in a path from a leaf n to which the receiver is assigned to the root (i.e., the sibling node of the child node of the node i existing in the path), or is a descendant thereof (i.e., the node j is a descendant of the node k constituting any first subset $SS_{i,k}$ among the subsets for which the receiver um is given labels in the SD scheme).
It should be noted that if there is no revoked receiver and thus the subset key $SK_{1,\phi}$ for the second special subset $SS'_{1,\phi}$ is used for encrypting secret information, the node j is deemed to be (B).

In the case of (A) , the processing proceeds to step S803, in which the receiver obtains a necessary subset key by applying the pseudo-random number generator G as many time as required on the basis of a label owned by the receiver.

In the case of (B) , the processing proceeds to step S804, in which the receiver calculates a necessary intermediate label corresponding to a special subset by applying the aforementioned expression (Eq. 1 (= Eq. 5) ) on the basis of the intermediate label $IL_{P(n),S(n)}$ (= node-corresponding value $NV_n$). Furthermore, in step S805, the receiver calculates a label LABEL corresponding to that subset by computing the calculated intermediate label, and in step S806, obtains the necessary subset key by applying the pseudo-random number generator G on the basis of the calculated label.

Returning to the flow of Fig. 35, the receiver having derived the subset key by the above-mentioned processing, decrypts, in step S704, the cipher text selected from the cipher text set in step S702, using the subset key derived in step S703, to obtain the transmitted secret information. The secret information is, e.g., a content key for decrypting encrypted content of a television broadcasting system. And in this case, the receiver receives the encrypted content, and decrypts it using the content key for output.

Next, referring to Figs. 37, 38, the functional configurations are described of an information processing apparatus for executing the label setting processing, the cipher text generating processing, and of an information processing apparatus as a receiver for executing the cipher text decrypting processing.

First, referring to Fig. 37, the configuration of the information processing apparatus for executing the label setting processing, the cipher text generating processing is described. An information processing apparatus 710 has a one-way tree (Rabin Tree) generating means 711, an intermediate label and label generating means 712, a labels-for-supply determining means 713, a cipher text generating means 714, a cipher text supplying means 715.

The information processing apparatus 710 is an information processing apparatus for executing processing for supplying cipher texts decryptable only by certain selected equipment except excluded (revoked) equipment, by applying a Broadcast Encryption scheme based on a hierarchical tree configuration. The one-way tree (Rabin Tree) generating means 711 generates a Rabin Tree as a one-way tree through which node-corresponding values NV corresponding to nodes constituting the hierarchical tree is made derivable (see Eq. 1) by applying the node-corresponding value NV and node-added variable salt for at least one lower-rank node.

The intermediate label and label generatingmeans 712 sets, as calculated values based on intermediate labels, values of labels corresponding to special subsets, among labels (LABEL) respectively corresponding to the subsets set on the basis of the SD (Subset Difference) scheme to which the hierarchical tree is applied.

Each of the special subsets selected by the intermediate label and label generating means 712 is at least either of a first special subset which is among subsets $S_{i,j}$ each of which is defined by excluding a subtree rooted at a node j lower than a node i from a subtree rooted at the node i in the hierarchical tree, and in which the nodes i and j bear a direct descendant parent-child relationship in the hierarchical tree, and

the second special subset, which is a subset $S_{1,\phi}$ defined as the entire-tree set including all the leaves in the hierarchical tree and thus rooted at the root.

The intermediate label and label generating means 712 generates, as node-corresponding values NV of a Rabin Tree, intermediate labels which correspond to the labels corresponding to the special subsets, among the labels (LABEL) respectively corresponding to the subsets set on the basis of the SD (Subset Difference) scheme, to be derived using the hash function H.

Specifically, the one-way tree (Rabin Tree) generating means 711 generates the Rabin Tree in which the node-corresponding values are set according to the algorithm described earlier with reference to the flow of Fig. 8, to calculate each node-corresponding value. The intermediate label and label generating means 712 sets the node-corresponding value as the one intermediate label corresponding to the special subsets. Namely, the node-corresponding value is applied as the one intermediate label from which the labels of the above-mentioned first special subset $SS_i$, and second special subset $SS_{1,\phi}$ are calculable.

Furthermore, the labels for the special subsets are calculated using the mapping function Hc based on the intermediate labels. Thereafter, by a computation in which the pseudo-random number generator G is applied to these labels corresponding to the special subsets, the labels respectively corresponding to the subsets are sequentially calculated. This is the processing which has been described earlier with reference to Fig. 22.

The labels-for-supply determining means 713 executes processing for determining labels for supply to a receiver corresponding to a terminal node of the hierarchical tree. The labels-for-supply determining means 713 determines special subset non-corresponding labels which do not correspond to the special subsets, and one intermediate label (= node-corresponding value) from which labels corresponding to the special subsets are calculable, as the labels for supply to the receiver.

Specific processing by the labels-for-supply determining means 713 is as follows. First, the labels $LABEL_{i,j}$ for the subsets $S_{i,j}$ each of which initiates at any internal node i in a path m (path-m) from a leaf to which a receiver um is assigned to the root, and each of which corresponds to the node j directly branching from any node in a path from this leaf to i, and the label $LABEL_{1,\phi}$ corresponding to the subset $SS_{1,\phi}$ used where there is no revoked receiver and thus corresponding to the entire tree including all the receivers are set as the tentatively selectedlabels. Then, from these tentatively selected labels, the special subset non-corresponding labels which do not correspond to the special subsets are selected as the labels for supply. Furthermore, one intermediate label (= node-corresponding value) is selected, from which the labels corresponding to the special subsets are calculable. These are determined as the final labels for supply to the receiver um.

The cipher text generating means 714 executes encrypting processing by selectively applying subset keys derivable from the labels generated by the intermediate label and label generating means 712, to generate cipher texts. The cipher text supplying means 715 supplies the thus generated cipher texts through a network or a medium storing them.

Next, referring to Fig. 38, the functional configuration of the information processing apparatus as a receiver for executing the cipher text decrypting processing is described.

An information processing apparatus 720 as a receiver for executing the cipher text decrypting processing has a cipher text selectingmeans 721, a label calculatingmeans 722, a subset key generating means 723, a decrypting means 724, a label memory 725.

The information processing apparatus 720 as a receiver for executing the cipher text decrypting processing is an information processing apparatus 720 for executing the processing for decrypting cipher texts encrypted with subset keys respectively corresponding to the subsets set on the basis of the SD (Subset Difference) scheme, which is a Broadcast Encryption scheme based on a hierarchical tree configuration. The cipher text selecting means 721 selects, from the cipher texts for processing, a cipher text generated by applying a subset key derivable by the pseudo-random number generating processing based on any label held in its label memory 725 or any label calculable from the one intermediate label which it holds.

The label calculating means 722 executes, if the subset key applied to the cipher text is not a subset key derivable by the pseudo-random number generating processing based on the label held, the computational processing based on the intermediate label $IL_{P(n),S(n)}$ (= node-corresponding value $NV_n$) given to the receiver, to calculate a necessary intermediate label corresponding to a special subset.

Specifically, the necessary intermediate label corresponding to the special subset is calculated by applying the aforementioned expression (Eq. 5) on the basis of the intermediate label $IL_{P(n),s(n)}$ (= node-corresponding value $NV_n$) given to the receiver and stored in the label memory 725. Furthermore, through a computation in which the mapping function Hc is applied to the calculated intermediate label, a label LABEL corresponding to that subset is calculated.

The subset key generating means 723 obtains the necessary subset key by applying the pseudo-random number generator G on the basis of the label stored in the label memory 725 or the label LABEL calculated from the intermediate label by the label calculating means 722.

The decrypting means 742 executes the cipher text decrypting processing on the basis of the subset key calculated by the subset key generating means 723.

In Fig. 39, there is shown a hardware configuration example of an information processing apparatus 800 that executes the cipher text generating processing, and that serves as a receiver for executing the cipher text decrypting processing. Blocks enclosed by dotted lines in the drawing are not necessarily equipped. For example, a media interface 807 is equipped if the receiver 800 is an optical disk player or the like. An input/output interface 803 is equipped if the receiver 800 exchanges information with other equipment or receives signals through an antenna. The key item is a secure storage unit 804, in which data, e.g., node keys, node-corresponding values, or labels, given by the management center (TC) during the setup phase are kept in custody securely.

The information processing apparatus 800 includes, as shown in Fig. 39, a controller 801, a computation unit 802, the input/output interface 803, the secure storage unit 804, amain storage unit 805, adisplaydevice 806, the media interface 807.

The controller 801 includes, e.g., a CPU having a function as a control unit for executing data processing according to a computer program. The computation unit 802 functions as a dedicated computation unit and encrypting processing unit for, e.g., generating encryption keys, generating random numbers, and performing encrypting processing. The unit 802 executes the label and intermediate label calculating processing, the subset key calculating processing based on labels. Furthermore, if the information processing apparatus 800 is an information processing apparatus as a receiver, the unit 802 executes the cipher text decrypting processing based on subset keys.

The input/output interface 803 is an interface dealing with data input from input means such as a keyboard, a mouse, data output to an external output apparatus, data transmission/reception processing via a network.

If the information processing apparatus 800 is an information processing apparatus for executing the cipher text generating processing, the secure storage unit 804 stores, in the CS scheme, data to be held safely or confidentially, such as, e.g., node keys, various IDs generated during the setup phase. And the secure storage unit 804 stores, in the SD scheme, one intermediate label from which labels (LABEL) corresponding to special subsets selected from the subsets are generable, and labels (LABEL) not corresponding to the special subsets.

It should be noted that if the information processing apparatus 800 is an information processing apparatus as a receiver, node keys for storage in the secure storage unit 504 are only those which cannot be calculated from the node key held, on the basis of the one-way function F, among node keys for nodes included in path nodes m [PathNodes-m] corresponding to the receiver um, in the CS scheme. Moreover, in the SD scheme, there are stored data to be held safely or confidentially, such as, e.g., the node-corresponding value (intermediate label), labels, various IDs, given by the management center (TC) . As to the intermediate label, an intermediate label from which labels (LABEL) corresponding to special subsets selected from subsets are generable, and labels (LABEL) not corresponding to the special subsets are stored.

If the information processing apparatus 800 is an information processing apparatus as a receiver and is so configured as to be ready for the SD scheme, the labels generated on the basis of the intermediate label stored in the secure storage unit 804 are the labels (LABEL) corresponding to the special subsets, which specifically are the labels corresponding to the following special subsets (a), (b)

(a) a first special subset which is among subsets $S_{i,j}$ each of which is defined by excluding a subtree rooted at a node j lower than a node i from a subtree rooted at the node i in the hierarchical tree, and in which the nodes i and j bear a direct descendant parent-child relationship in the hierarchical tree, and

(b) the second special subset, which is a subset $S_{1,\phi}$ defined as an entire-tree set including all the leaves in the hierarchical tree and thus rooted at the root.

The main storage unit 805 is a memory area used for, e.g., a data processing program executed by the controller 801, temporarily stored processing parameters, a working area for program execution and the like. The secure storage unit 804 and the main storage unit 805 are memories including, e.g., a RAM, a ROM and the like. The display device 806 is used for outputting decrypted content and the like. The media interface 807 provides a read/write function for media such as a CD, a DVD, an MD.

[12. Cryptography distributing, decrypting processing according to SD scheme using Rabin Tree Configuration Example 2]

Next, a cipher text distributing, decrypting processing example in which the Rabin Tree Configuration Example 2 is applied to the SD scheme is described. A Rabin Tree herein applied is the aforementioned Rabin Tree Configuration Example 2, i.e., the Rabin Tree Configuration Example 2 described in [5. Configuration of CS scheme to which Rabin Tree Configuration Example 2 is applied], and thus is the Rabin Tree generated according to the algorithm described with reference to the flow of Fig. 17. The cipher text distributing, decrypting processing in which the Rabin Tree Configuration Example 2 is applied to the SD scheme includes the following phases

(12-1) Setup processing
(12-2) Information distributing processing
(12-3) Receiving and decrypting processing

Since "(12-1) Setup processing" and "(12-2) Information distributing processing" are substantially similar to the setup and the information distribution described earlier in the item [11. Cipher text distributing processing in which Rabin Tree Configuration Example 1 is applied to SD scheme], these phases are described in a simpler way.

(12-1) Setup processing

Setup processing is basically similar to that described in the item "(11-1) Setup processing" in the aforementioned [11. Cipher text distributing processing in which Rabin Tree Configuration Example 1 is applied to SD scheme], except the processing for setting the Rabin Tree configuration described in the above-mentioned [5. Configuration of CS scheme to which Rabin Tree Configuration Example 2 is applied]. The setup processing is performed only once at the time of start-up of a system. The subsequent information distributing, and receiving and decrypting processing is executed every time information to be transmitted occurs. For example, the latter processing is executed, e.g., every time information recording media, such as DVDs, having new content stored therein are to be delivered, or every time new information is to be distributed via a network.

The Rabin Tree Configuration Example 2 is set according to the processing sequence described earlier with reference to Fig. 17. As a result, the Rabin Tree as a one-way tree shown in Fig. 9 is set. The nodes are set so as to correspond to |M|-bit numbers (node-corresponding values) : $NV_1$, $NV_2$, ···, $NV_{2N-1}$, and (node-added variables) : $salt_2$, $salt_3$, ···, $salt_{2N-1}$. It is easy to obtain, from the values $NV_1$ and $salt_1$ for a certain node, the node-corresponding value for its parent node, but the reverse operation is difficult.

A flow for the setup processing performed by the management center (TC) is similar to that of Fig. 31 described earlier. However, there is a difference that the hierarchical tree set in step S501 is the Rabin Tree Configuration Example 2 according to the processing sequence described earlier with reference to Fig. 17.

(12-2) Information distributing processing

Information distribution, i.e., transmission of secret information is performed by the management center (TC) broadcasting at least one cipher text. This processing is similar to that described in the item "(11-2) Information distributing processing" in [11. Cipher text distributing processing in which Rabin Tree Configuration Example 1 is applied to SD scheme].

Each of the cipher texts is obtained by encrypting the secret information with one of subset keys. For example, the secret information transmitted by the management center is constituted as a set of a plurality of cipher texts obtained by encrypting the same secret information for transmission using different subset keys, respectively.

For example, if the secret information is a key, i.e., a content key Kc, to be applied to decryption of encrypted content, the management center generates and supplies a set of cipher texts obtained by encrypting the content key Kc with a plurality of subset keys. For example, cipher texts
$E(SK_{a,b}, Kc)$, $E(SK_{c,d}, Kc)$, $E(SK_{e,f}, Kc)$
are generated, and supplied through network distribution or a recording medium storing them. It should be noted that E (A, B) means data B encrypted with a key A. The above example represents a cipher text set consisting of three cipher texts encrypted by applying three different subset keys.

The subset keys $SK_{a,b}$, $SK_{c,d}$, $SK_{e,f}$ are subset keys corresponding to subsets selected by the management center (TC) , respectively, in order to set specific equipment as revoked equipment.

A receiver except the equipment for revocation can generate any of the subset keys applied to the encryption of the cipher texts on the basis of the labels the receiver holds (the labels and one intermediate label), and only an authorized, selected receiver except the revoked equipment can acquire the content key Kc by decrypting any cipher text included in
$E(SK_{a,b}, Kc)$, $E(SK_{c,d}, Kc)$, $E(SK_{e,f}, Kc)$

As described earlier with reference to Fig. 32, the subsets used to revoke the receivers u5, u11, u12 in the hierarchical tree configuration in which the total number of receivers is set to N=16 are the two subsets, which are $S_{2,20}$ and $S_{3,13}$ shown in Fig. 32.

The nonrevoked receivers are included in either of the two subsets $S_{2,20}$ and $S_{3,13}$, and the revoked receivers u5, u11, u12 are included in none of them. Thus, if secret information is encrypted using subset keys $SK_{2,20}$ and $SK_{3,13}$ corresponding to these subsets and then transmitted, only the nonrevoked receivers can decrypt the cipher texts to obtain the secret information.

A procedure for the information distributing processing is similar to that described earlier with reference to the flow shown in Fig. 33. It should be noted that in transmitting the cipher text set, subset specifying information included in each cipher text as information about arrangement of the subset-corresponding cipher texts may be transmitted together. Each receiver can easily extract a cipher text to which a subset key generable by itself is applied, on the basis of this specifying information. As a specific scheme therefor, a configuration using key specifying codes disclosed in, e.g., Japanese Patent Application Publication No. 2001-352322 may be applicable.

It should be noted that the subset keys used for the encryption may be those produced during the setup phase and kept in custody by the management center (TC), or may be derived from subset-based labels which have been produced during the setup phase and kept in custody, by using the pseudo-random number generator G.

It should be noted that in the case where there is no revoked receiver, the secret information is encrypted using the aforementioned subset key $SK_{1,\phi} = G_M$ ($LABEL_{1,\phi}$) = $G_M$ ((Hc ($IL_{1,\phi}$) for the second special subset $SS_{1,\phi}$.

(12-3) Receiving and decrypting processing

Any nonrevoked receiver belongs to only one of the above-mentioned subsets. Thus, if a cipher text produced using a subset key corresponding to that subset is decrypted, the receiver can obtain the secret information. In order for the receiver to find the cipher text for decryption, the receiver may only have to use the aforementioned subset specifying information. After having designated the cipher text, the receiver derives the subset key from any of the labels or the intermediate label which it owns, and decrypts the cipher text using this subset key. A method for deriving the subset key is described below.

First, a receiver um determines whether or not the node j of the subset $S_{i,j}$ corresponding to any subset key $SK_{i,j}$ to be obtained for application to the cipher text decrypting processing falls under either of (A) and (B) mentioned below. The receiver judges whether the node j

(A) is a descendant of a node k for which the receiver directly has a label $LABEL_{i,k}$ (a case where j = k is included) , or
(B) matches with a node k which is one of the child nodes of the node i and which is a node not existing in a path from a leaf n to which the receiver is assigned to the root (i.e., the sibling node of the child node of the node i existing in the path), or is a descendant thereof (i.e., the node j is a descendant of the node k constituting any first subset $SS_{i,k}$ among the subsets for which the receiver um is given labels in the SD scheme).

It should be noted that the node j is deemed to fall under (B), if there is no revoked receiver and thus the subset key $SK_{1,\phi}$ for the second special subset $SS_{i,\phi}$ is used for the encryption.

In the case of (B), intermediate labels for the special subsets $SS_{i,k}$ are derived from the intermediate label $IL_{P(n),S(n)}$ given to the receiver, as described below.

First, if i = P(n), j = k = S(n), the receiver already has this intermediate label (= node-corresponding value NV), and thus does not need to do anything particular. Otherwise, the receiver applies the published function F, i.e., the aforementioned (Eq. 3), to the intermediate label $IL_{P(n),S(n)}$, whereby to sequentially calculate intermediate labels (= node-corresponding values NV) corresponding to the higher-rank subsets. For the intermediate label $IL_{P(n),S(n)}$ owned by the receiver, an intermediate label $IL_{P(P(n)),S(P(n))}$ for a special subset $SS_{P(P(n)),S(P(n))}$ which initiates at the parent node P(P(n)) of the parent node P (n) of a leaf to which the receiver is assigned and which corresponds to the sibling node S(P(n)) of the node P (n) , can be obtained by the following expression in which the node-corresponding value NV in the aforementioned Eq. 3 is substituted for by the intermediate label, i.e.,

[Math 67]

$$IL_{P(P(n)),S(P(n))} = (IL_{P(n),S(n)})^2 \oplus H^{salt_n}(n)) \bmod M$$

··· (Eq. 6)

This is based on the above-mentioned relational expression for the node-corresponding values in the Rabin Tree Configuration Example 2 described earlier.

[Math 68]

$$NV_{\lfloor l/2 \rfloor} = (NV_l^{\,2} \oplus H^{salt\ l}(l)) \bmod M$$

Furthermore, the node-corresponding values NV (intermediate labels) for higher-rank nodes are calculated on the basis of the node-corresponding values NV (intermediate labels) for lower-rank nodes. For example, calculation of the node-corresponding values NV (intermediate labels) for higher-rank nodes (node number = 1, 2, 4, 9) in a receiver u4 shown in Fig. 40 is executed according to the following procedure.

(a1) $NV_9$ (= intermediate label $IL_{4,8}$) = $((NV_{19})^2$ XOR $H^{salt19}$ $(19))$ mode M

(a2) $NV_4$ (= intermediate label $IL_{2,5}$) = $((NV_9)^2$ XOR $H^{salt9}$ $(9))$ mode M

(a3) $NV_2$ (= intermediate label $IL_{1,3}$) = $((NV_4)^2$ XOR $H^{salt4}$ $(4))$ mode M

(a4) $NV_1$ (= intermediate label $IL_{1,\phi}$) = $((NV_2)^2$ XOR $H^{salt2}$ $(2))$ mode M

Through a computation based on the above expressions, the node-corresponding values for the higher-rank nodes are calculated from the node-corresponding values for the lower-rank nodes, and furthermore, the labels (LABEL) can be calculated from the node-corresponding values (intermediate labels) for the respective nodes, by the following expressions.

(b1) $LABEL_{9,18}$ = Hc $(IL_{9,18})$

(b2) $LABEL_{4,8}$ = Hc $(IL_{4,8})$

(b3) $LABEL_{2,5}$ = Hc $(IL_{2,5})$

(b4) $LABEL_{1,3}$ = Hc $(IL_{1,3})$

(b5) $LABEL_{1,\phi}$ = Hc $(IL_{1,\phi})$

In this way, an intermediate label $IL_{P(P(y)),S(P(y))}$ for a special subset $SS_{P(P(y)),S(P(y))}$ which initiates at a certain node y and its parent node (when y exists, the parent node P(P(y)) of a node P (y) ) and which corresponds to the sibling node S (P(y)) of the node P (y) can be obtained by the following expression.

[Math 69]

$$IL_{P(P(y)),S(P(y))} = (IL_{P(y),S(y)})^2 \oplus H^{salt_y}(y)) \bmod M$$

Note here that the node y includes nodes existing in a path from the leaf to which the receiver is assigned to the root.

Moreover, for the intermediate label $IL_{1,2}$ or the intermediate label $IL_{1,3}$, the intermediate label $IL_{1,\phi}$ = K corresponding to the second special subset $SS_{1,\phi}$ can be obtained by the following expressions.

$$IL_{1,\phi} = ((IL_{1,2})^2 - H^{salt3}(3) \bmod M$$

$$IL_{1,\phi} = ((IL_{1,3})^2 - H^{salt2}(2) \bmod M$$

Specific intermediate label acquiring processing executed by a receiver is described with reference to Fig. 40. The receiver u4 assigned to a leaf 19 holds an intermediate label $IL_{9,18}$. Through a computation using the modulus M, the encryption exponent e as the published parameters, and the node number, an intermediate label $IL_{4,8}$ for a subset $S_{4,8}$ determined by the parent node 4 and the sibling node 8 of a node 9 can be obtained as

$$IL_{4,8} = ((IL_{9,18})^2 - H^{salt19}(19) \bmod M$$

Similarly, an intermediate label $IL_{2,5}$ for a subset $S_{2,5}$ determined by the parent node 2 and the sibling node 5 of the node 4 can be obtained as

$$IL_{2,5} = ((IL_{4,8})^2 - H^{salt9}(9) \bmod M$$

By repeating this processing, the receiver u4 can obtain higher-rank intermediate labels $IL_{1,3}$ and $IL_{1,\phi}$.

Once the receiver has derived the intermediate label $IL_{i,k}$ corresponding to any subset $S_{i,k}$ in the above way, the receiver obtains a label $LABEL_{i,k}$ as

$$LABEL_{i,k} = Hc\ (IL_{i,k})$$

Then, as described earlier with reference to Fig.22, the receiver obtains the label $LABEL_{i,j}$ for a necessary subset $S_{i,j}$ using the pseudo-random number generator G, and further obtains a subset key $SK_{i,j}$ for that subset by

$$SK_{i,j} = G_M(LABEL_{i,j})$$

to decrypt the cipher text using this subset key $SK_{i,j}$.

A procedure for the cipher text receiving processing through the subset key acquiring, decrypting processing executed by the receiver has a sequence similar to that described earlier with reference to the flowchart of Fig. 35, except that expressions used for calculation are different.

[13. On effects of application of Rabin Tree Configuration Example 2]

In the cipher text distribution configuration according to the SD scheme using the above-mentioned Rabin Tree Configuration Example 2, the node-added variables (salt) set so as to correspond to the respective nodes are different from those in the aforementioned Rabin Tree Configuration Example 1. Namely, in the Rabin Tree Configuration Example 1,

[Math 70]

$$temp_l = (NV_{\lfloor l/2 \rfloor} - H(l \,\|\, salt_l)) \bmod M$$

determines, as $salt_1$, a minimum positive integer (or non-negative integer) such that $tmp_1 \in QR_M$. Here, let an example using a hash function, such as SHA-1 or MD5, as the function H be considered. Since SHA-1 or MD5 treats 512 bits as a block, if the size of an input exceeds 512 bits but is equal to or smaller than 1024 bits, a processing time about twice the case of an input of 512 bits or less is required.

Here, if the size of 1 is 512 bits, even if the size of $salt_1$ is some bits, the size of $1 \,\|\, salt_1$ exceeds 512 bits. When as many $salt_1$ are tested as the condition $tmp_1$ in $QR_M$ is satisfied, and if an A*th* $salt_1$ has satisfied the condition, the above setting would require a time as long as 2A operations of H using the input of 512 bits or less, even only for calculation of H.

By contrast, as in the present embodiment, when a node-added variable (salt) is set as aminimumpositive integer $salt_1$ such that $tmp_1$ is a quadratic residue modulo M in the following expression,

[Math 71]

$$temp_l = (NV_{\lfloor l/2 \rfloor} \oplus H^{salt_l}(l)) \bmod M$$

an input to H is only 1, which just equals 512 bits. Hence, the time required for performing one round of calculation of H is reduced to 1/2 compared to the aforementionedmethod (Rabin Tree Configuration Example 1). Here, if H outputs random values, each $salt_1$ is such that $tmp_1 \in QR_M$ with a probability of about 1/4, which is the same as in the aforementioned method (Rabin Tree Configuration Example 1), and thus it should be reminded that an expected value as a number of $salt_1$ to be tested, i.e., an expected value as a number of calculations of the function H is also the same.

[14. Outline of Basic Layered Subset Difference (Basic LSD) scheme]

Next, a Basic Layered Subset Difference (Basic LSD) scheme is outlined.

In a published literature [Advances in Cryptography - Crypto 2002, Lecture Notes in Computer Science 2442, Springer, 2002, pp.47-60 (D. Halevy and A. Schamir, "The LSD Broadcast Encryption Scheme")], a Layered Subset Difference scheme obtained by improving the SD scheme is proposed. The LSD scheme includes a Basic scheme and a General scheme which is an extension of the Basic scheme. Here, the Basic scheme is described.

The LSD scheme is an extension of the SD scheme, in which the concept of layers is introduced into the SD scheme. In a tree structure of the SD scheme, a specific depth is defined as a special level (Special Level). While there is only one kind of a Special Level in the Basic LSD scheme, a plurality of Special Levels with varying degrees of importance are used in the General LSD scheme.

Now, for ease of description, let $\log^{1/2}N$ be an integer. In the Basic LSD scheme, as shown in Fig. 41, among the levels from the root to leaves of a tree, levels occurring every $\log^{1/2}N$ including a root level and a leaf level are determined to be Special Levels. And a hierarchical portion interposed between any two adjacent Special Levels (including the Special Levels at both ends) is called a layer. In the example of Fig. 41, the root level, a level including a node k, and the leaf level are Special Levels, and the root level, a level including a node i, and the level including the node k form a single layer. Moreover, the level including the node k, a level including a node j, and the level including the leaves form another layer.

In the Basic LSD scheme, among subsets $S_{i,j}$ defined in the SD scheme, only those satisfying at least one of conditions (1) the nodes i and j belong to the same layer, and (2) the node i is at a Special Level, are defined. By so doing, some of the subsets used in the SD scheme are not defined in the Basic LSD scheme. However, such subsets can be represented by the union of two subsets, at most, defined in the Basic LSD scheme. For example, in the example of Fig. 29, a subset $S_{i,j}$ is not defined in the Basic LSD scheme, but can be represented as

$$S_{i,j} = S_{i,k} \cup S_{k,j}$$

using a node (node k) on the Special Level nearest to the node i in a path from the nodes I to j.

Namely, instead of one cipher text encrypted using a subset key $SK_{i,k}$ corresponding to a subset $S_{i,k}$ in the SD scheme, in the Basic LSD scheme, two cipher texts encrypted using subset keys $SK_{i,k}$ and $SK_{k,j}$ corresponding to subsets $S_{i,k}$ and $S_{k,j}$ are transmitted.

As a result of this technique, the number of cipher texts to be transmitted increases only two times, at most, that in the SD scheme, whereas the number of labels held by each receiver can be reduced compared with that in the above-mentioned SD scheme.

The number of labels held by each receiver in the SD scheme has been described earlier with reference to Fig. 24. Now, the number of labels held by each receiver in the Basic LSD scheme under the same setting is described with reference to Fig. 42. A receiver u4 in Fig. 42 may only have to hold labels $LABEL_{i,j}$ for cases where both i, j belong to the same layer or where i is at a Special Level. Namely, the labels held by the receiver u4 are $LABEL_{1,3}$, $LABEL_{1,5}$, $LABEL_{1,8}$, $LABEL_{1,18}$, $LABEL_{2,5}$, $LABEL_{4,8}$, $LABEL_{4,18}$, $LABEL_{9,18}$. Furthermore, similarly to the SD scheme, the receiver also needs to hold a special label used where there is no revoked receiver.

When the total number of receivers is set to N, the total number of labels which each receiver must hold can be obtained as follows. First, the number of labels per layer equals a number obtained by calculation using the following expression, since there are as many nodes j as the depths of i within the label once the node i has been determined.

[Math 72]

$$\sum_{i=1}^{\log^{1/2} N} i = \frac{1}{2}(\log N + \log^{1/2} N)$$

Since there are $\log^{1/2}N$ layers in the hierarchical tree, the number of labels per layer of the entire hierarchical tree equals a number obtained by calculation using the following expression.

[Math 73]

$$\frac{1}{2}(\log^{3/2} N + \log N)$$

Next, let the case where the node i is at a Special Level be considered. Since there are as many nodes j as the depths of i in the entire hierarchical tree, the number of labels in the entire hierarchical tree including any node i being at a Special Level equals a number obtained by calculation using the following expression.

[Math 74]

$$\sum_{i=1}^{\log^{1/2} N} (\log^{1/2} N)i = \frac{1}{2}(\log^{3/2} N + \log N)$$

Now that the labels for the nodes i being at a Special Level and for the nodes j belonging to the same layer have been counted doubly, these labels must be subtracted. Since there are $\log^{1/2}N$ such combinations per layer, there are log N such combinations overall. When the special label for the case where there is no revoked receiver is added to them, the total number of labels each receiver holds in the Basic LSD scheme equals a number given by the following expression.

[Math 75]

$$\frac{1}{2}(\log^{3/2} N + \log N) + \frac{1}{2}(\log^{3/2} N + \log N) - \log N + 1 = \log^{3/2} N + 1$$

[15. Configuration for reducing the number of labels in the Basic LSD scheme using Rabin Tree]

Next, a configuration for reducing the number of labels in the Basic LSD scheme using the Rabin Tree is described. In the present invention based on the aforementioned SD scheme, the number of labels owned by each receiver is reduced by setting one specific intermediate label from which the intermediate labels $IL_{i,j}$ for obtaining the labels $LABEL_{i,j}$ for subsets $S_{i,j}$ in each of which the node i is the parent of the node j can be derived, as a node-corresponding value in the Rabin Tree, and by designing such that the receiver has only one such intermediate label (= node-corresponding value. This technique can be applied similarly to the Basic LSD scheme.

A specific configuration method is substantially the same as that of the aforementioned embodiments of the present invention. However, when the management center (TC) successively produces the labels $LABEL_{i,j}$ using the pseudo-random number generator G during setup, if the node i is not at a Special Level, any label for which a node lower than any Special Level that is immediately below i is j is not used. Consequently, generation of labels can be stopped at that Special Level. Moreover, when the management center distributes the generated labels to each receiver, only labels satisfying the above-mentioned condition are generated, and thus the management center has to distribute such labels only.

As a setting similar to what has been described with reference to Fig. 42, a specific configuration example for reducing the number of labels in the Basic LSD scheme using the one-way permutation tree is described with reference to Fig. 42. In the Basic LSD scheme, the number of labels a receiver u4 holds should be nine overall, which are $LABEL_{1,3}$, $LABEL_{1,5,}$ $LABEL_{1,8}$, $LABEL_{1,18}$, $LABEL_{2,5}$, $LABEL_{4,8}$, $LABEL_{4,18}$, $LABEL_{9,18}$, plus one special label used where there is no revoked receiver as already described with reference to Fig. 42. By contrast, as in the present invention, when it is designed such that the receiver holds one intermediate label $IL_{9,18}$ (= node-corresponding value $NV_{19}$) from which the intermediate labels $IL_{i,j}$ and the $IL_{1,\phi}$ respectively corresponding to the special subsets used where the nodes i, j bear a parent-child relationship and where there is no revoked receiver can be derived, the receiver may only have to hold five labels overall, which are four labels $LABEL_{1,5}$, $LABEL_{1,8}$, $LABEL_{1,18}$, $LABEL_{4,18}$, and one intermediate label $IL_{9,18}$.

The number of labels which can be reduced by the present invention given the total number of receivers being N is considered. In a Basic LSD scheme to which the present invention is not applied, how many labels $LABEL_{i,j}$, in each of which the nodes i, j bear a parent-child relationship, should be held by each receiver is considered.

When the nodes i, j bear a parent-child relationship, the following three cases can be considered.

(A) The node i is at a Special Level.
(B) The node j is at a Special Level.
(C) Neither the node i nor the node j is at a Special Level.

In any of these cases, if the nodes i, j bear a parent-child relationship (i.e., they are adjacent to each other) in any of the above cases, i and j belong to the same layer. Namely, any subset $S_{i,j}$ satisfies either condition required to be defined in the Basic LSD scheme. Namely, such subsets are defined and used in the Basic LSD scheme, and thus a receiver needs to hold any $LABEL_{i,j}$ corresponding thereto.

For a certain receiver, such nodes i, j are determined as follows. Namely, there are so many such nodes i, j as to cover the depths of a tree given that the total number of nodes i in the tree equals the depths of the tree (i.e., all the nodes in a path from a leaf to which the receiver is assigned to the root, excluding the leaf), and once i has been determined, only one j is determined (the node which is a child of i and which does not exist in the path). Thus, there exist so many nodes i, j as to cover the depths of the tree, i.e., log N nodes i, j.

By designing such that these log N labels and one special label are generated from one intermediate label using the present invention, the number of labels held by a receiver can be reduced by

$$\log N + 1 - 1 = \log N$$

As mentioned above, the total number of labels a receiver holds in the Basic LSD scheme was

$$\log^{3/2}N + 1$$

and thus, by applying the present invention, this can be reduced to

$$\log^{3/2}N - \log N + 1$$

[16. Outline of General Layered Subset Difference (General LSD) scheme]

Next, a General Layered Subset Difference (General LSD) scheme is outlined.

While one kind of a Special Level is used in the Basic LSD, a plurality of Special Levels having different degrees of importance are used in the General LSD scheme.

Similarly to what is proposed in the treatise proposing the LSD scheme, in a hierarchical tree, a path from the root to a node j via a node i is considered as a single graph. The root and the node j of the tree are the end points. Nodes of the tree are nodes of the graph. One of the nodes except the end points is the node i. In this graph, each node is represented by its distance from the root. This distance is represented as a d digit number in base b (where b = ($\log^{1/d}N$)) . For example, the root is represented as 0 ... 00. A node next thereto (a child node of the root in the hierarchical tree structure) is represented as 0 ... 01.

A subset $S_{i,j}$ is considered to be the final change from any node i to any node j, in combinations of defined transformations (changes from one node to another). A defined transformation represents a defined subset, and individual changes required for the final transition indicate defined subsets required to represent the subset $S_{i,j}$ in segments. As disclosed in the original treatise, when nodes i, $k_1$, $k_2$, ⋯, $k_{d-1}$, j exist in a path of a tree in this order, a subset Si,j in the SD scheme is indicated by the following expression in the General LSD scheme.

[Math 76]

$$S_{i,j} = S_{i,k_1} \cup S_{k_1,k_2} \cup \cdots \cup S_{k_{d-1},j}$$

Namely, the subset $S_{i,j}$ in the SD scheme is represented by the union of at most d subsets in the General LSD scheme.

In the General LSD scheme, when a node i is represented as $\vec{x}$ a $\vec{0}$ (where a is the rightmost nonzero digit, $\vec{x}$ is a sequence of arbitrary digits, and $\vec{0}$ is a sequence of zeros), all changes of i to j if j is represented either by $\overrightarrow{x+1}$ 0 $\vec{0}$, or $\vec{x}$ a' $\vec{y}$ (where a' > a, and $\vec{y}$ is a sequence of arbitrary digits of the same length as $\vec{x}$ ) ) are defined. Namely, the subset $S_{i,j}$ being represented by any such i, j pair is defined.

By doing in this way, a level represented by any two-digit number ending (at the rightmost) with 0 when d = 2 in the General LSD scheme is considered as a Special Level in the Basic LSD scheme. In the General LSD scheme, the number of rightmost trailing zeros in the representation of a node i determines the degree of importance of that level, and a node j could be any node (including nodes at both ends) from i+1 to a first node having a higher degree of importance than i. Under such a setting, let i and j be that i = 825917, j = 864563. Then, a change from i to j, i.e., the subset $S_{i,j}$ in the SD scheme can be represented as four transformations defined in the General LSD scheme, i.e., 825917 → 825920 → 826000 → 830000 → 864563.

Namely, supposing that $k_1$ = 825920, $k_2$=826000, $k_3$ = 830000, then the subset $S_{i,j}$ is indicated by the following expression. Namely,

[Math 77]

$$S_{i,j} = S_{i,k_1} \cup S_{k_1,k_2} \cup S_{k_2,k_3} \cup S_{k_3,j}$$

In order to transmit secret information to receivers belonging to the above-mentioned subsets $S_{i,j}$ of the SD scheme, four cipher texts encrypted with subset keys corresponding to subsets indicated by the following expression are transmitted.

[Math 78]

$$S_{i,k_1}, S_{k_1,k_2}, S_{k_2,k_3}, S_{k_3,j}$$

The number of labels held by each receiver in the General LSD scheme decreases with increasing parameter d, to finally obtain

$$O(\log^{1+\varepsilon} N)$$

where $\varepsilon = 1/d$. Moreover, at this time, the upper limit of the number of cipher texts to be transmitted is

$$d(2r - 1)$$

For details, reference should be made to the above-mentioned treatise.

[17. Configuration for reducing the number of labels in General LSD scheme using Rabin Tree]

Next, a configuration for reducing the number of labels in the General LSD scheme using the Rabin Tree is described. The above-mentioned technique for reducing the number of labels held by a receiver, using the Rabin Tree in the Basic LSD scheme, can also be applied to the General LSD scheme. Specifically, the Basic LSD scheme and the General LSD scheme differ only in their conditions to be satisfied by any defined subset, but they do not differ as far as where the Rabin Tree is used.

Also in the General LSD scheme, a receiver um needs to hold all labels $LABEL_{i,j}$ corresponding to subsets $S_{i,j}$ in each of which the nodes i, j bear a parent-child relationship, among the labels defined in the SD scheme and given to the receiver um. The reason therefor is that even if i takes any value, a change to a node j (i.e., i+1) which is a child thereof falls under the above-mentioned condition for a defined transformation. Namely, similarly to the Basic LSD scheme, for a certain receiver, there are log N labels in which the nodes i, j bear a parent-child relationship, among the labels held by the receiver. By designing such that these labels and the special label are produced from one intermediate label, a reduction of as many as log N labels can be implemented. The number of labels held by each receiver in the original General LSD scheme was

$$O(\log^{1+\varepsilon} N)$$

(where $\varepsilon$ is an arbitrary integer) , and thus, log N labels can be reduced therefrom.

[18. Discussion on reduction of amount of computation in cipher text distribution configuration in SD scheme to which Rabin Tree is applied]

Against the aforementioned key reduction method by the conventional SD scheme, the above-mentioned cipher text distribution configuration by the SD scheme according to the present invention using a Rabin Tree has an advantage that the amount of computation required of a receiver is small. This is discussed through a comparison with the SD scheme using RSA cryptography.

In the key reduction method according to the SD scheme using RSA cryptosystem and the LSD scheme, in order for the receiver to derive, from a key $NK_1$ for a certain node, a key for its parent node

[Math 79]

$$NK_{\lfloor l/2 \rfloor}$$

the receiver performs calculation using the following expression.

[Math 80]

$$NK_{\lfloor l/2 \rfloor} = (NK_l^e \oplus H(l)) \bmod M$$

Here, an XOR and hashing with the function H demand only an extremely small amount of computation, compared to the operation of finding a power residue. Thus, the core of the above calculation is the operation of finding a power residue

$$NK_1^e \bmod M$$

In a system using RSA cryptosystem, in order to reduce the amount of computation, it is desired to use an encryption exponent e as small as possible, with its Hamming weight as small as possible. However, it has been pointed out that a small e, such as e = 3, would not provide enough security, and thus, use of a value

$$e = 2^{16} + 1$$

is widely recommended.

When the value $2^{16} + 1$ is used as the encryption exponent e, several methods are available to find an eth power of a certain number x. If a "repeated square-and-multiply algorithm" (see p. 614 of the aforementioned literature: A.J. Menezes, P.C. van Oorschot and S.A Vanstone, "Handbook of Applied Cryptography," CRC Press, 1996 ) is used, sixteen squarings and one multiplication are required. Here, squaring is a particular case of multiplication, and thus, by using this, the amount of computation can be reduced, compared to multiplication. In view of this, the amount of the above computation becomes bulkier than seventeen squarings.

By contrast, in the cipher text distribution configuration based on the SD scheme to which the above-mentioned Rabin Tree according to the present invention is applied, a receiver performs a computation based on the aforementioned (Eq. 1) on the basis of the node-corresponding value NV1 and node-added variables salt which it owns, i.e.,

[Math 81]

$$NV_{\lfloor l/2 \rfloor} = (NV_l^{\,2} + H(l \,\|\, salt_l)) \bmod M$$

The core of this computation is also the operation of finding a power residue. However, in the above expression, the operation of finding a power residue is

$$NV_1^2 \bmod M$$

which involves only one squaring. Hence, the present invention can reduce the amount of computation to about 1/17 compared to the scheme using RSA cryptosystem.

As mentioned above, when compared to a system using RSA cryptosystem, the present scheme has a feature that the operation of finding a power residue, which is a heavy load on the receiver in terms of the amount of computation, involves only one squaring, and this reduces the amount of computation to such an extremely small value as about 1/17 compared to the scheme using RSA cryptosystem. Moreover, even if 3 is used as the encryption exponent e in a scheme using RSA cryptosystem, a computation $NK_1^e \bmod M$ involves one multiplication and one squaring, which hence reduces the amount of computation in the present invention to a value smaller than 1/2.

Furthermore, in each of the conventional SD scheme, the Basic LSD scheme, and the General LSD scheme, each receiver has been required to hold securely, as described above, as many labels as

$$\text{SD scheme: } (1/2)\log^2 N + \log N + 1$$

$$\text{Basic LSD scheme: } \log^{2/3} N + 1$$

$$\text{General LSD scheme: } O(\log^{1+\varepsilon} N)$$

(where N is the total number of receivers, ε is an arbitrary integer satisfying $\varepsilon > 0$).

By contrast, the configuration to which the Rabin Tree according to the present invention is applied can implement a reduction of the number of labels held by each receiver securely. Namely, as aforementioned, in the present invention, it is configured such that an intermediate label corresponding to a node-corresponding value to which the Rabin Tree is applied is set to labels $LABEL_{i,j}$ corresponding to subsets in each of which the nodes i and j bear a parent-child relationship (having a distance of 1, i.e., being continuous in hierarchy) and to the label $LABEL_{1,\phi}$ corresponding to the subset $S_{1,\phi}$ which is a set used in the special case where there is no revoked receiver and thus including all the receivers, to make calculable the intermediate labels (= node-corresponding values) corresponding to higher-rank special subsets on the basis of this intermediate label, to achieve the reduction of the number of labels which the receiver holds.

It should be noted that in the configuration according to the present invention, node-added variables salt need not be held securely. Moreover, each of the node-added variables salt has a small size of two bits on average, which provides an advantage of reducing data storage requirements on the part of the receiver.

In this way, by applying the configuration of the present invention, the amount of information required for secure storage by each receiver is reduced, and moreover, the amount of computation required for node key calculation by the receiver can also be reduced, whereby an efficient cipher text distributing, decrypting processing configuration can be realized.

The present invention has been described in great detail with reference to specific embodiments in the foregoing. However, it is obvious that those skilled in the art can make modifications to or substitutions for the embodiments without departing from the scope and spirit of the present invention. Namely, the present invention has been disclosed by way of examples, and thus should not be construed in a restrictive sense. In order to judge the scope and spirit of the present invention, the appended claims should be taken into consideration.

It should be noted that a series of processing described in the Description can be performed by hardware, or software, or a configuration having both combined. In a case of performing the processing depending on software, the processing can be performed by installing a program having recorded processing sequences therein to a memory within a computer incorporated into dedicated hardware, for execution, or by installing the program into a general-purpose computer that can perform various processing, for execution.

For example, the program can be recorded on a hard disk and a ROM (Read Only Memory) as recording media beforehand. Alternatively, the program can be stored (recorded) temporarily or permanently on a removable recording medium, such as a flexible disk, a CD-ROM (Compact Disc Read Only Memory) , a MO (Magneto optical) disc, a DVD (Digital Versatile Disc), a magnetic disk, a semiconductor memory. Such a removable recording medium can be supplied as so-called package software.

It should be noted that the program can be installed to the computer from a removable recording medium such as mentioned above, and additionally, through wireless transmission to the computer from a down load site, wired transmission to the computer via a network such as a LAN (Local Area Network), the Internet to allow the computer to receive the thus transmitted program for installation in a storage medium such as a hard disk incorporated therein.

It should be noted that the various processing described in the Description is performed not only time-sequentially according to the description, but also parallelly or individually according to the processing capacity of an apparatus that performs processing, or as necessary. Further, the system used in the present Description means a logical set configuration of a plurality of apparatus, and is not limited to one wherein apparatus each having its own configuration are grouped within the same enclosure.

Industrial Applicability

According to the configuration of the embodiments of the present invention, in an information distribution configuration to which a hierarchical tree structure being one embodiment of Broadcast Encryption schemes is applied, it is configured to generate a Rabin Tree as a one-way tree in which node-corresponding values are set so as to correspond to respective nodes constituting the hierarchical tree, to set such that a node-corresponding value $NV_a$ is calculable by application of a function f based on a node-corresponding value $NV_b$ and a node-added variable $salt_b$ set so as to correspond to at least one lower-rank node, and such that node keys corresponding to the respective nodes are calculable by using the node-corresponding values NV corresponding to the respective nodes as inputs, and by applying a function Hc. As a result of the present configuration, unlike the conventional CS scheme in which each receiver needed to hold log N + 1 node keys securely, in the configuration to which the present invention is applied, the number of keys each receiver must hold can be reduced. Moreover, the node-added variables salt need not be held securely, and each of the node-added variables salt may have a small size of two bits on average, whereby the amount of information required for secure storage by the receiver is reduced. Furthermore, when compared to the schemes using RSA cryptosystem in which the number of keys held securely by a receiver is reduced to one similarly to the present invention, in the scheme of the present invention, it is configured such that the operation of a power residue, which is a heavy load as the amount of computation required of the receiver, involves only one squiring, which is about 1/17 the amount of computation in the schemes using RSA cryptosystem, and thus is an extremely small value. In this way, by applying the configuration of the present invention, the amount of information required for secure storage by the receiver can be reduced, and moreover, the amount of computation required for node key calculation by the receiver can be reduced, whereby an efficient cipher text distributing, decrypting processing configuration is implemented.

**Claims**

**1.** An information processing method for generating a hierarchical tree which is applied to processing for supplying cipher texts decryptable only by certain selected equipment except excluded (revoked) equipment, by applying a Broadcast Encryption scheme based on a hierarchical tree configuration, the information processing method **characterized by** comprising:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;

a node key calculating step of calculating node keys NK corresponding to the respective nodes constituting the one-way tree, by application of a function Hc using the node-corresponding values NV corresponding to the respective nodes as inputs; and

an information-for-supply determining step of selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

**2.** The information processing method according to Claim 1, **characterized in that**:

the one-way tree generating step generates the one-way tree having a setting in which a node-corresponding value for a higher-rank node is calculable by encrypting processing (forward computation) to which a Rabin cryptography based on a node-corresponding value for a lower-rank node is applied, and in which the node-corresponding value for the lower-rank node is calculable by decrypting processing (inverse computation) to which a Rabin cryptography based on the node-corresponding value for the higher-rank node is applied.

**3.** The information processing method according to Claim 1, **characterized by** further comprising:

a cipher text generating step of generating cipher texts by executing encrypting processing by selectively applying the node keys set so as to correspond to the respective nodes of the hierarchical tree.

**4.** The information processing method according to Claim 1, **characterized in that**:

the one-way tree generating step generates the one-way tree in which, in a hierarchical tree having a binary tree configuration with a number N of terminal nodes, node-corresponding values $NV_1$ (1=2, 3, ···, 2N-1) for respective nodes 1 to which node numbers 1 are given from a higher-rank node in a breadth first order in the binary tree satisfy a relationship of the following expression

[Math 1]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

**5.** The information processing method according to Claim 4, **characterized in that**:

the one-way tree generating step includes, in a hierarchical tree having a binary tree configuration with a number N of terminal nodes, using, as inputs, a number of leaves as the number of node terminals: N, and a size of a modulus M: |M|,
a step 1: Determine two large primes of a size |M|/2, and calculate a product M thereof;
a step 2: Determine the mapping function for outputting an element of $Z_M$: H;
a step 3: Randomly select a node-corresponding value $NV_1$ for a root node being a highest-rank node of the binary tree as a value such that $NV_1 \in Z^*_M$;
a step 4: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 2]

$$temp_l = (NV_{\lfloor l/2 \rfloor} - H(l \,\|\, salt_l)) \bmod M$$

b. Find $tmp_l^{1/2}$ mod M, and determine any of four solutions as a node-corresponding value $NV_l$ for a node 1; and

a step 5: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1(1 = 1 through 2N-1) of the binary tree.

**6.** The information processing method according to Claim 1,
**characterized in that**:

the node key calculating step is a step of calculating node keys NK by application of a function Hc using node-corresponding values NV corresponding to the respective nodes as inputs, wherein the function Hc is a hash function for mapping a node-corresponding value NV into data of a bitlength corresponding to a size of a node key.

**7.** The information processing method according to Claim 1,
**characterized in that**:

the one-way tree generating step generates the one-way tree in which, in a hierarchical tree having a binary tree configuration with a number N of terminal nodes, node-corresponding values $NV_1$ (1=2, 3, ···, 2N-1) for respective nodes 1 to which node numbers 1 are given from a higher-rank node in a breadth first order in the binary tree satisfy a relationship of the following expression

[Math 3]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_l$ times.

**8.** The information processing method according to Claim 7,
**characterized in that**:

the one-way tree generating step includes, in a hierarchical tree having a binary tree configuration with a number N of terminal nodes, using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for a root node being a highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 4]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values): $NV_1$, $NV_2$, ..., $NV_{2N-1}$, and
2N-2 numbers (node-added variables) : $salt_2$, $salt_3$, ···, $salt_{2N-1}$,

and set them as the node-corresponding values and the node-added variables for the respective nodes 1 (1 = 1 through 2N-1) of the binary tree.

**9.** An information processing method for generating a hierarchical tree applied to processing for supplying cipher texts decryptable only by certain selected equipment, using a Broadcast Encryption scheme based on a hierarchical tree configuration, the information processing method **characterized by** comprising:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
an intermediate label generating step of generating intermediate labels which are intermediate labels (IL) set as values from which values of labels corresponding to some selected special subsets, among labels (LABEL) respectively corresponding to subsets set on the basis of a SD (Subset Difference) scheme to which the hierarchical tree is applied, are calculable by computational processing;
a label generating step of generating the labels corresponding to the special subsets by computational processing based on the intermediate labels, and further generating labels not corresponding to the special subsets by a computation based on the generated labels; and
a labels-for-supply determining step of determining labels for supply to a receiver corresponding to a terminal node of the hierarchical tree, and selecting
the special subset-noncorresponding labels not corresponding to the special subsets, and
a node-corresponding value as a minimum intermediate label and node-added variables required to calculate a node-corresponding value for any node included in a path from a receiver-corresponding node to a root as a highest-rank node, as information for supply to the receiver corresponding to the terminal node of the one-way tree, and
wherein the one-way tree generating step generates the one-way tree in which, in a hierarchical tree having a binary tree configuration with a number N of terminal nodes, node-corresponding values $NV_1$ (1= 2, 3, ..., 2N-1) for respective nodes 1 to which node numbers 1 are given from a higher-rank node of a binary tree in a breadth first order in the binary tree satisfy a relationship of the following expression

[Math 5]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{salt1}$ (1) represents a value obtained by applying the function H to 1 as many as $salt_1$ times.

**10.** The information processing method according to Claim 9,
**characterized in that**:

the one-way tree generating step includes, in the hierarchical tree having the binary tree configuration with the number N of terminal nodes, using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for the root node being the highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 6]

$$temp_{l} = (NV_{\lfloor l/2 \rfloor} \oplus H^{salt_{l}}(l)) \bmod M$$

b. Find $tmp_1^{1/2}$ mod M, and determine any of four solutions as a node-corresponding value $NV_l$ for a node l; and

a step 4: Output
2N-1 |M|-bit numbers (node-corresponding values) : $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1 (1 = 1 through 2N-1) of the binary tree.

**11.** A decryption processing method for executing processing for decrypting cipher texts encrypted with node keys respectively corresponding to nodes constituting a hierarchical tree, by applying a Broadcast Encryption scheme based on a hierarchical tree configuration, the decryption processing method **characterized by** comprising:

a cipher text selecting step of selecting a cipher text to which a node key generable on the basis of a node-corresponding value NV and node-added variables salt held by a self apparatus, from the cipher texts;
a node key calculating step of calculating the node key applied to the cipher text on the basis of the node-corresponding value NV and the node-added variables salt held by the self apparatus; and
a decrypting step of executing processing for decrypting the cipher text on the basis of the calculated node key.

**12.** The decryption processing method according to Claim 11,
**characterized in that**:

the cipher text selecting step is a step of finding, in a hierarchical tree in which respective nodes are given node numbers in a breadth first order with a root as a highest-rank node of the hierarchical tree numbered 1, a node number coinciding with any node number included in nodes in a path from a receiver to the root, among node numbers for node keys used for encryption.

**13.** The decryption processing method according to Claim 11,
**characterized in that**:

the node key calculating step includes a step of calculating node-corresponding values in a path from a self node to a root being a highest-rank node, among node-corresponding values $NV_1$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 7]

$$NV_{\lfloor l/2 \rfloor} = (NV_{l}^{2} + H(l \,\|\, salt_{l})) \bmod M$$

where M is a product of two large primes, and H is a mapping function for outputting an element of $Z_M$.

**14.** The decryption processing method according to Claim 11,
**characterized in that**:

the node key calculating step includes a step of calculating on the basis of the node-corresponding value held by the self apparatus, or node-corresponding values in a path from a self node to a root being a highest-rank node, and further on the basis of the following expression

$$NK = Hc\ (NV)$$

where NK is a node key; NV is a node-corresponding value; and Hc is a mapping function.

**15.** The decryption processing method according to Claim 11, **characterized in that**:

the node key calculating step includes a step of calculating node-corresponding values in a path from a self node to a root being a highest-rank node, among node-corresponding values $NV_1$ (1=2, 3, ..., 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 8]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{salt1}$ (1) represents a value obtained by applying the function H to 1 as many as $salt_1$ times.

**16.** A decryption processing method for executing processing for decrypting cipher texts encrypted with subset keys respectively corresponding to subsets set on the basis of a SD (Subset Difference) scheme which is a Broadcast Encryption scheme based on a hierarchical tree configuration, the decryption processing method **characterized by** comprising:

a cipher text selecting step of selecting a cipher text generated by applying a subset key derivable by pseudo-random number generating processing based on a label held by a self apparatus, or a label calculable on the basis of a node-corresponding value NV as an intermediate label, and node-added variables salt held by the self apparatus, from the cipher texts;
a label calculating step of calculating a label corresponding to a special subset by executing computational processing based on the node-corresponding value NV and the node-added variable salt, if the subset key to be applied to the cipher text is underivable by the pseudo-random number generating processing based on the label held;
a step of generating the subset key by the pseudo-random number generating processing based on the label held or the label calculated; and
a decrypting step of executing processing for decrypting the cipher text by applying the generated subset key, and wherein the label calculating step includes a step of calculating node-corresponding values in a path from a self node to a root being a highest-rank node, among node-corresponding values $NV_1$ (1=2, 3, ..., 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 9]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

**17.** An information processing apparatus for generating a hierarchical tree which is applied to processing for supplying cipher texts decryptable only by certain selected equipment except excluded (revoked) equipment, by applying a Broadcast Encryption scheme based on a hierarchical tree configuration, the information processing apparatus **characterized by** comprising:

a one-way tree generating means for generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
a node key calculating means for calculating node keys NK corresponding to the respective nodes constituting the one-way tree, by application of a function Hc using the node-corresponding values NV corresponding to the nodes as inputs; and
an information-for-supply determining means for selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

**18.** The information processing apparatus according to Claim 17, **characterized in that**:

the one-way tree generating means is configured to generate the one-way tree having a setting in which a node-corresponding value for a higher-rank node is calculable byencryptingprocessing (forwardcomputation) towhichaRabin cryptography based on a node-corresponding value for a lower-rank node is applied, and in which the node-corresponding value for the lower-rank node is calculable by decrypting processing (inverse computation) to which a Rabin cryptography based on the node-corresponding value for the higher-rank node is applied.

**19.** The information processing apparatus according to Claim 17, **characterized by** further comprising:

a cipher text generatingmeans for generating cipher texts by executing encrypting processing by selectively applying the node keys set so as to correspond to the respective nodes of the hierarchical tree.

**20.** The information processing apparatus according to Claim 17, **characterized in that**:

the one-way tree generating means is configured to generate the one-way tree in which, in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node in a breadth first order in the binary tree satisfy a relationship of the following expression

[Math 10]

$$NV_{\lfloor l/2 \rfloor} = (NV_l^{\,2} + H(l \,\|\, salt_l)) \bmod M$$

where M is a product of two large primes, and H is a mapping function for outputting an element of $Z_M$.

**21.** The information processing apparatus according to Claim 20, **characterized in that**:

the one-way tree generatingmeans is configured to execute processing for generating the one-way tree by executing, in a hierarchical tree having a binary tree configuration with a number N of terminal nodes, using, as inputs, a number of leaves as the number of node terminals: N, and a size of a modulus M: |M|,
a step 1: Determine two large primes of a size |M|/2, and calculate a product M thereof;
a step 2: Determine the mapping function for outputting an element of $Z_M$: H;
a step 3: Randomly select a node-corresponding value $NV_1$ for a root node being a highest-rank node of the binary tree as a value such that $NV_1 \in Z^*_M$;
a step 4: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 11]

$$temp_{l} = (NV_{\lfloor l/2 \rfloor} - H(l \| salt_{l})) \bmod M$$

b. Find $tmp_1^{1/2}$ mod M, and determine any of four solutions as a node-corresponding value $NV_1$ for a node 1; and

a step 5: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1 (1= 1 through 2N-1) of the binary tree.

**22.** The information processing apparatus according to Claim 17, **characterized in that**:

the node key calculating means is configured to calculate node keys NK by application of a function Hc using node-corresponding values NV corresponding to the respective nodes as inputs, wherein the function Hc is a hash function for mapping a node-corresponding value NV into data of a bitlength corresponding to a size of a node key.

**23.** The information processing apparatus according to Claim 17, **characterized in that**:

the one-way tree generating means is configured to generate the one-way tree in which, in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node in a breadth first order in the binary tree satisfy a relationship of the following expression

[Math 12]

$$NV_{\lfloor l/2 \rfloor} = (NV_{l}^{2} \oplus H^{salt_{l}}(l)) \bmod M$$

where H is a function for mapping an input of any size into a size |M| of a product M of the said two large primes, and $H^{salt1}$ (1) represents a value obtained by applying the function H to 1 as many as $salt_l$ times.

**24.** The information processing apparatus according to Claim 23, **characterized in that**:

the one-way tree generating means is configured to generate the one-way tree by executing, in a hierarchical tree having a binary tree configuration with a number N of terminal nodes, using, as inputs, a number of leaves as the number of node terminals: N, a size of a modulus M: |M|, and a mapping function H with an |M|-bit output,
a step 1: Determine two large primes of a size |M|/2, and calculate a product M thereof;
a step 2: Randomly select a node-corresponding value $NV_1$ for a root node being a highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_l$ such that $tmp_l$ is a quadratic residue modulo M, in the following expression

[Math 13]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values): $NV_1$, $NV_2$, ···, $NV_{2N-1}$, and
2N-2 numbers (node-added variables) : $salt_2$, $salt_3$, ···, $salt_{2N-1}$,
and set them as the node-corresponding values and the node-added variables for the respective nodes 1 (1 = 1 through 2N-1) of the binary tree.

**25.** An information processing apparatus for generating a hierarchical tree applied to processing for supplying cipher texts decryptable only by certain selected equipment, using a Broadcast Encryption scheme based on a hierarchical tree configuration, the information processing apparatus **characterized by** comprising:

a one-way tree generating means for generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
an intermediate label generating means for generating intermediate labels which are intermediate labels (IL) set as values from which values of labels corresponding to some selected special subsets, among labels (LABEL) respectively corresponding to subsets set on the basis of a SD (Subset Difference) scheme to which the hierarchical tree is applied, are calculable by computational processing;
a label generating means for generating the labels corresponding to the special subsets by computational processing based on the intermediate labels, and further generating labels not corresponding to the special subsets by a computation based on the generated labels; and
a labels-for-supply determining means for determining labels for supply to a receiver corresponding to a terminal node of the hierarchical tree, and selecting
the special subset-noncorresponding labels not corresponding to the special subsets, and
a node-corresponding value as a minimum intermediate label and node-added variables required to calculate a node-corresponding value for any node included in a path from a receiver-corresponding node to a root as a highest-rank node, as information for supply to the receiver corresponding to the terminal node of the one-way tree, and
wherein the one-way tree generating means is configured to generate the one-way tree, in which in a hierarchical tree having a binary tree configuration with a number N of terminal nodes, node-corresponding values $NV_1$ (1 = 2, 3, ···, 2N-1) for respective nodes 1 to which node numbers 1 are given from a higher-rank node of a binary tree in a breadth first order in the binary tree satisfy a relationship of the following expression

[Math 14]

$$NV_{\lfloor l/2 \rfloor} = (NV_l^2 \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

**26.** The information processing apparatus according to Claim 25, **characterized in that**:

the one-way tree generating means is configured to generate the one-way tree by executing, in the hierarchical tree having the binary tree configuration with the number N of terminal nodes, using, as inputs, a number of leaves as the number of node terminals: N, a size of a modulus M: |M|, and a mapping function H with an |M|-bit output,

a step 1: Determine two large primes of a size |M|/2, and calculate a product M thereof;
a step 2: Randomly select a node-corresponding value $NV_1$ for the root node being the highest-rank node of the binary tree as a value such that $NV_1 \in Z^*_M$;
a step 3: Perform the following processing a, b while incrementing 1 by 1 from 2 to 2N-1 using 1 as a counter

a. Find a minimum positive integer $salt_1$ such that $tmp_1$ is a quadratic residue modulo M, in the following expression

[Math 15]

$$temp_l = (NV_{\lfloor l/2 \rfloor} \oplus H^{salt_l}(l)) \bmod M$$

b. Find $tmp_1^{1/2}$ mod M, and determine any of four solutions as a node-corresponding value $NV_1$ for a node 1; and

a step 4: Output
2N-1 |M|-bit numbers (node-corresponding values) : $NV_1, NV_2, \cdots, NV_{2N-1}$, and
2N-2 numbers (node-added variables) : $salt_2, salt_3, \cdots, salt_{2N-1}$,
and set them as the node-corresponding values and the node-added variables for the respective nodes 1 (1 = 1 through 2N-1) of the binary tree.

**27.** A decryption processing apparatus for executing processing for decrypting cipher texts encrypted with node keys respectively corresponding to nodes constituting a hierarchical tree, by applying a Broadcast Encryption scheme based on a hierarchical tree configuration, the decryption processing apparatus **characterized by** comprising:

a cipher text selecting means for selecting a cipher text to which a node key generable on the basis of node-corresponding values NV and node-added variables salt held by a self apparatus, from the cipher texts;
a node key calculating means for calculating the node key applied to the cipher text on the basis of the node-corresponding value NV and the node-added variables salt held by the self apparatus; and
a decrypting means for executing processing for decrypting the cipher text on the basis of the calculated node key.

**28.** The decryption processing apparatus according to Claim 27, **characterized in that**:

the cipher text selecting means is configured to find, in a hierarchical tree in which respective nodes are given node numbers in a breadth first order with a root as a highest-rank node of the hierarchical tree numbered 1, a node number coinciding with any node number included in nodes in a path from a receiver to the root, among node numbers for node keys used for encryption.

**29.** The decryption processing apparatus according to Claim 27, **characterized in that**
the node key calculating means
is configured to execute processing for calculating
node-corresponding values in a path from a self node to a root being a highest-rank node, among node-corresponding values $NV_1$ (1 = 2, 3, $\cdots$, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 16]

$$NV_{\lfloor l/2 \rfloor} = (NV_l^2 + H(l \,\|\, salt_l)) \bmod M$$

where M is a product of two large primes, and H is a mapping function for outputting an element of $Z_M$.

**30.** The decryption processing apparatus according to Claim 27, **characterized in that** the node key calculating means is configured to execute processing for calculating on the basis of the node-corresponding value held by the self apparatus, or node-corresponding values in a path from a self node to a root being a highest-rank node, and further on the basis of the following expression

$$NK = Hc\ (NV)$$

where NK is a node key; NV is a node-corresponding value; and Hc is a mapping function.

**31.** The decryption processing apparatus according to Claim 11, **characterized in that**: the node key calculating means is configured to execute processing for calculating node-corresponding values in a path from a self node to a root being a highest-rank node, among node-corresponding values $NV_l$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 17]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

**32.** A decryption processing apparatus for executing processing for decrypting cipher texts encrypted with subset keys respectively corresponding to subsets set on the basis of a SD (Subset Difference) scheme which is a Broadcast Encryption scheme based on a hierarchical tree configuration, the decryption processing apparatus **characterized by** comprising:

a cipher text selecting means for selecting a cipher text generated by applying a subset key derivable by pseudo-random number generating processing based on a label held by a self apparatus, or a label calculable on the basis of a node-corresponding value NV as an intermediate label, and node-added variables salt held by the self apparatus, from the cipher texts;
a label calculating means for calculating a label corresponding to a special subset by executing computational processing based on the node-corresponding value NV and the node-added variables salt, if the subset key to be applied to the cipher text is underivable by the pseudo-random number generating processing based on the label held;
a means for generating the subset key by the pseudo-random number generating processing based on the label held or the label calculated; and
a decrypting means for executing processing for decrypting the cipher text by applying the generated subset key, and
wherein the label calculating means is configured to execute processing for calculating node-corresponding values in a path from a self node to a root being a highest-rank node, among node-corresponding values $NV_1$ (1 = 2, 3, ···, 2N-1) for respective nodes 1 to which node numbers 1 are given from a higher-rank node in a breadth first order in a binary tree, on the basis of the node-corresponding value NV and the node-added variables salt held by the self apparatus, by applying the following expression

[Math 18]

$$NV_{\lfloor l/2 \rfloor} = (NV_l^{\,2} \oplus H^{salt_l}(l)) \bmod M$$

where H is a function for mapping an input of any size into a size |M| of a product M of the said two large primes, and $H^{saltl}$ (1) represents a value obtained by applying the function H to 1 as many as $salt_1$ times.

**33.** A computer program for generating a hierarchical tree which is applied to processing for supplying cipher texts decryptable only by certain selected equipment except excluded (revoked) equipment, by applying a Broadcast Encryption scheme based on a hierarchical tree configuration, the computer program **characterized by** comprising:

a one-way tree generating step of generating a one-way tree in which node-corresponding values are set to respective nodes, the node-corresponding values being set such that a node-corresponding value $NV_a$ corresponding to each of the nodes constituting the hierarchical tree is calculable by application of a function f based on a node-corresponding value $NV_b$ and a node-added variable $salt_b$ set so as to correspond to at least one lower-rank node;
a node key calculating step of calculating node keys NK corresponding to the respective nodes constituting the one-way tree, by application of a function Hc using the node-corresponding values NV corresponding to the respective nodes as inputs; and
an information-for-supply determining step of selecting a minimum node-corresponding value and node-added variables required to calculate node-corresponding values included in a path from a receiver-corresponding node to a root as a highest-rank node, as information to be supplied to a receiver corresponding to a terminal node of the one-way tree.

**34.** A computer program for executing processing for decrypting cipher texts encrypted with node keys respectively corresponding to nodes constituting a hierarchical tree, by applying a Broadcast Encryption scheme based on a hierarchical tree configuration, the computer program **characterized by** comprising:

a cipher text selecting step of selecting a cipher text to which a node key generable on the basis of node-corresponding values NV and node-added variables salt held by a self apparatus, from the cipher texts;
a node key calculating step of calculating a node key applied to the cipher text on the basis of the node-corresponding values NV and node-added variables salt held by the self apparatus; and
a decrypting step of executing processing for decrypting the cipher text on the basis of the calculated node key.

FIG. 1

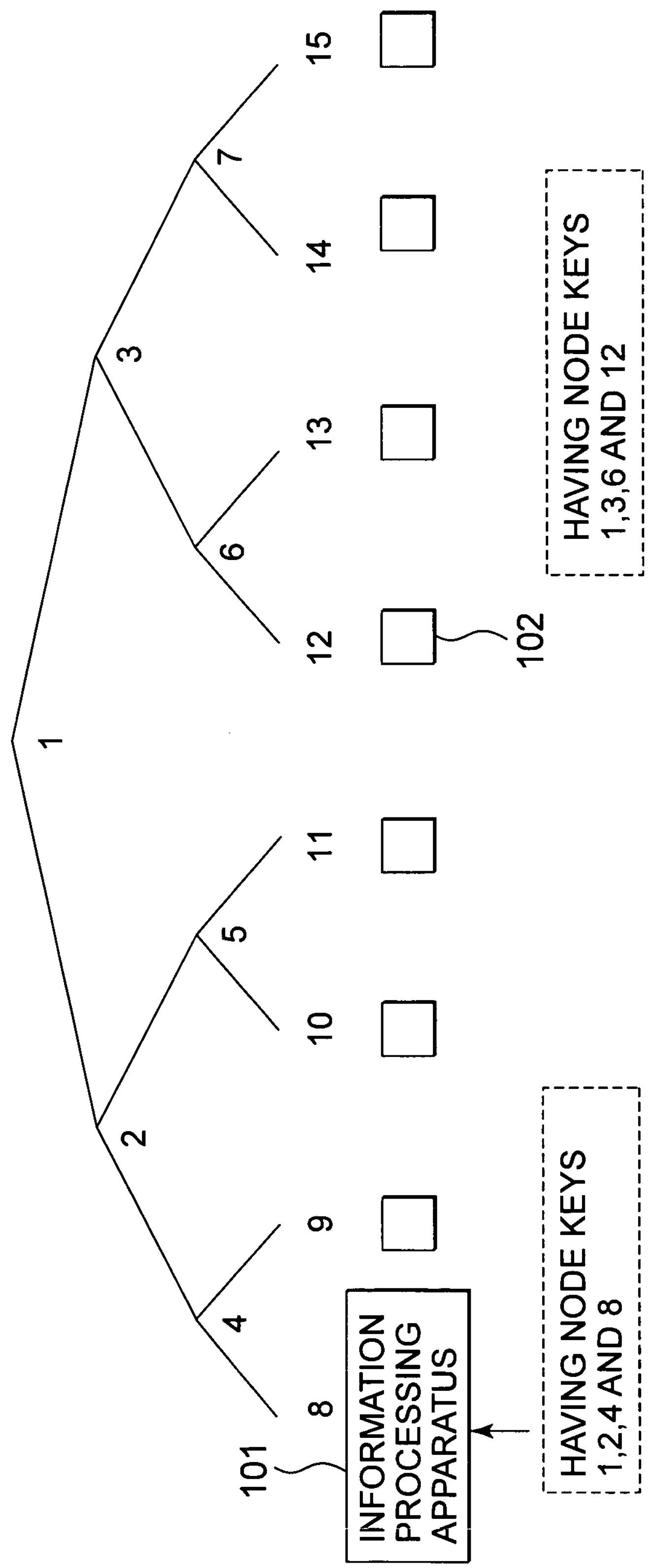
1
2
3
4
5
6
7
8
9
10
11
12
13
14
15
101
102
INFORMATION PROCESSING APPARATUS
HAVING NODE KEYS 1,2,4 AND 8
HAVING NODE KEYS 1,3,6 AND 12

FIG. 2

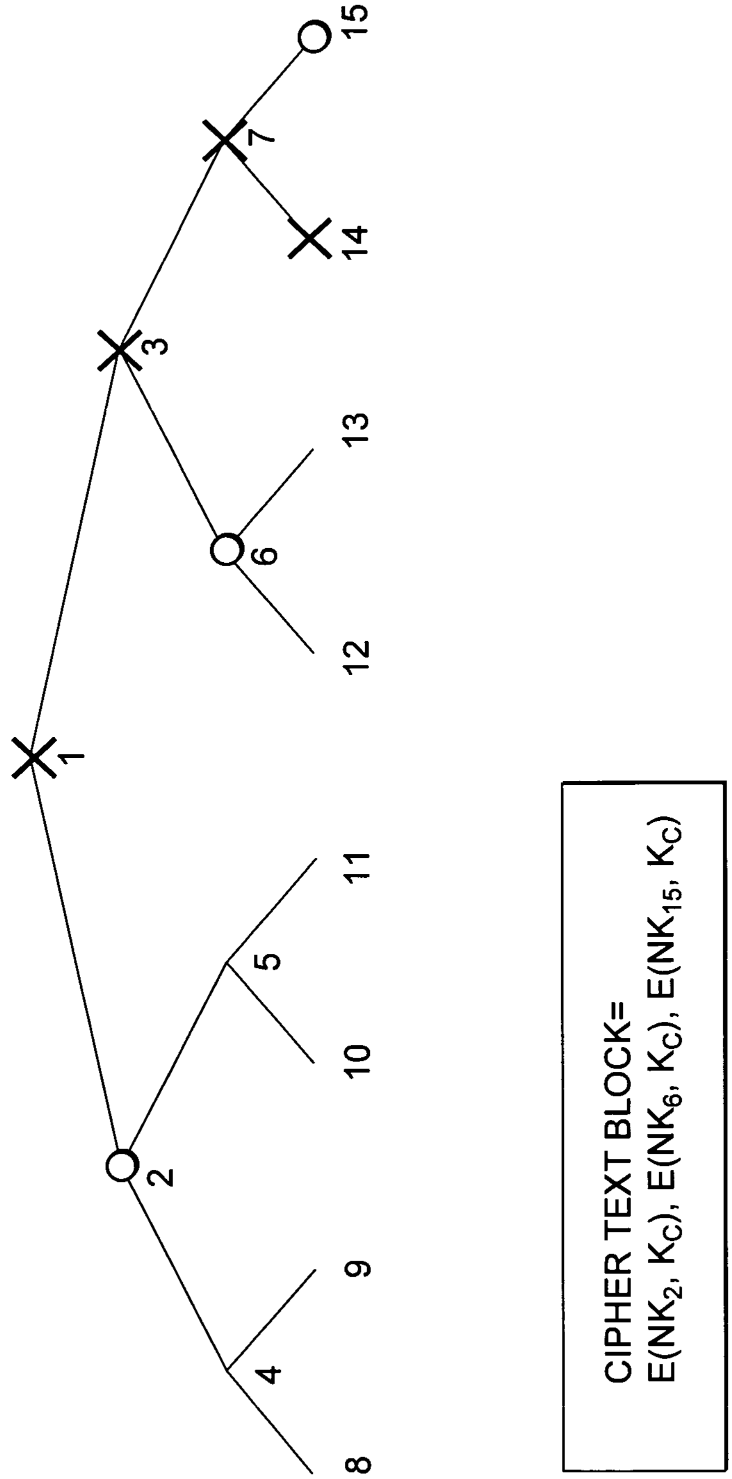
1
2
3
4
5
6
7
8
9
10
11
12
13
14
15
CIPHER TEXT BLOCK=
E(NK$_2$, K$_C$), E(NK$_6$, K$_C$), E(NK$_{15}$, K$_C$)

FIG. 3

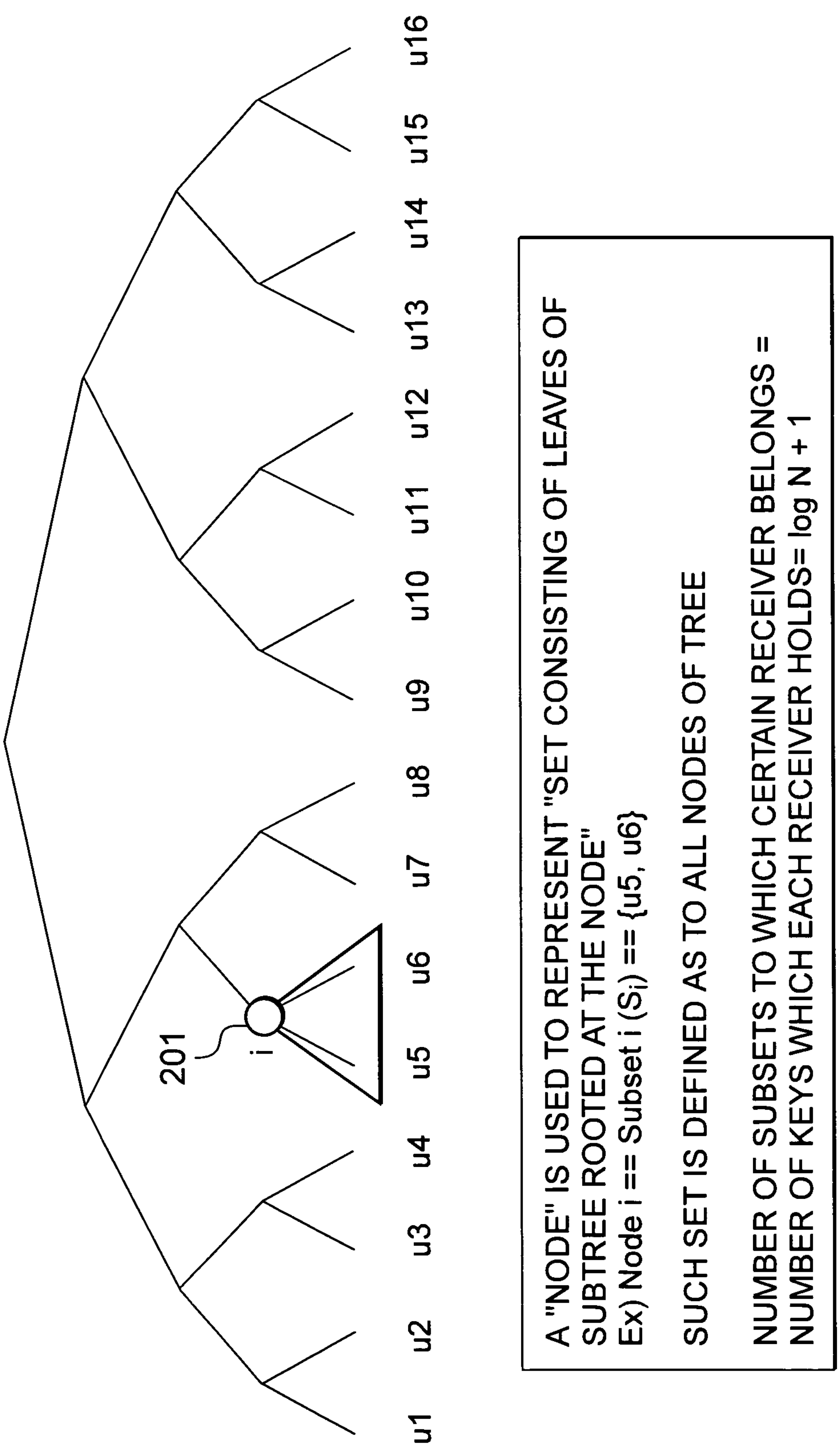
201
i
u1
u2
u3
u4
u5
u6
u7
u8
u9
u10
u11
u12
u13
u14
u15
u16
A "NODE" IS USED TO REPRESENT "SET CONSISTING OF LEAVES OF SUBTREE ROOTED AT THE NODE"
Ex) Node i == Subset i ($S_i$) == {u5, u6}
SUCH SET IS DEFINED AS TO ALL NODES OF TREE
NUMBER OF SUBSETS TO WHICH CERTAIN RECEIVER BELONGS = NUMBER OF KEYS WHICH EACH RECEIVER HOLDS= log N + 1

FIG. 4

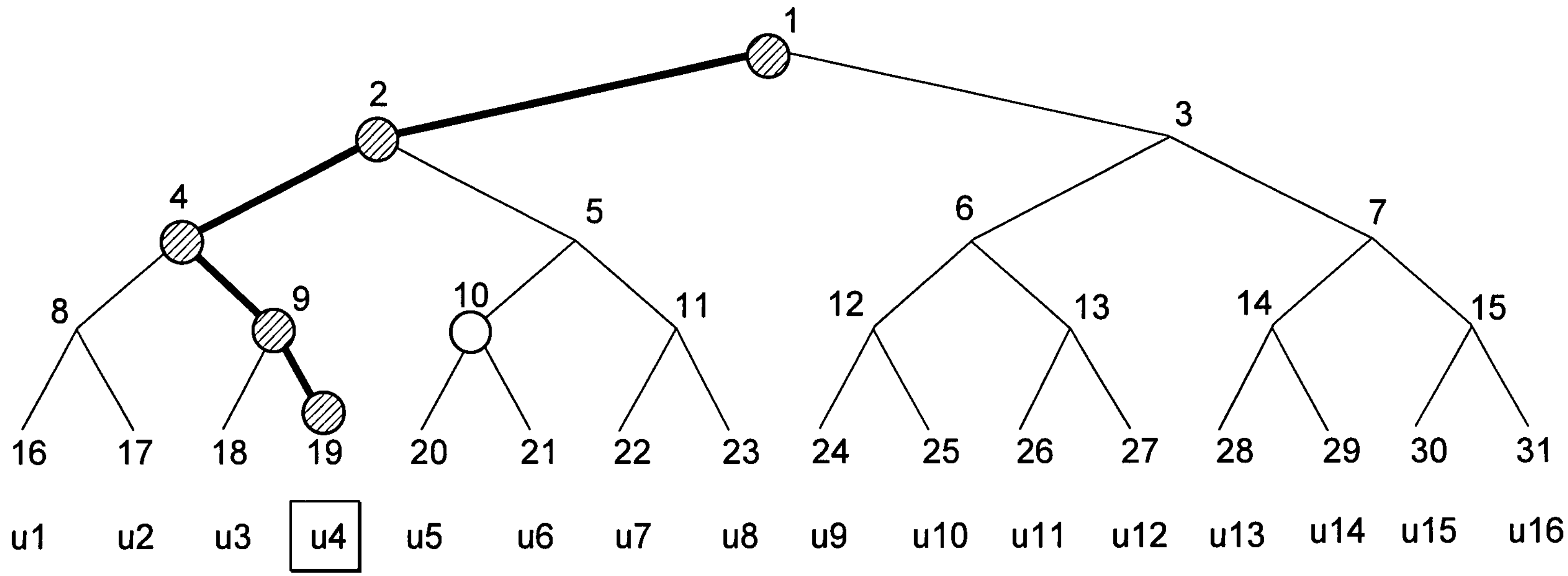


NODE KEYS OWNED BY u4: NODE KEYS FOR NODES 1, 2, 4, 9 AND 19

FIG. 5

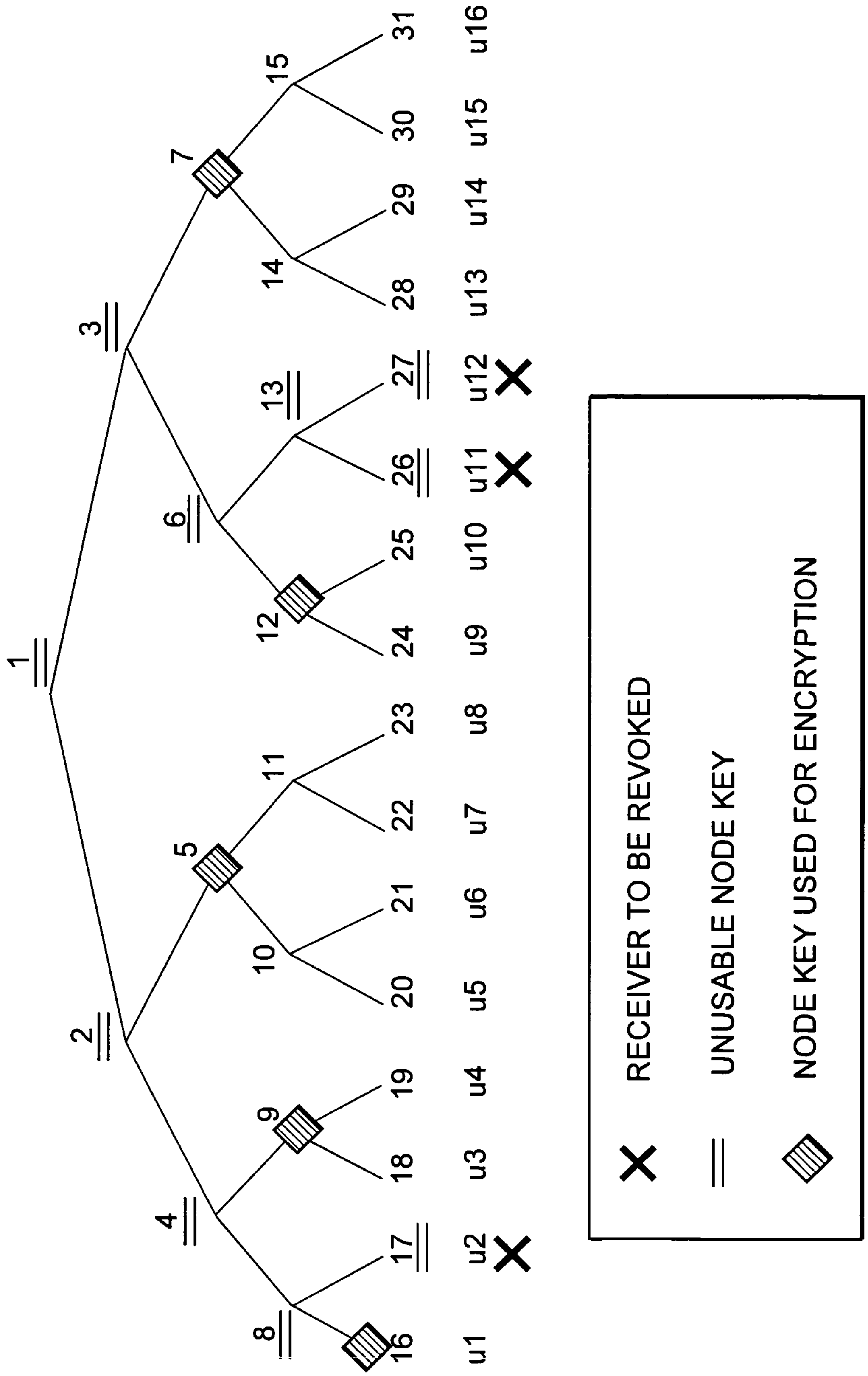
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
RECEIVER TO BE REVOKED
UNUSABLE NODE KEY
NODE KEY USED FOR ENCRYPTION

FIG. 6

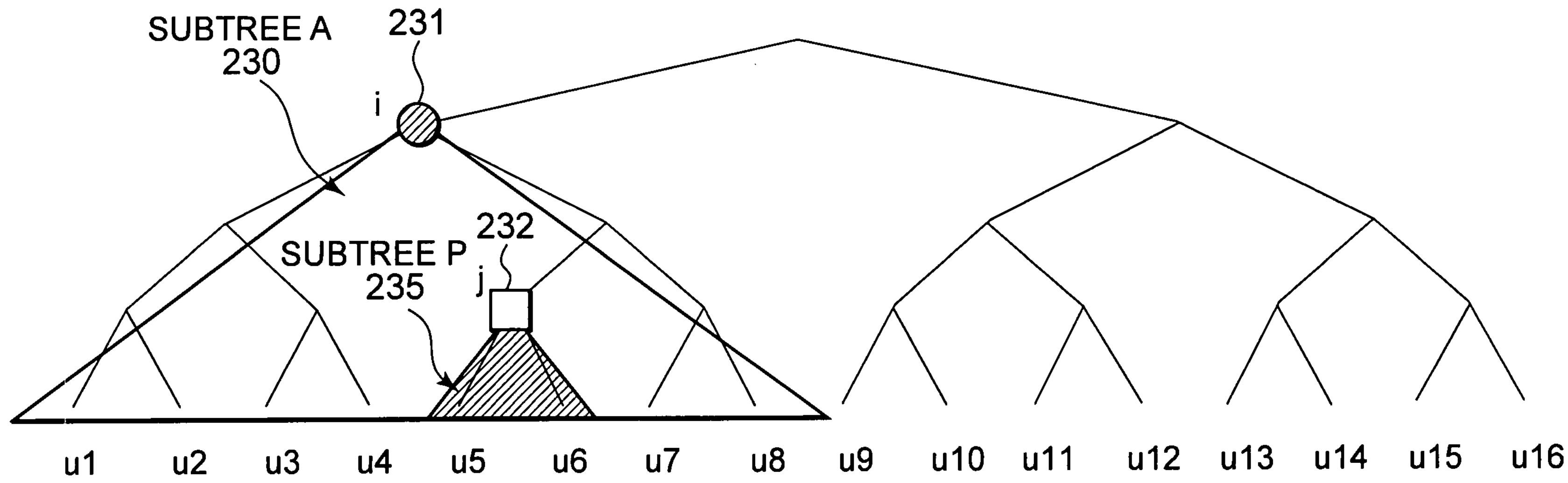


WHEN NODE i IS ANCESTOR OF NODE j
RECEIVERS (u5, u6) HAVING NODE KEY FOR NODE j ALWAYS
HAS NODE KEY FOR NODE i

FIG. 7

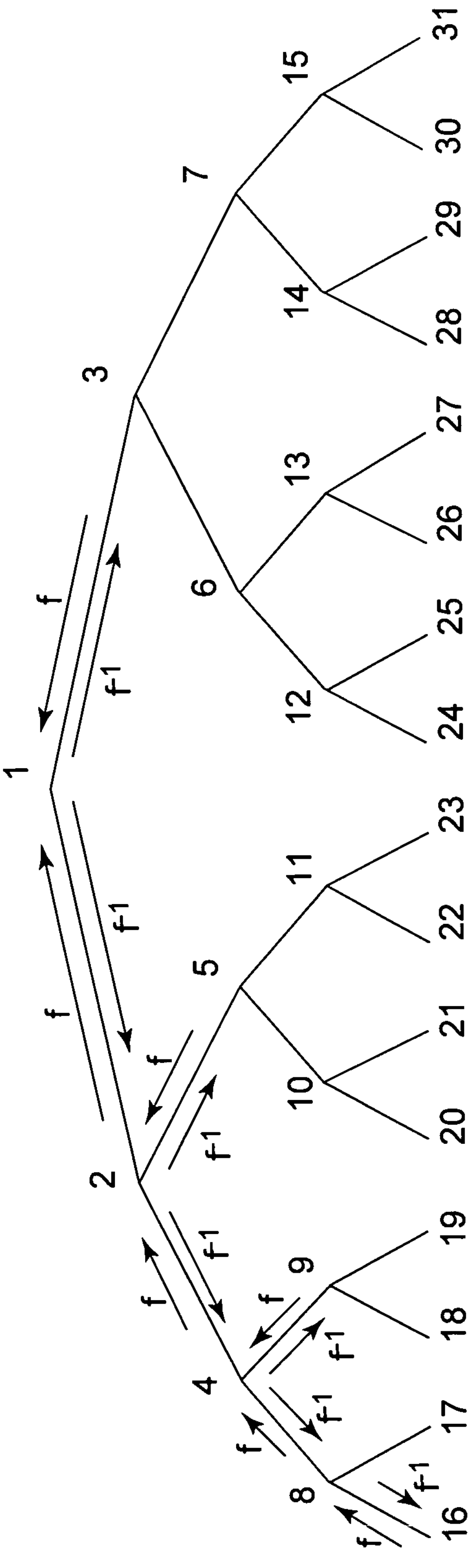


f: COMPUTATION USING FORWARD PERMUTATION F OF RSA

$f^{-1}$: COMPUTATION USING INVERSE PERMUTATION $F^{-1}$ OF RSA

FIG. 8

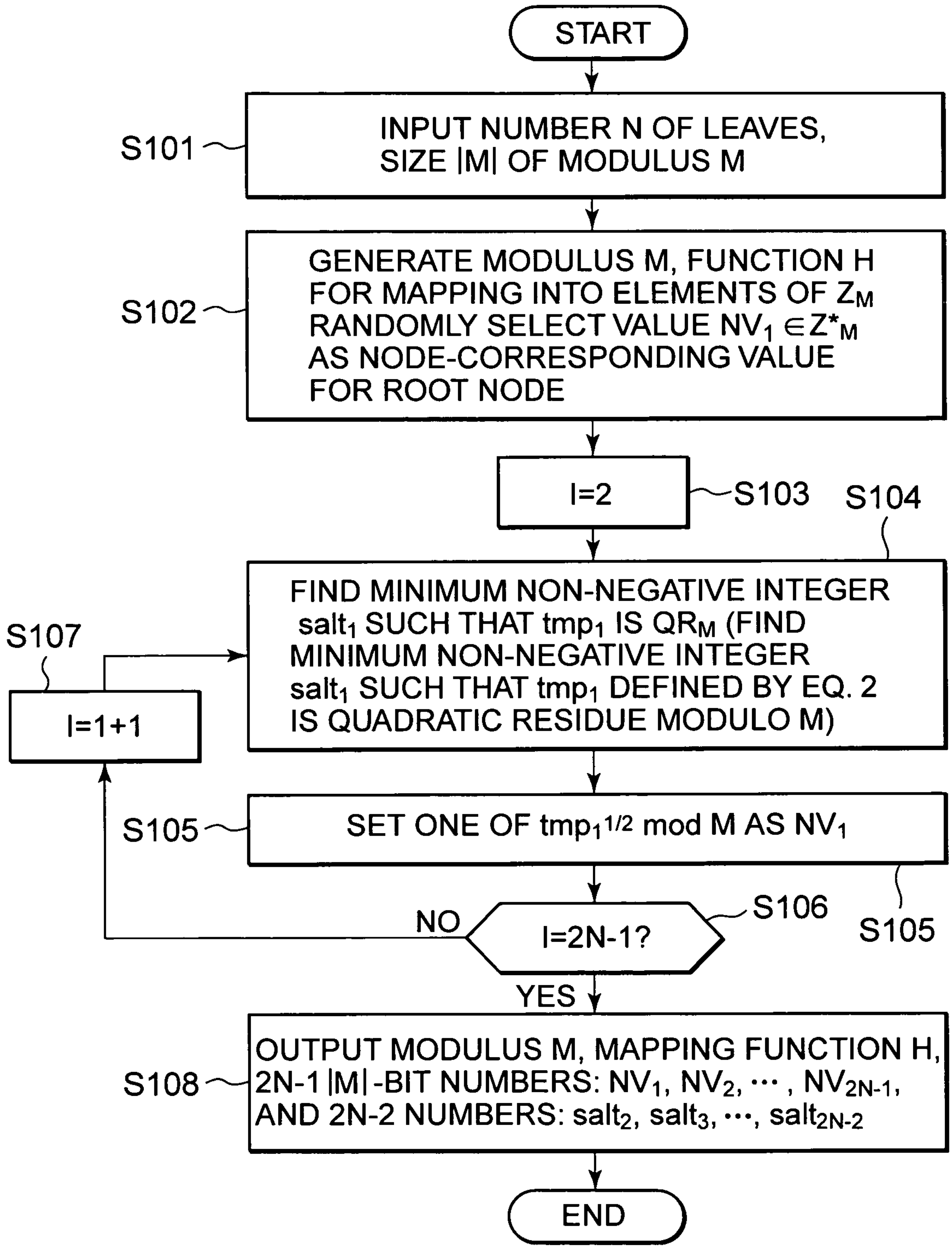
START
S101
INPUT NUMBER N OF LEAVES, SIZE |M| OF MODULUS M
S102
GENERATE MODULUS M, FUNCTION H FOR MAPPING INTO ELEMENTS OF $Z_M$ RANDOMLY SELECT VALUE $NV_1 \in Z^*_M$ AS NODE-CORRESPONDING VALUE FOR ROOT NODE
I=2
S103
S104
FIND MINIMUM NON-NEGATIVE INTEGER $salt_1$ SUCH THAT $tmp_1$ IS $QR_M$ (FIND MINIMUM NON-NEGATIVE INTEGER $salt_1$ SUCH THAT $tmp_1$ DEFINED BY EQ. 2 IS QUADRATIC RESIDUE MODULO M)
S107
I=1+1
S105
SET ONE OF $tmp_1^{1/2}$ mod M AS $NV_1$
NO
I=2N-1?
S106
S105
YES
S108
OUTPUT MODULUS M, MAPPING FUNCTION H, 2N-1 |M| -BIT NUMBERS: $NV_1$, $NV_2$, ··· , $NV_{2N-1}$, AND 2N-2 NUMBERS: $salt_2$, $salt_3$, ···, $salt_{2N-2}$
END

# FIG. 9

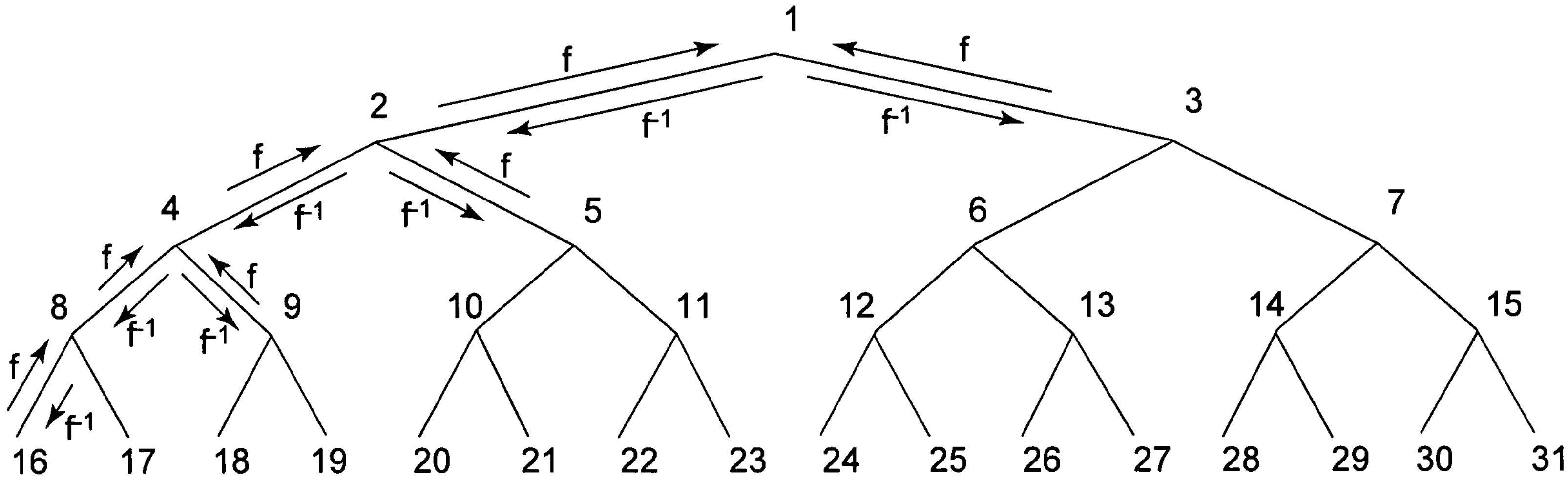


f: COMPUTATION USING FORWARD COMPUTATION (SQUARING MODULO M) F

$f^{-1}$: COMPUTATION USING INVERSE COMPUTATION (FINDING SQUARE ROOTS MODULO M) $F^{-1}$

FIG. 10

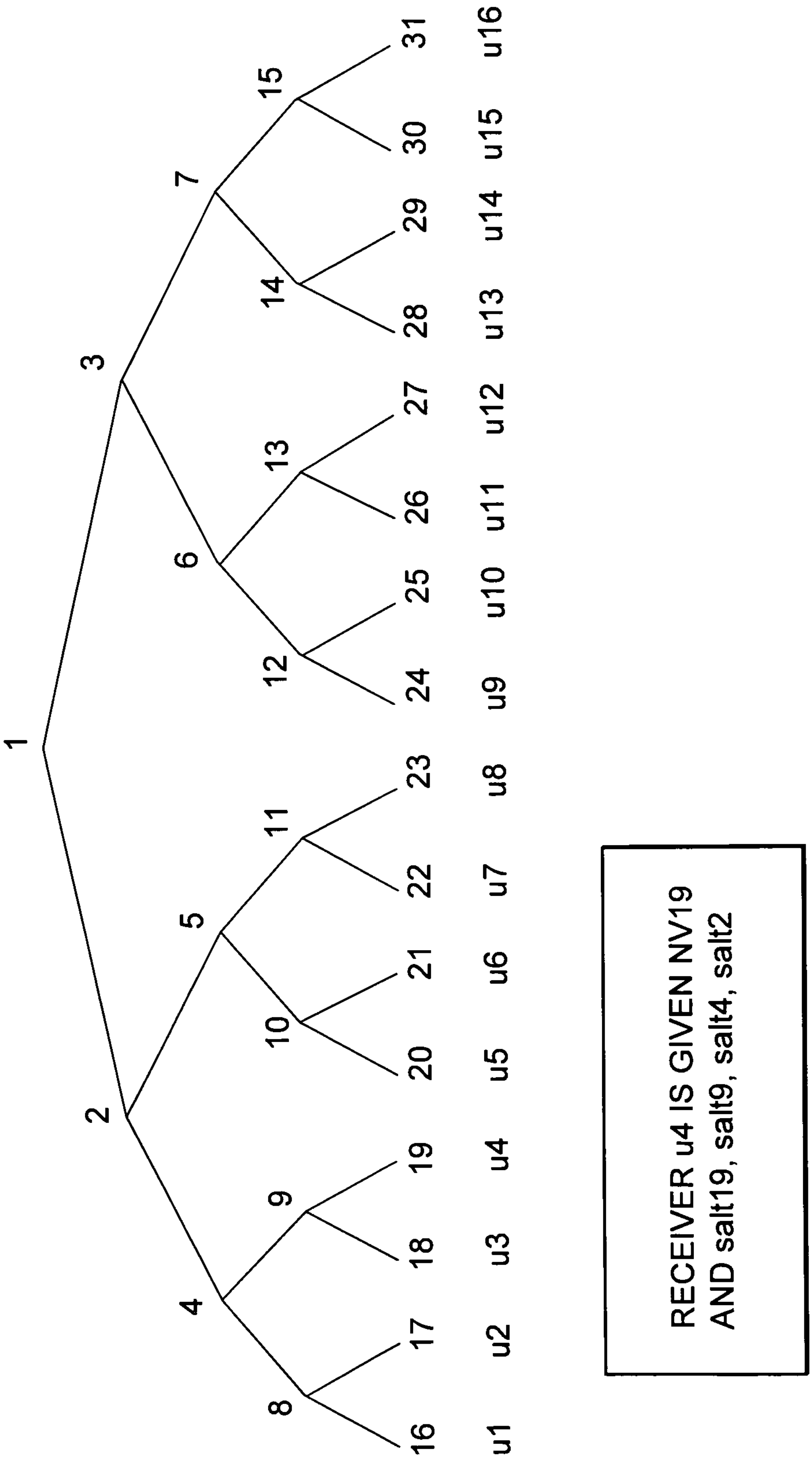
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
RECEIVER u4 IS GIVEN NV19
AND salt19, salt9, salt4, salt2

FIG. 11

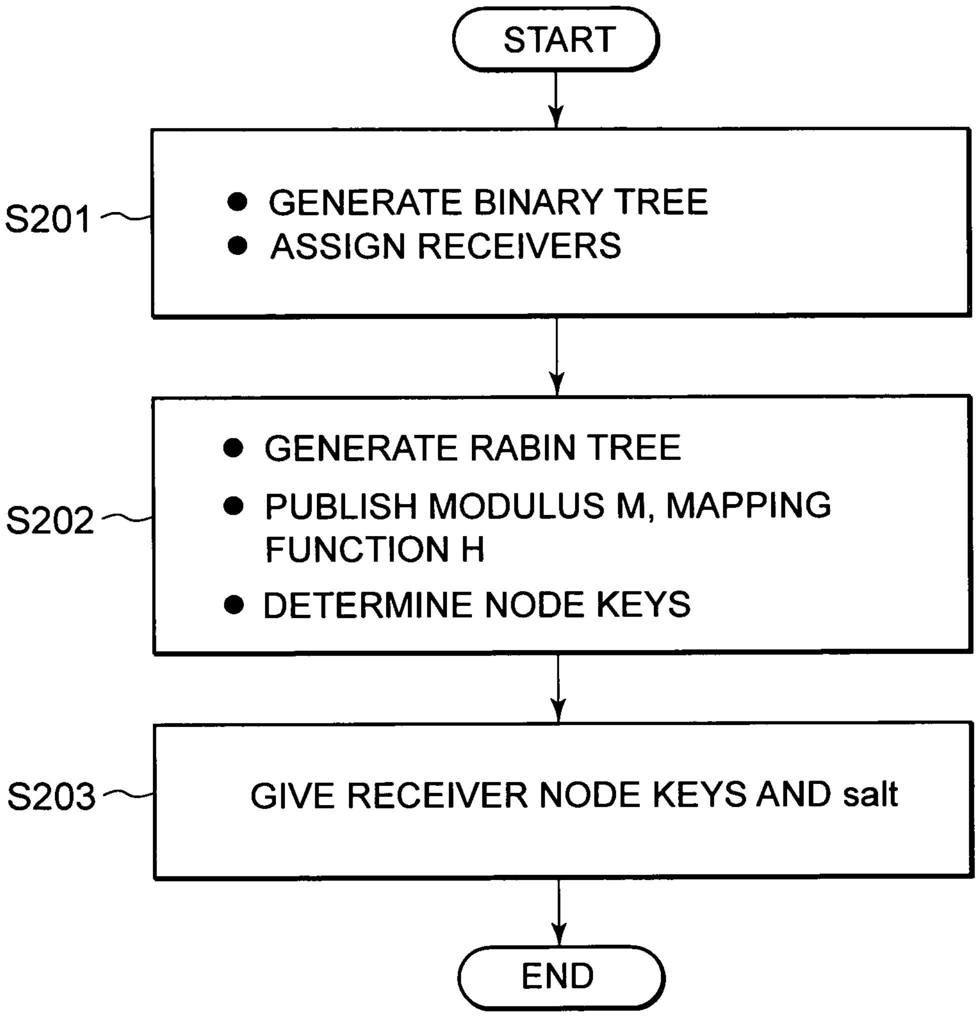
START
S201
GENERATE BINARY TREE
ASSIGN RECEIVERS
S202
GENERATE RABIN TREE
PUBLISH MODULUS M, MAPPING FUNCTION H
DETERMINE NODE KEYS
S203
GIVE RECEIVER NODE KEYS AND salt
END

FIG. 12

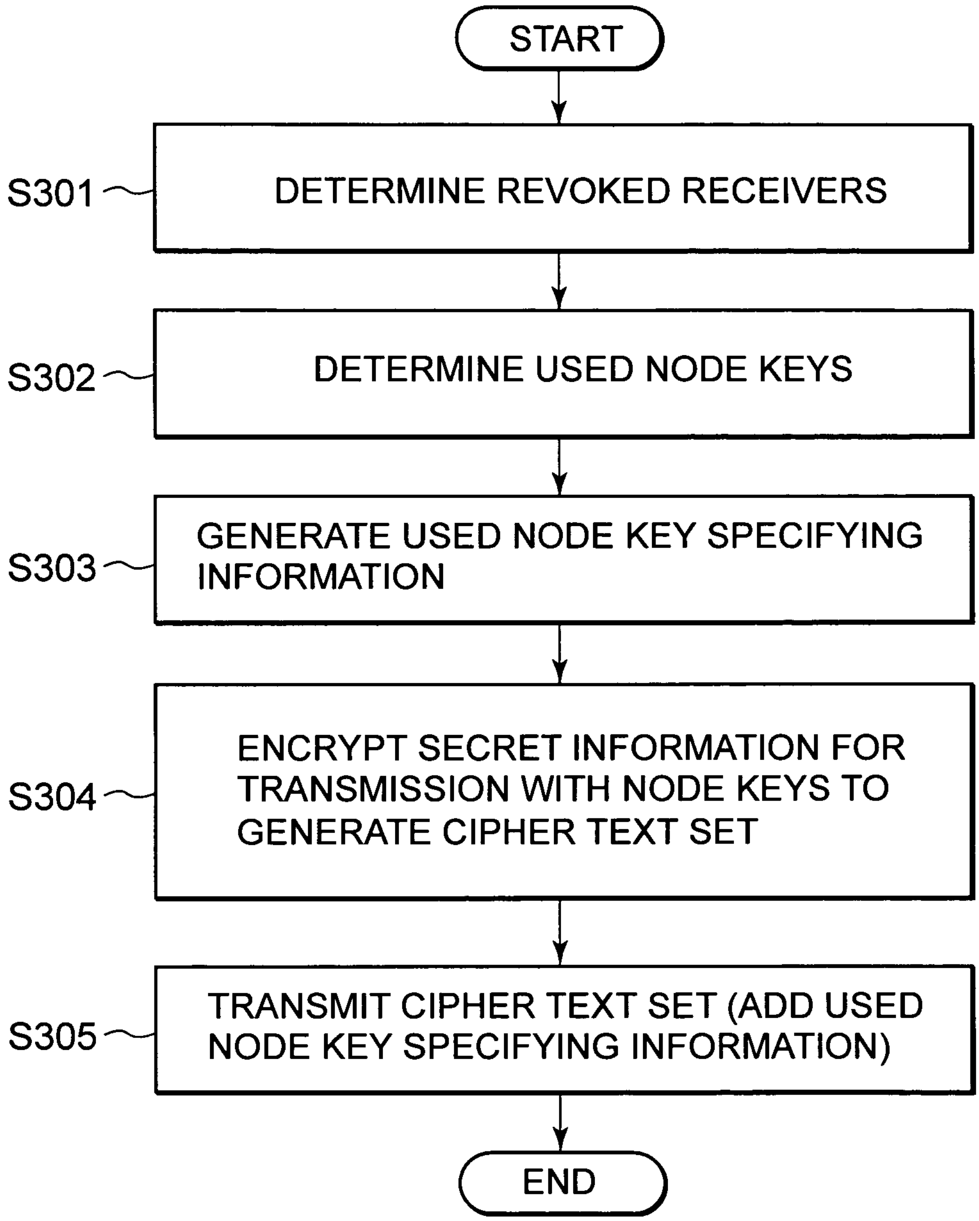
START
S301
DETERMINE REVOKED RECEIVERS
S302
DETERMINE USED NODE KEYS
S303
GENERATE USED NODE KEY SPECIFYING INFORMATION
S304
ENCRYPT SECRET INFORMATION FOR TRANSMISSION WITH NODE KEYS TO GENERATE CIPHER TEXT SET
S305
TRANSMIT CIPHER TEXT SET (ADD USED NODE KEY SPECIFYING INFORMATION)
END

FIG. 13

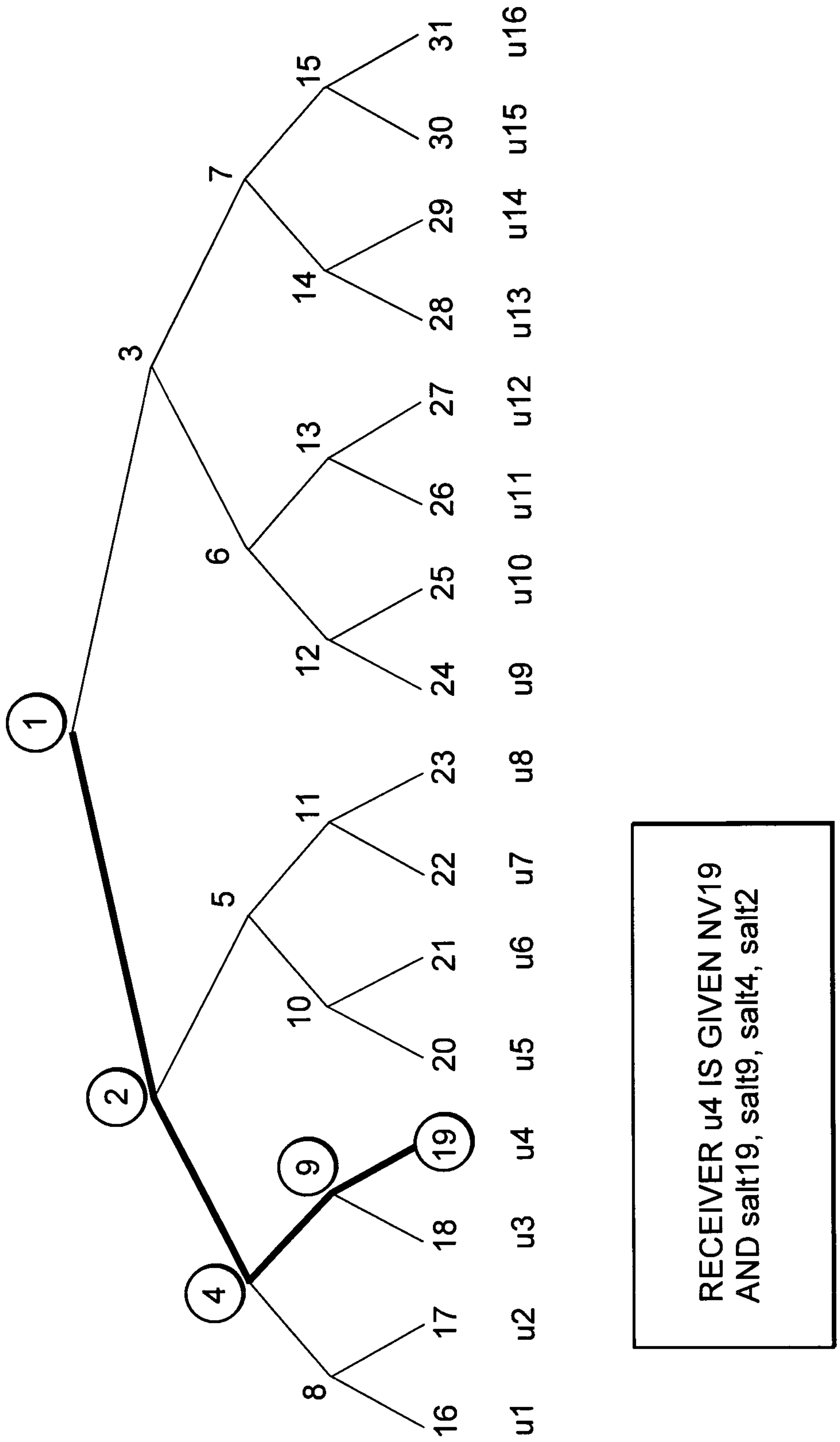
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
RECEIVER u4 IS GIVEN NV19
AND salt19, salt4, salt2

FIG. 14

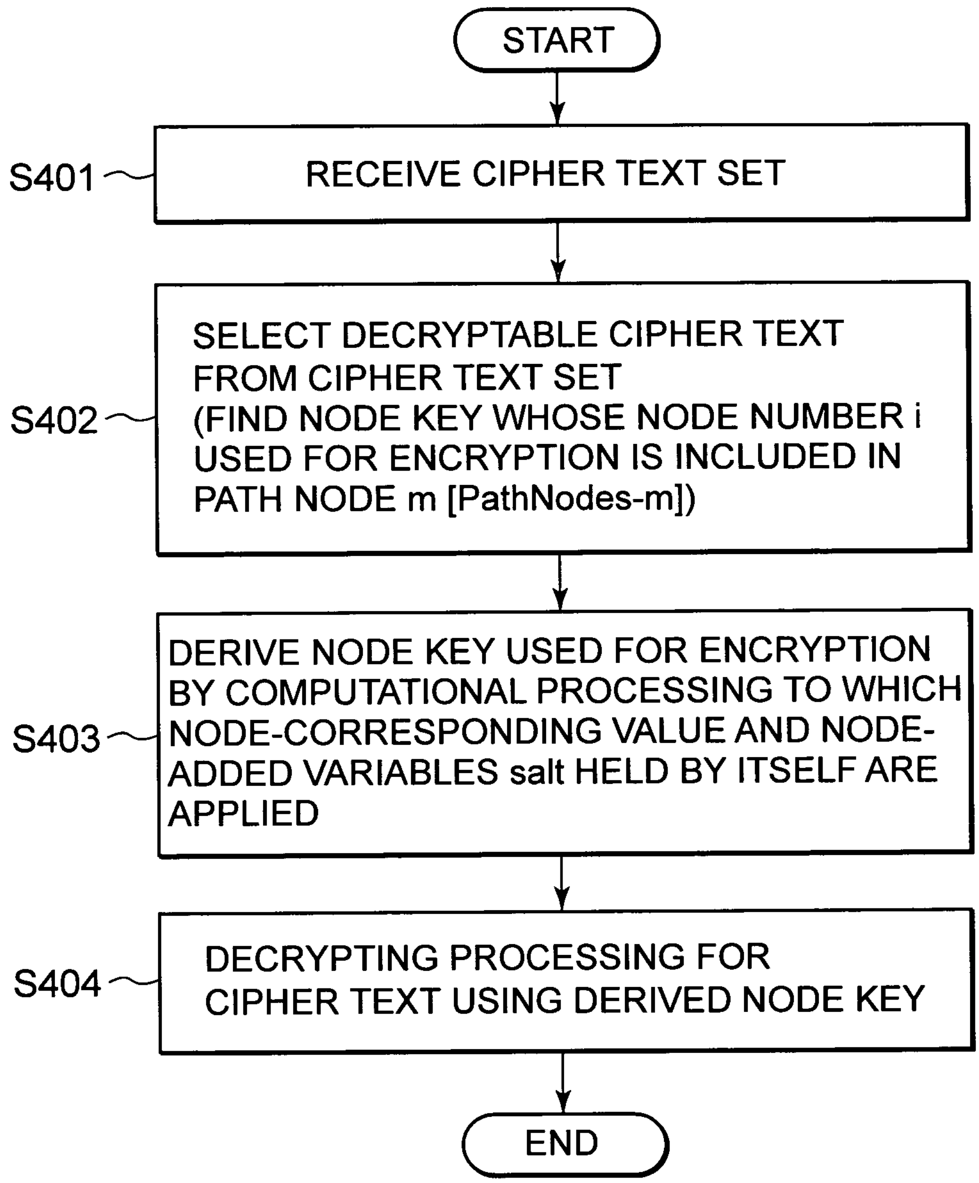
START
S401
RECEIVE CIPHER TEXT SET
S402
SELECT DECRYPTABLE CIPHER TEXT FROM CIPHER TEXT SET (FIND NODE KEY WHOSE NODE NUMBER i USED FOR ENCRYPTION IS INCLUDED IN PATH NODE m [PathNodes-m])
S403
DERIVE NODE KEY USED FOR ENCRYPTION BY COMPUTATIONAL PROCESSING TO WHICH NODE-CORRESPONDING VALUE AND NODE-ADDED VARIABLES salt HELD BY ITSELF ARE APPLIED
S404
DECRYPTING PROCESSING FOR CIPHER TEXT USING DERIVED NODE KEY
END

FIG. 15

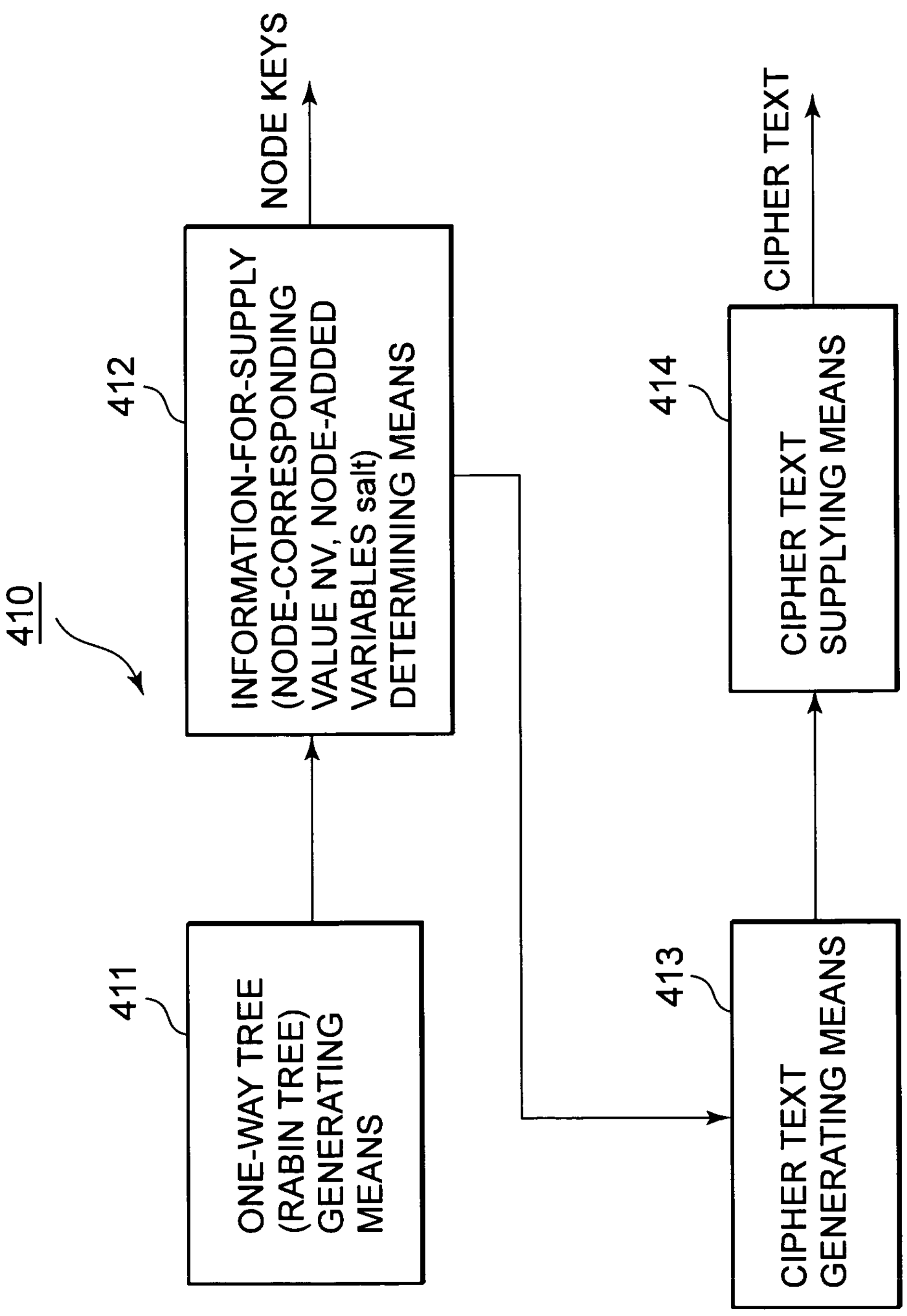
410
411
ONE-WAY TREE (RABIN TREE) GENERATING MEANS
412
INFORMATION-FOR-SUPPLY (NODE-CORRESPONDING VALUE NV, NODE-ADDED VARIABLES salt) DETERMINING MEANS
NODE KEYS
413
CIPHER TEXT GENERATING MEANS
414
CIPHER TEXT SUPPLYING MEANS
CIPHER TEXT

FIG. 16

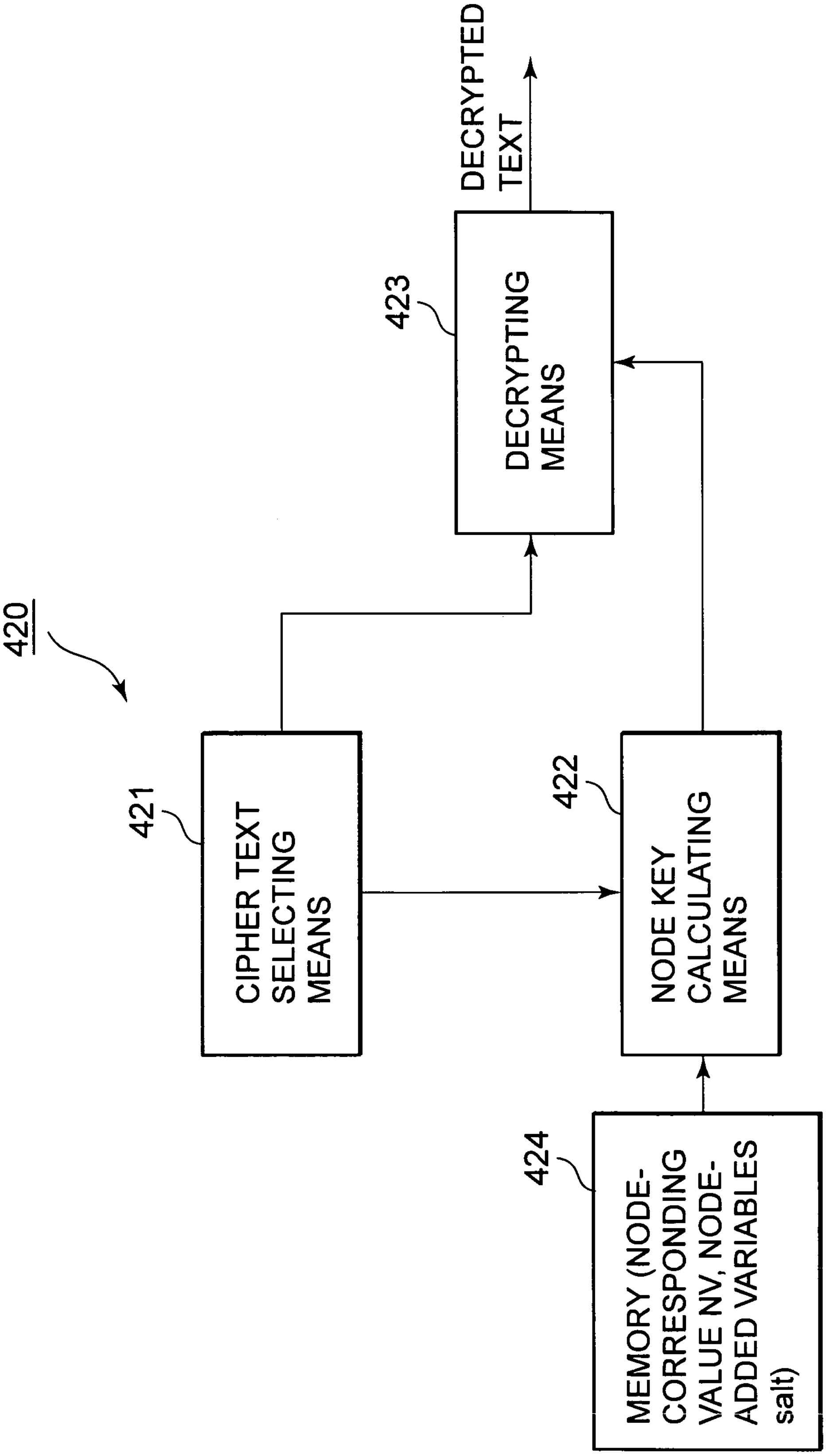
420
421
CIPHER TEXT SELECTING MEANS
422
NODE KEY CALCULATING MEANS
423
DECRYPTING MEANS
DECRYPTED TEXT
424
MEMORY (NODE-CORRESPONDING VALUE NV, NODE-ADDED VARIABLES salt)

FIG. 17

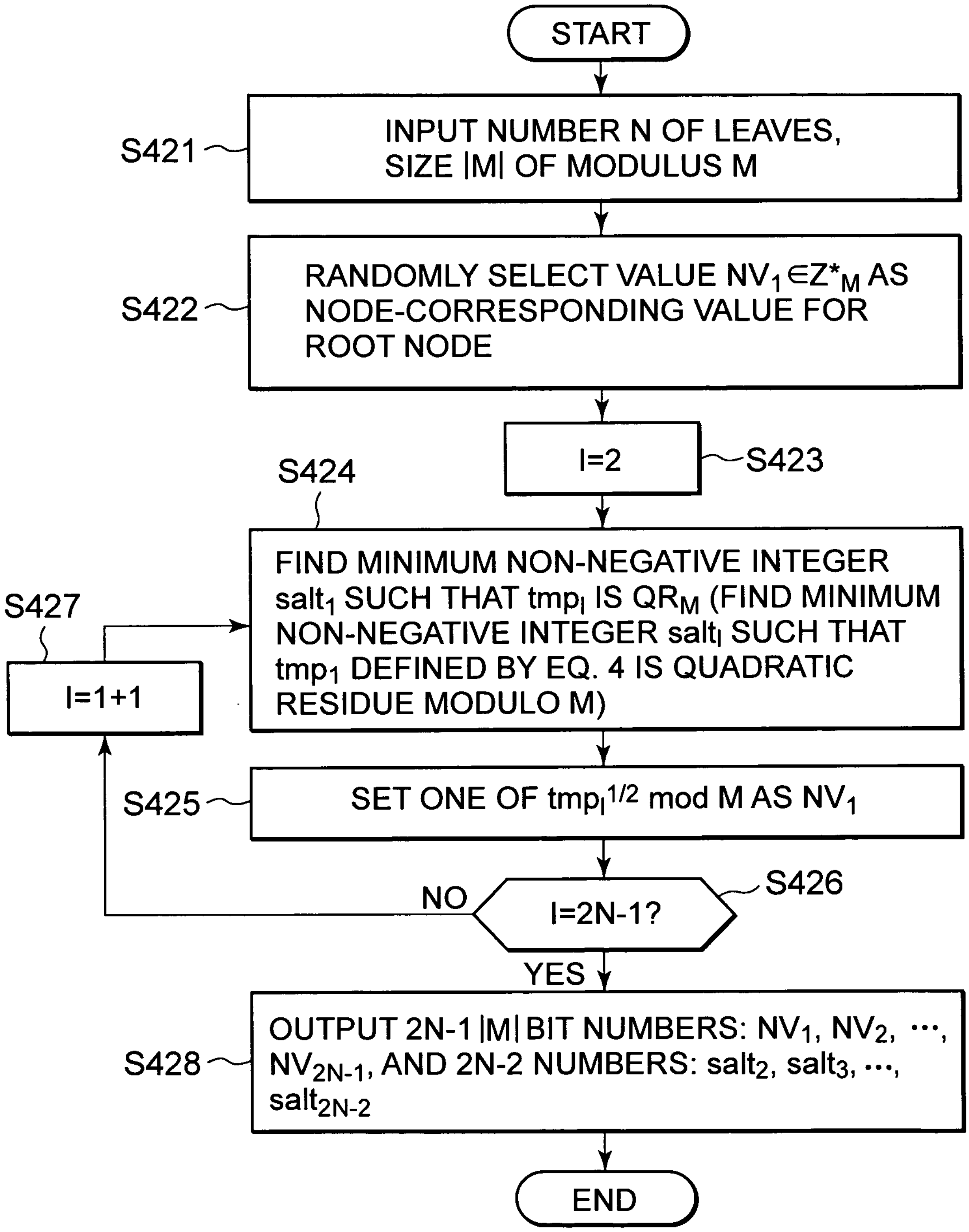
START
S421
INPUT NUMBER N OF LEAVES, SIZE |M| OF MODULUS M
S422
RANDOMLY SELECT VALUE NV1∈Z*M AS NODE-CORRESPONDING VALUE FOR ROOT NODE
I=2
S423
S424
FIND MINIMUM NON-NEGATIVE INTEGER salt1 SUCH THAT tmpI IS QRM (FIND MINIMUM NON-NEGATIVE INTEGER saltI SUCH THAT tmp1 DEFINED BY EQ. 4 IS QUADRATIC RESIDUE MODULO M)
S427
I=1+1
S425
SET ONE OF tmpI1/2 mod M AS NV1
NO
I=2N-1?
S426
YES
S428
OUTPUT 2N-1 |M| BIT NUMBERS: NV1, NV2, ···, NV2N-1, AND 2N-2 NUMBERS: salt2, salt3, ···, salt2N-2
END

FIG. 18

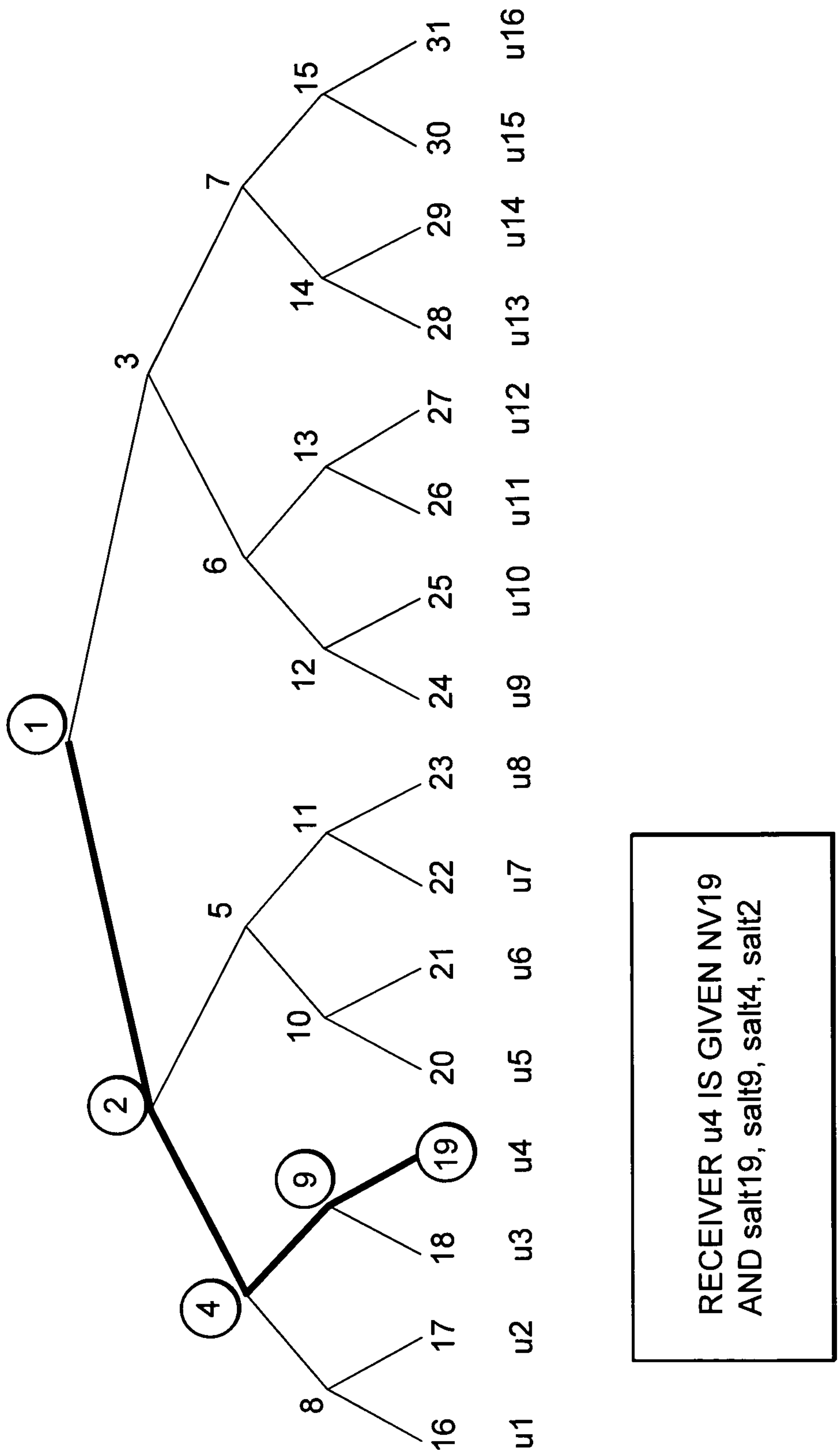
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
RECEIVER u4 IS GIVEN NV19
AND salt19, salt9, salt4, salt2

FIG. 19

$$NV_{19} \rightarrow NK_{19} = H_C(NV_{19})$$

$$NV_9 = ((NV_{19})^2 \text{ xor } H^{salt19}(19)) \text{ mod } M \rightarrow NK_9 = H_C(NV_9)$$

$$NV_4 = ((NV_9)^2 \text{ xor } H^{salt9}(9)) \text{ mod } M \rightarrow NK_4 = H_C(NV_4)$$

$$NV_2 = ((NV_4)^2 \text{ xor } H^{salt4}(4)) \text{ mod } M \rightarrow NK_2 = H_C(NV_2)$$

$$NV_1 = ((NV_2)^2 \text{ xor } H^{salt2}(2)) \text{ mod } M \rightarrow NK_1 = H_C(NV_1)$$

FIG. 20

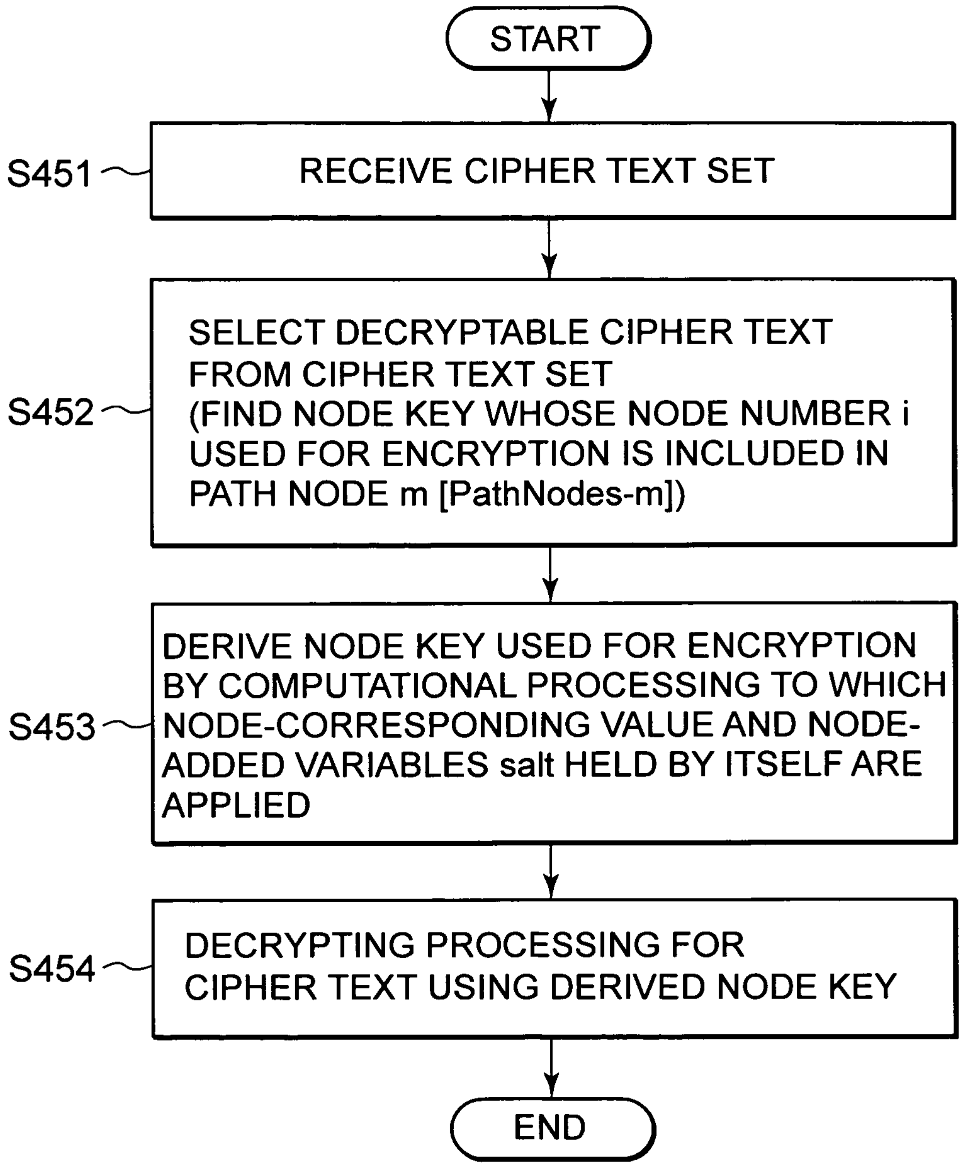
START
S451
RECEIVE CIPHER TEXT SET
S452
SELECT DECRYPTABLE CIPHER TEXT FROM CIPHER TEXT SET (FIND NODE KEY WHOSE NODE NUMBER i USED FOR ENCRYPTION IS INCLUDED IN PATH NODE m [PathNodes-m])
S453
DERIVE NODE KEY USED FOR ENCRYPTION BY COMPUTATIONAL PROCESSING TO WHICH NODE-CORRESPONDING VALUE AND NODE-ADDED VARIABLES salt HELD BY ITSELF ARE APPLIED
S454
DECRYPTING PROCESSING FOR CIPHER TEXT USING DERIVED NODE KEY
END

# FIG. 21

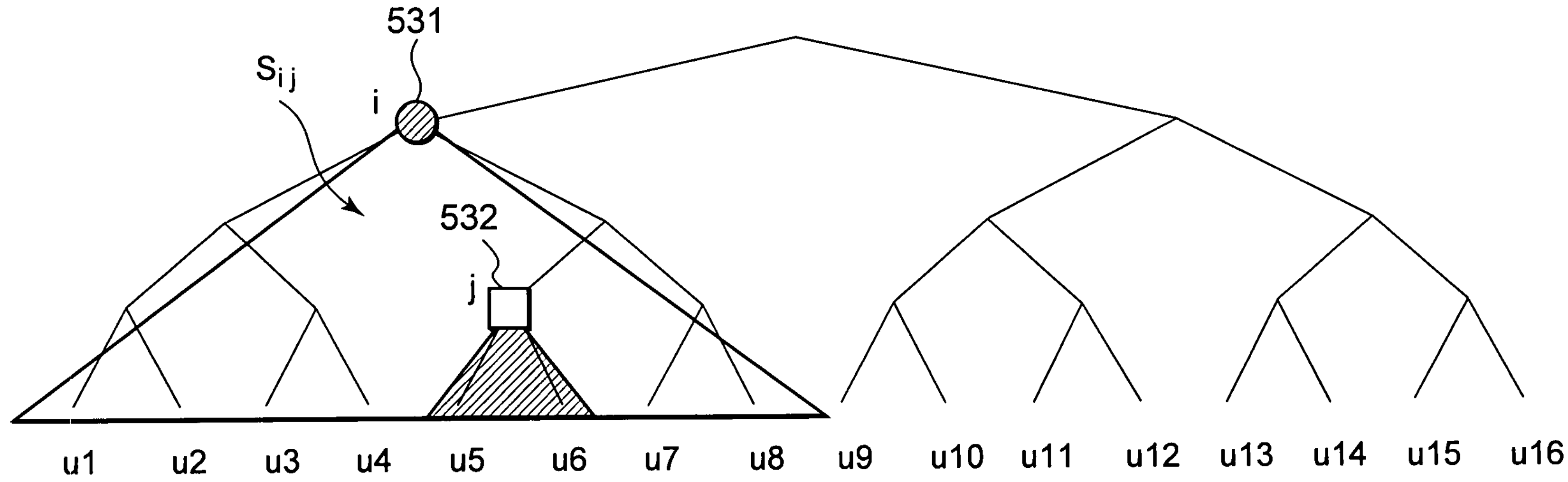


"TWO NODES" ARE USED TO REPRESENT "SET CONSISTING OF LEAVES OF SUBTREE ROOTED AT FIRST NODE - SET CONSISTING OF LEAVES OF SUBTREE ROOTED AT SECOND NODE"

Ex) Node i,j == Subset i,j ($S_{i,j}$) == {u1,..., u8} – {u5, u6} = {u1, u2, u3, u4, u7, u8}

SUCH SET IS DEFINED AS TO ALL NODE PAIRS (i,j) WHERE i IS ANCESTOR OF j

FIG. 22

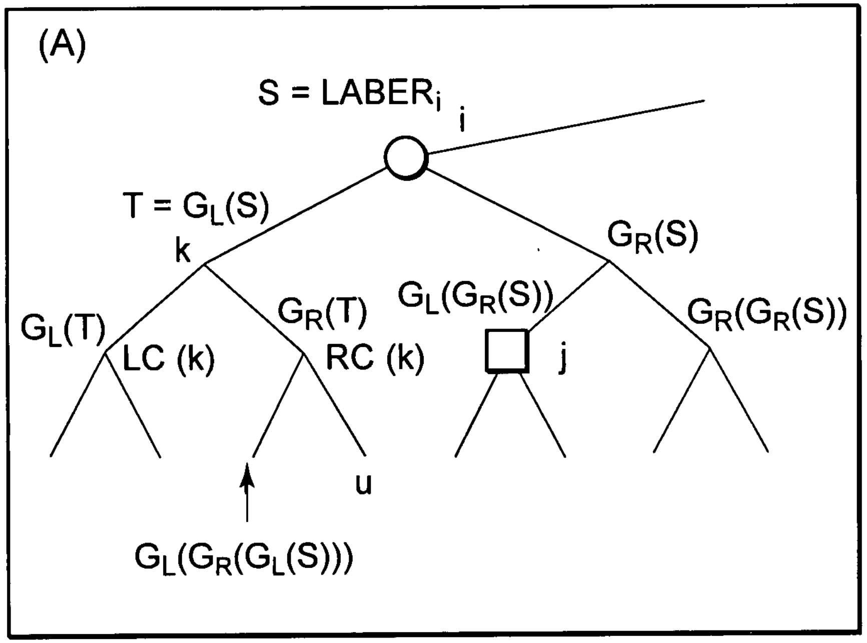
(A)
S = LABER_i
i
T = G_L(S)
k
G_R(S)
G_L(T)
LC (k)
G_R(T)
RC (k)
G_L(G_R(S))
j
G_R(G_R(S))
u
G_L(G_R(G_L(S)))

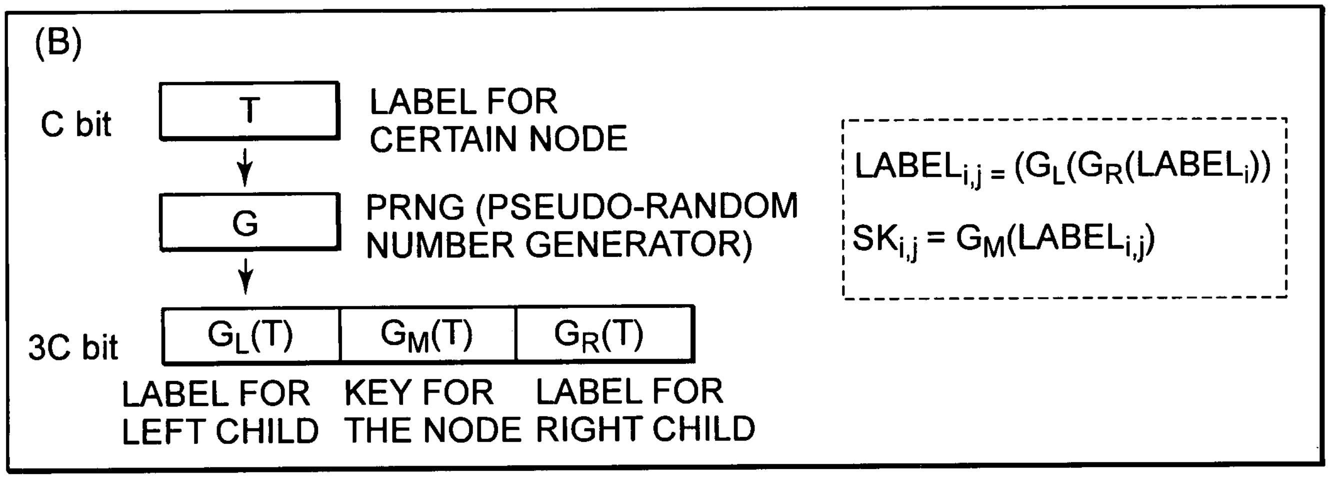
(B)
C bit
T
LABEL FOR CERTAIN NODE
G
PRNG (PSEUDO-RANDOM NUMBER GENERATOR)
3C bit
G_L(T)
G_M(T)
G_R(T)
LABEL FOR LEFT CHILD
KEY FOR THE NODE
LABEL FOR RIGHT CHILD
LABEL_i,j = (G_L(G_R(LABEL_i))
SK_i,j = G_M(LABEL_i,j)

FIG. 23

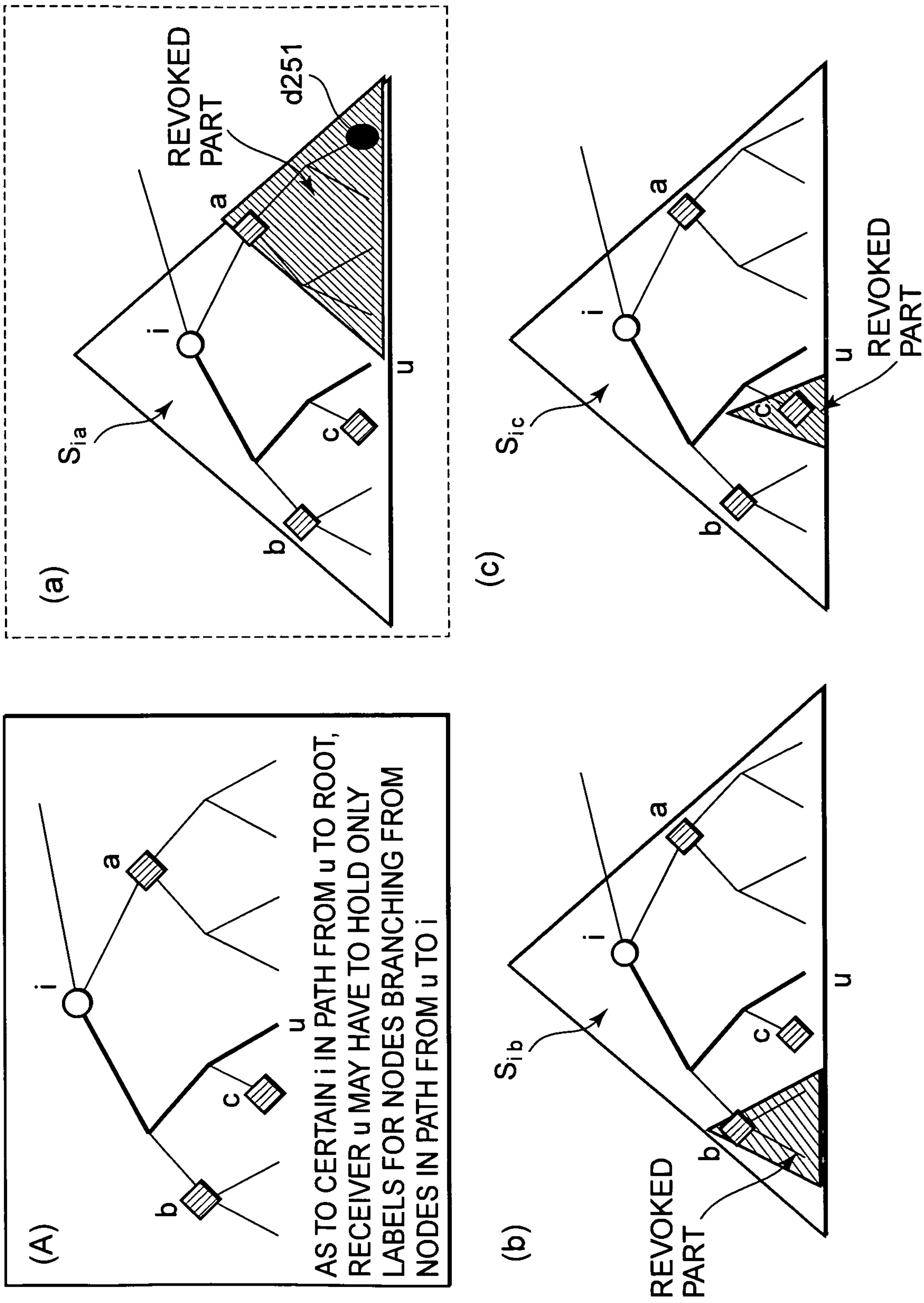
(A)
i
a
b
c
u
AS TO CERTAIN i IN PATH FROM u TO ROOT, RECEIVER u MAY HAVE TO HOLD ONLY LABELS FOR NODES BRANCHING FROM NODES IN PATH FROM u TO i
(a)
$S_{ia}$
REVOKED PART
d251
(b)
$S_{ib}$
REVOKED PART
(c)
$S_{ic}$
REVOKED PART

# FIG. 24

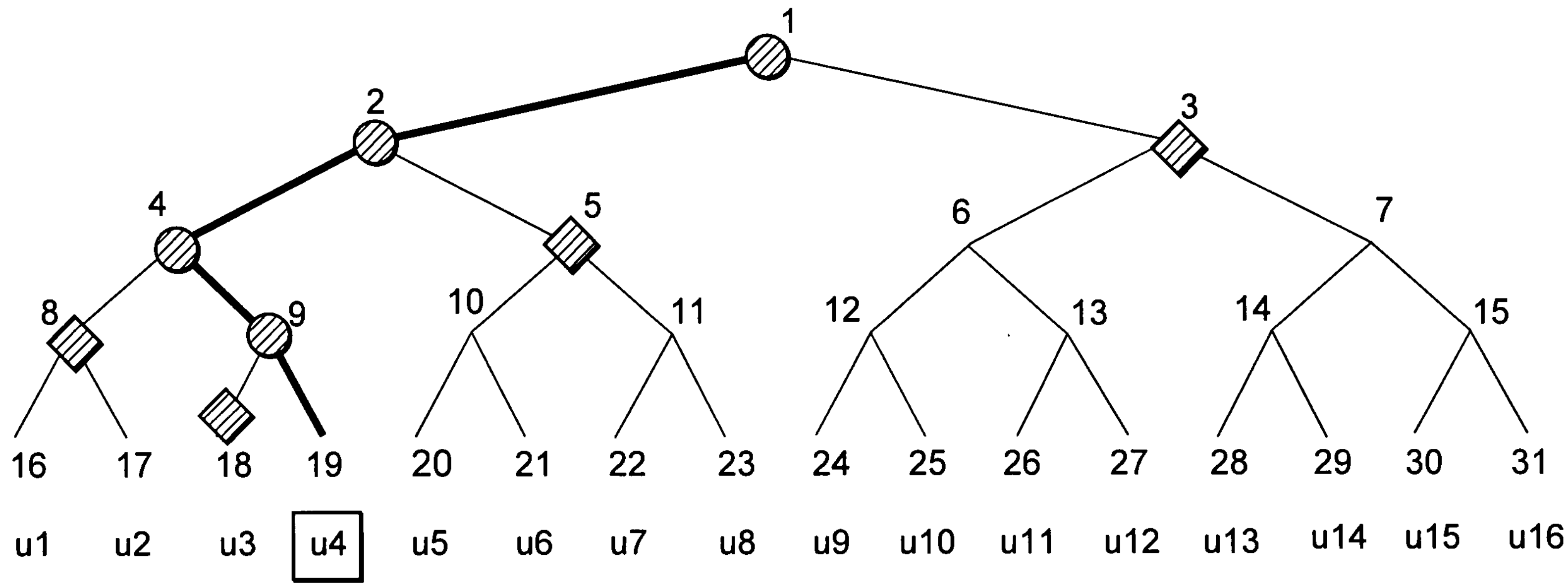


LABEL OWNED BY u4

- j = 3, 5, 8, 18 FOR i = 1
- j = 5, 8, 18 FOR i = 2
- j = 8, 18 FOR i = 4
- j = 18 FOR i = 9
- ONE LABEL IN CASE OF NO REVOCATION

NUMBER OF LABELS HELD BY RECEIVER (INCLUDING ONE USED IF NONE ARE REVOKED)

$$1+\sum_{k=1}^{\log N} k = \frac{1}{2}\log^2 N + \frac{1}{2}\log N + 1$$

FIG. 25

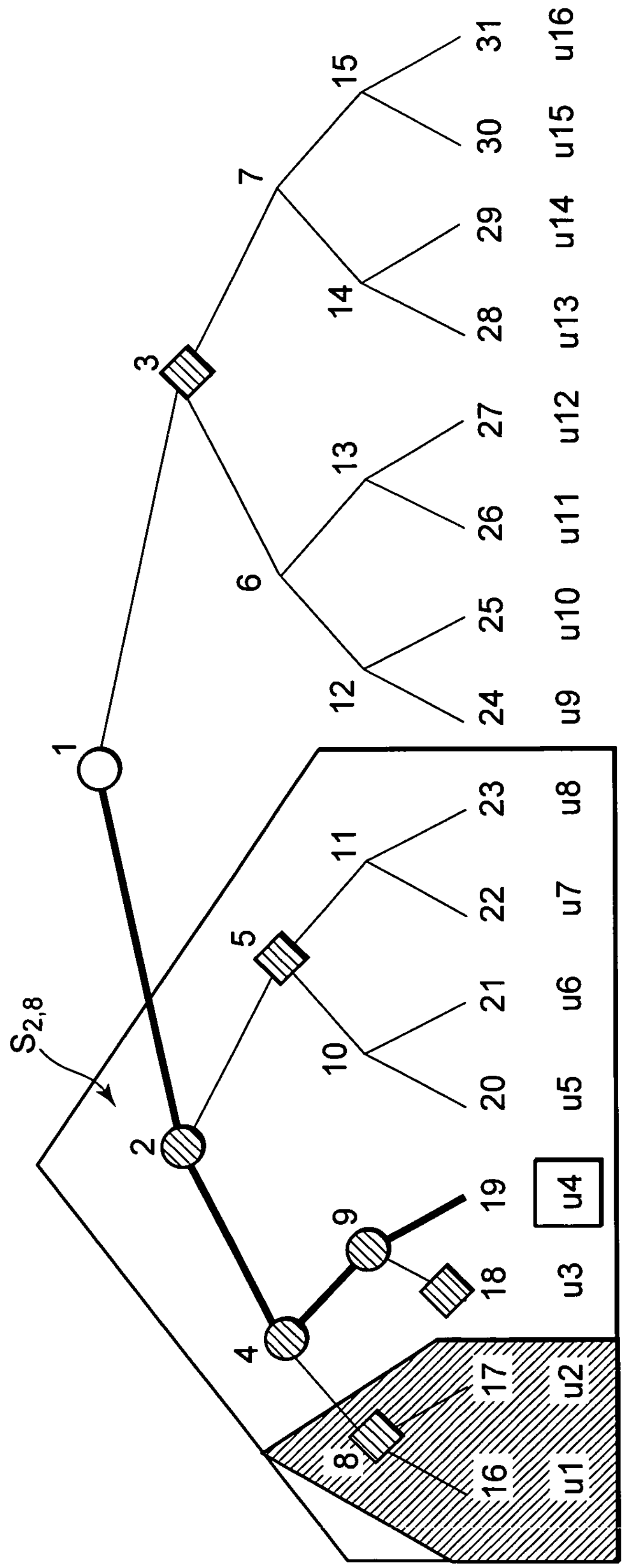
S2,8
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16

FIG. 26

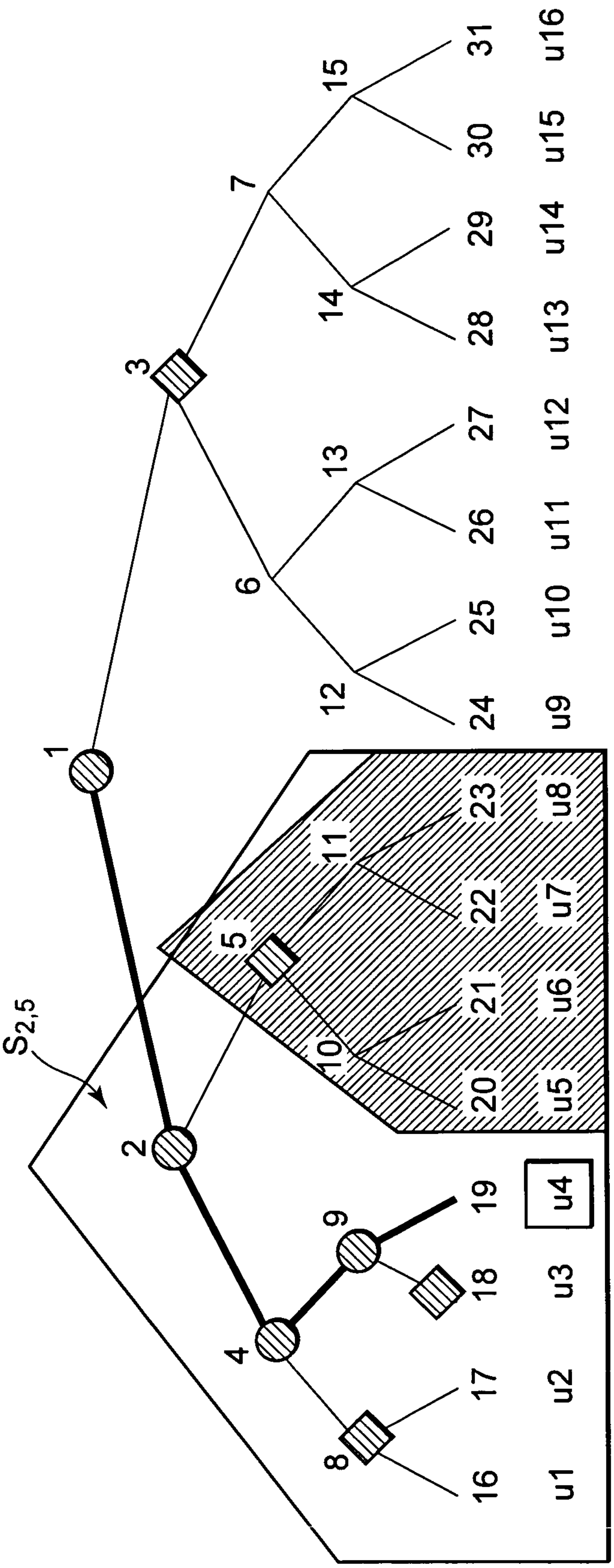

$S_{2,5}$
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16

FIG. 27

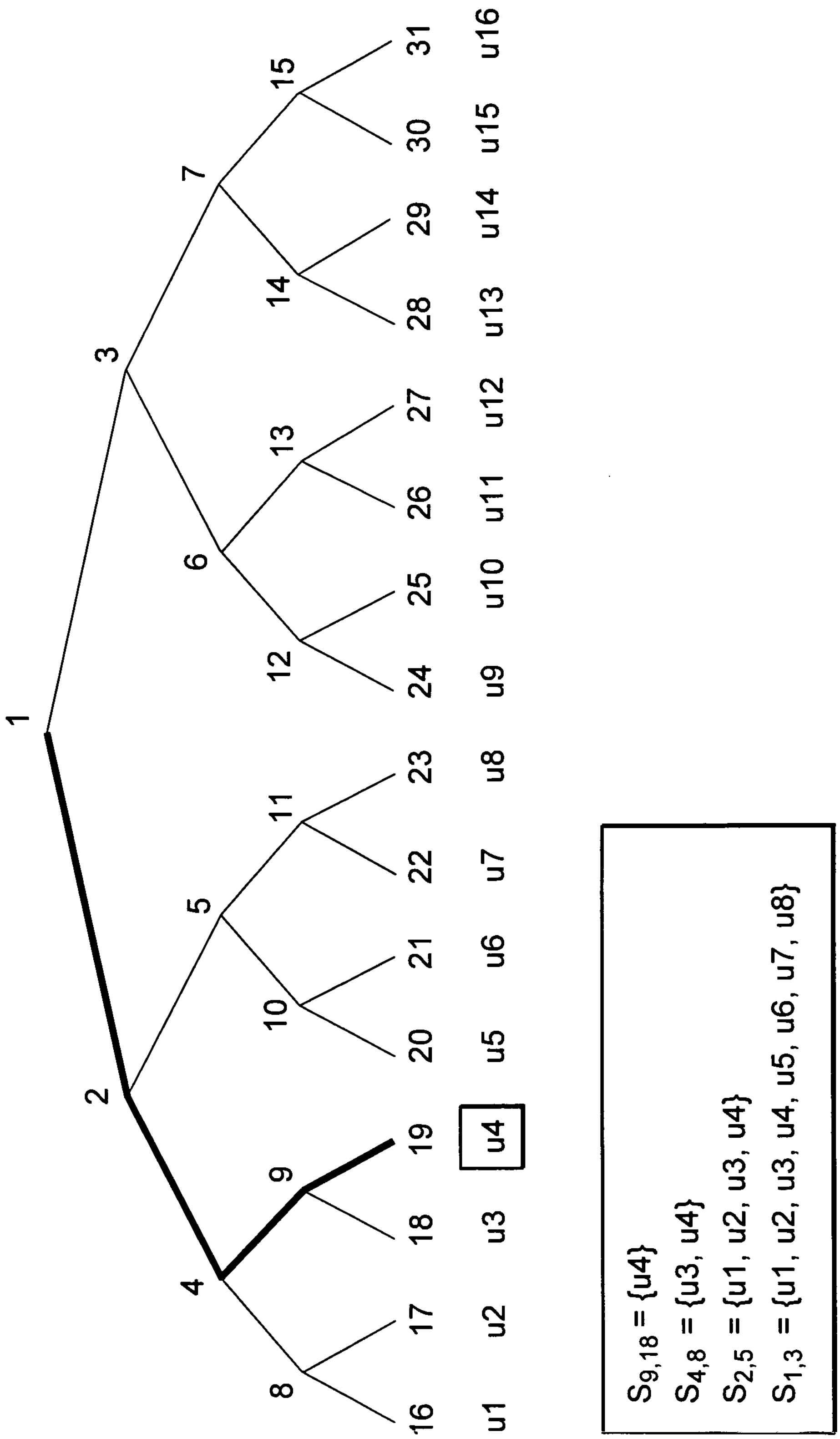
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
$S_{9,18}$ = {u4}
$S_{4,8}$ = {u3, u4}
$S_{2,5}$ = {u1, u2, u3, u4}
$S_{1,3}$ = {u1, u2, u3, u4, u5, u6, u7, u8}

FIG. 28

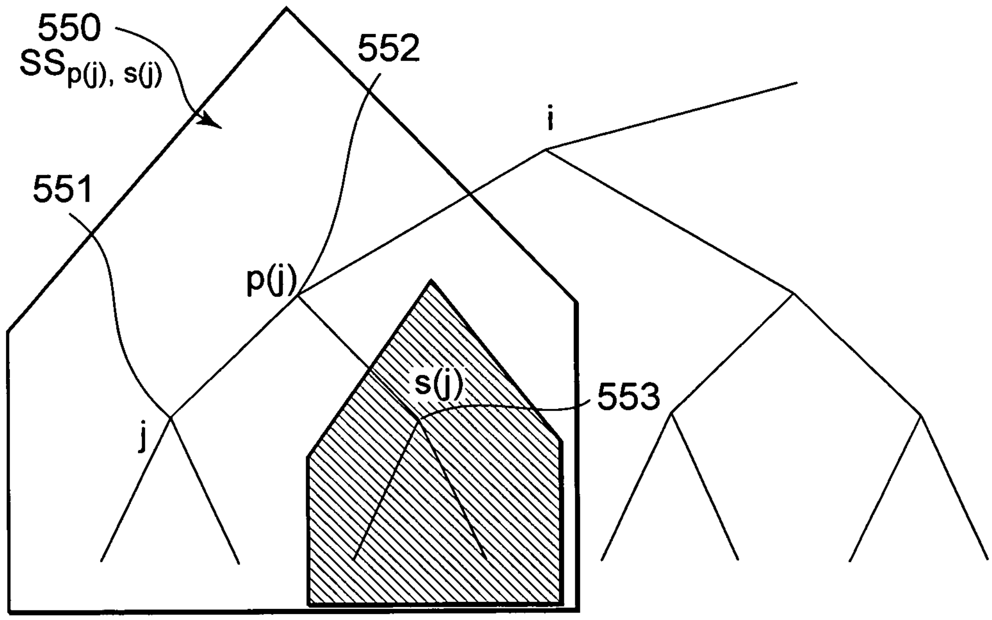


$NV_j = IL_{P(j),\ S(j)}$

$LABEL_{P(j),\ S(j)} = Hc\ (IL_{P(j),S(j)})$

$LABEL_{ij} = Hc\ (IL_{ij})$

FIG. 29

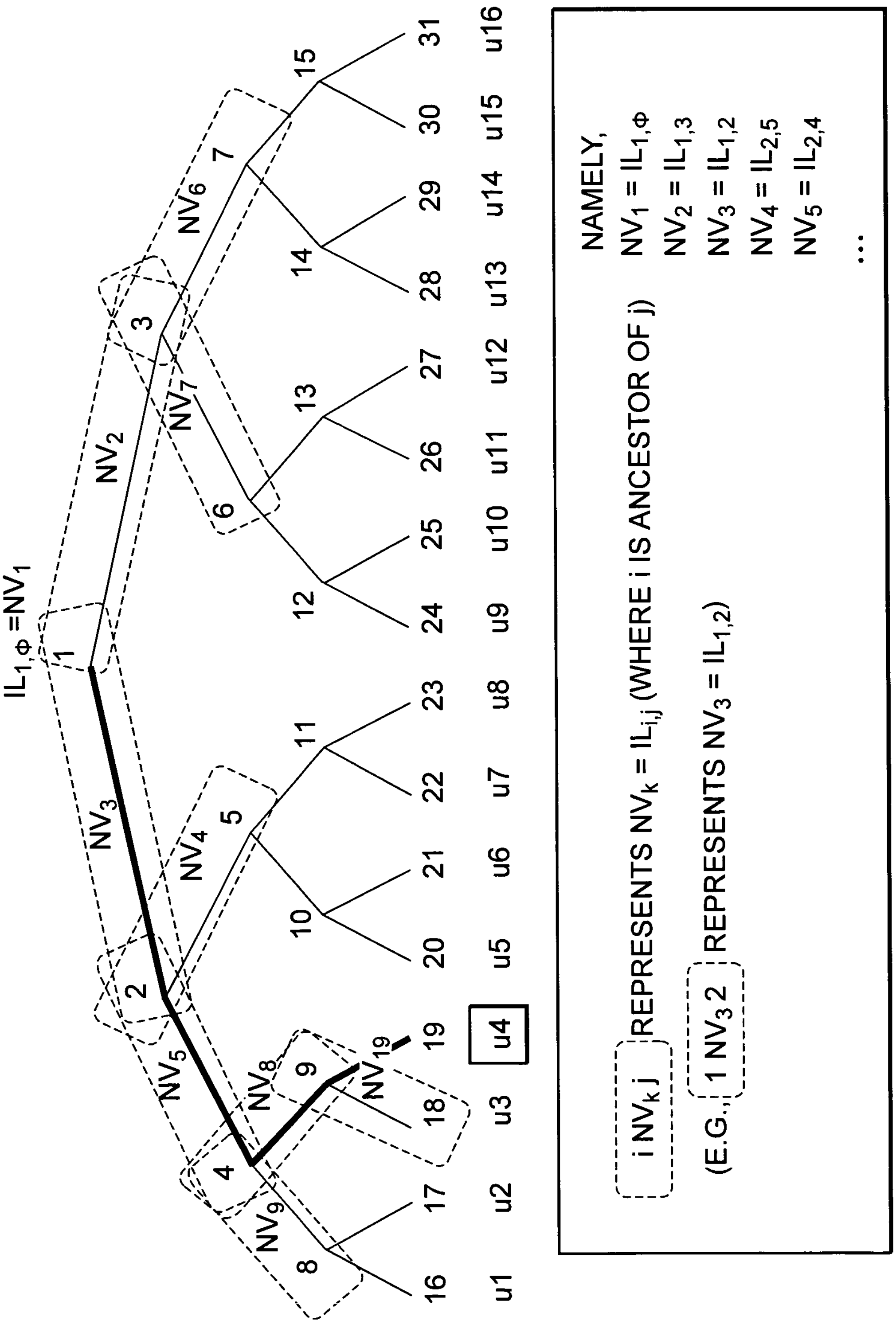

$IL_{1,\phi} = NV_1$
1
2
3
4
5
6
7
8
9
10
11
12
13
14
15
16
17
18
19
20
21
22
23
24
25
26
27
28
29
30
31
$NV_2$
$NV_3$
$NV_4$
$NV_5$
$NV_6$
$NV_7$
$NV_8$
$NV_9$
$NV_{19}$
u1
u2
u3
u4
u5
u6
u7
u8
u9
u10
u11
u12
u13
u14
u15
u16
i $NV_k$ j REPRESENTS $NV_k = IL_{i,j}$ (WHERE i IS ANCESTOR OF j)
(E.G., 1 $NV_3$ 2 REPRESENTS $NV_3 = IL_{1,2}$)
NAMELY,
$NV_1 = IL_{1,\phi}$
$NV_2 = IL_{1,3}$
$NV_3 = IL_{1,2}$
$NV_4 = IL_{2,5}$
$NV_5 = IL_{2,4}$
...

FIG. 30

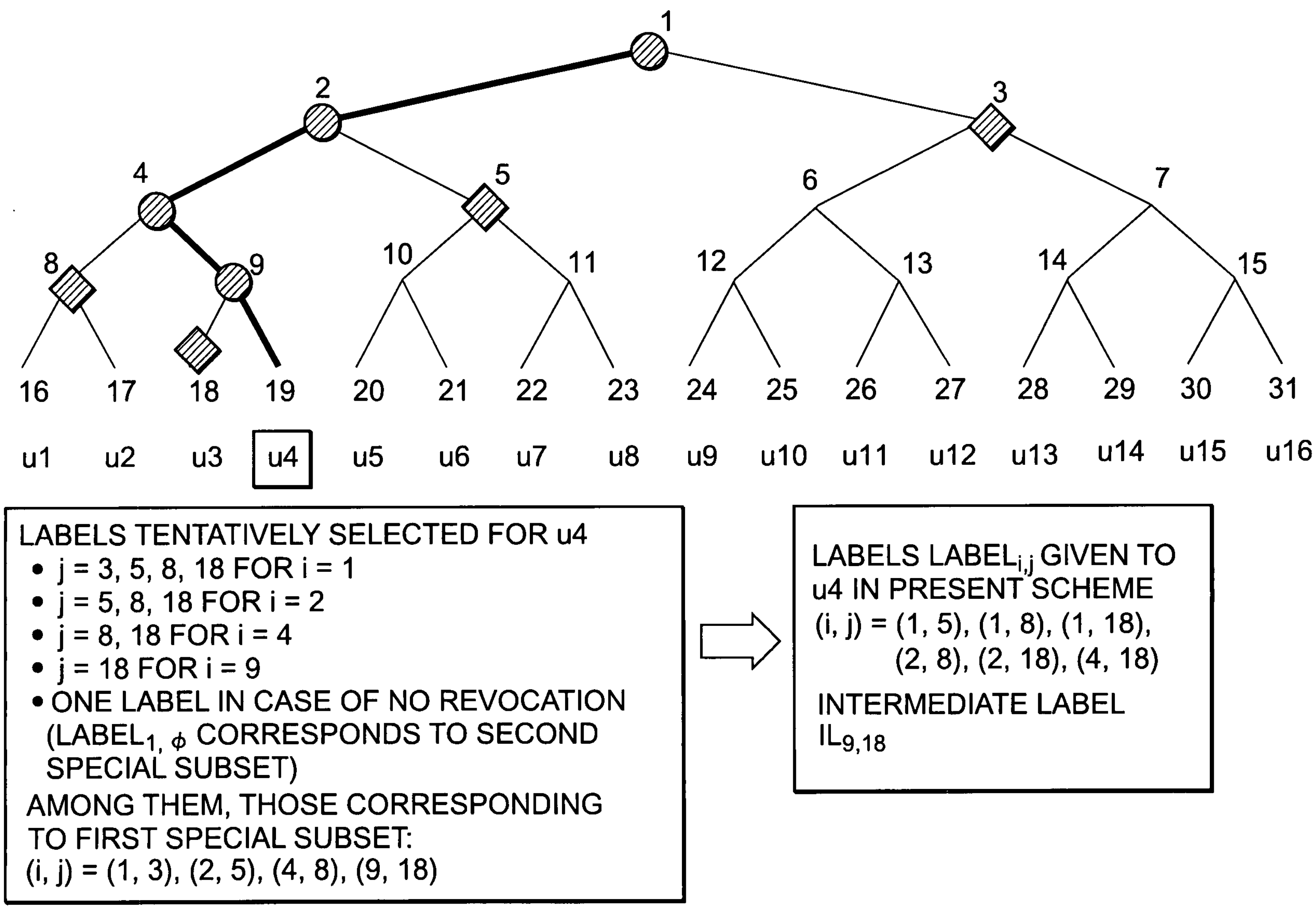
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
LABELS TENTATIVELY SELECTED FOR u4
• j = 3, 5, 8, 18 FOR i = 1
• j = 5, 8, 18 FOR i = 2
• j = 8, 18 FOR i = 4
• j = 18 FOR i = 9
• ONE LABEL IN CASE OF NO REVOCATION (LABEL$_{1, \phi}$ CORRESPONDS TO SECOND SPECIAL SUBSET)
AMONG THEM, THOSE CORRESPONDING TO FIRST SPECIAL SUBSET:
(i, j) = (1, 3), (2, 5), (4, 8), (9, 18)
LABELS LABEL$_{i,j}$ GIVEN TO u4 IN PRESENT SCHEME
(i, j) = (1, 5), (1, 8), (1, 18), (2, 8), (2, 18), (4, 18)
INTERMEDIATE LABEL
$IL_{9,18}$

FIG. 31

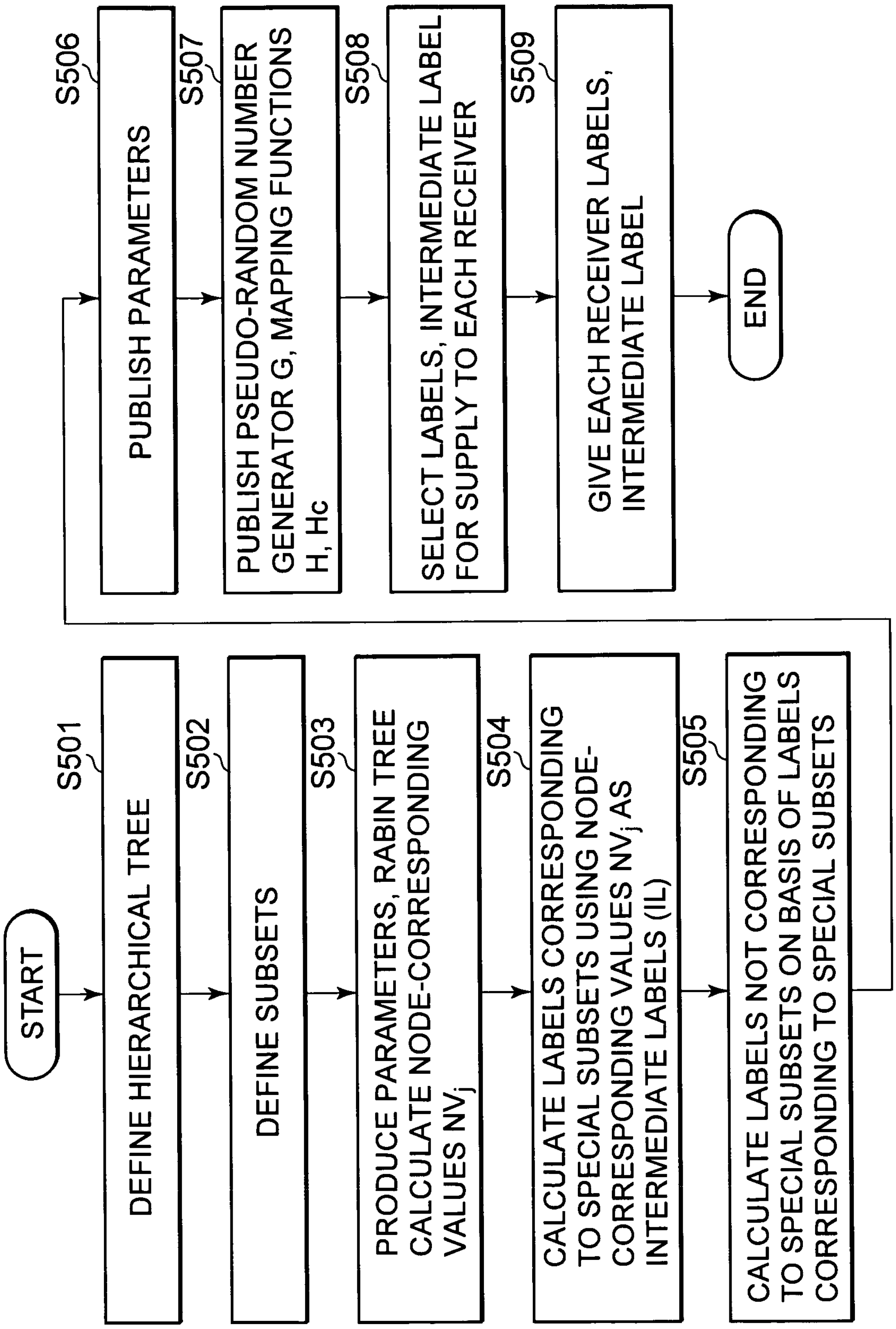
START
DEFINE HIERARCHICAL TREE
S501
DEFINE SUBSETS
S502
PRODUCE PARAMETERS, RABIN TREE
CALCULATE NODE-CORRESPONDING
VALUES $NV_j$
S503
CALCULATE LABELS CORRESPONDING
TO SPECIAL SUBSETS USING NODE-
CORRESPONDING VALUES $NV_j$ AS
INTERMEDIATE LABELS (IL)
S504
CALCULATE LABELS NOT CORRESPONDING
TO SPECIAL SUBSETS ON BASIS OF LABELS
CORRESPONDING TO SPECIAL SUBSETS
S505
PUBLISH PARAMETERS
S506
PUBLISH PSEUDO-RANDOM NUMBER
GENERATOR G, MAPPING FUNCTIONS
H, Hc
S507
SELECT LABELS, INTERMEDIATE LABEL
FOR SUPPLY TO EACH RECEIVER
S508
GIVE EACH RECEIVER LABELS,
INTERMEDIATE LABEL
S509
END

# FIG. 32

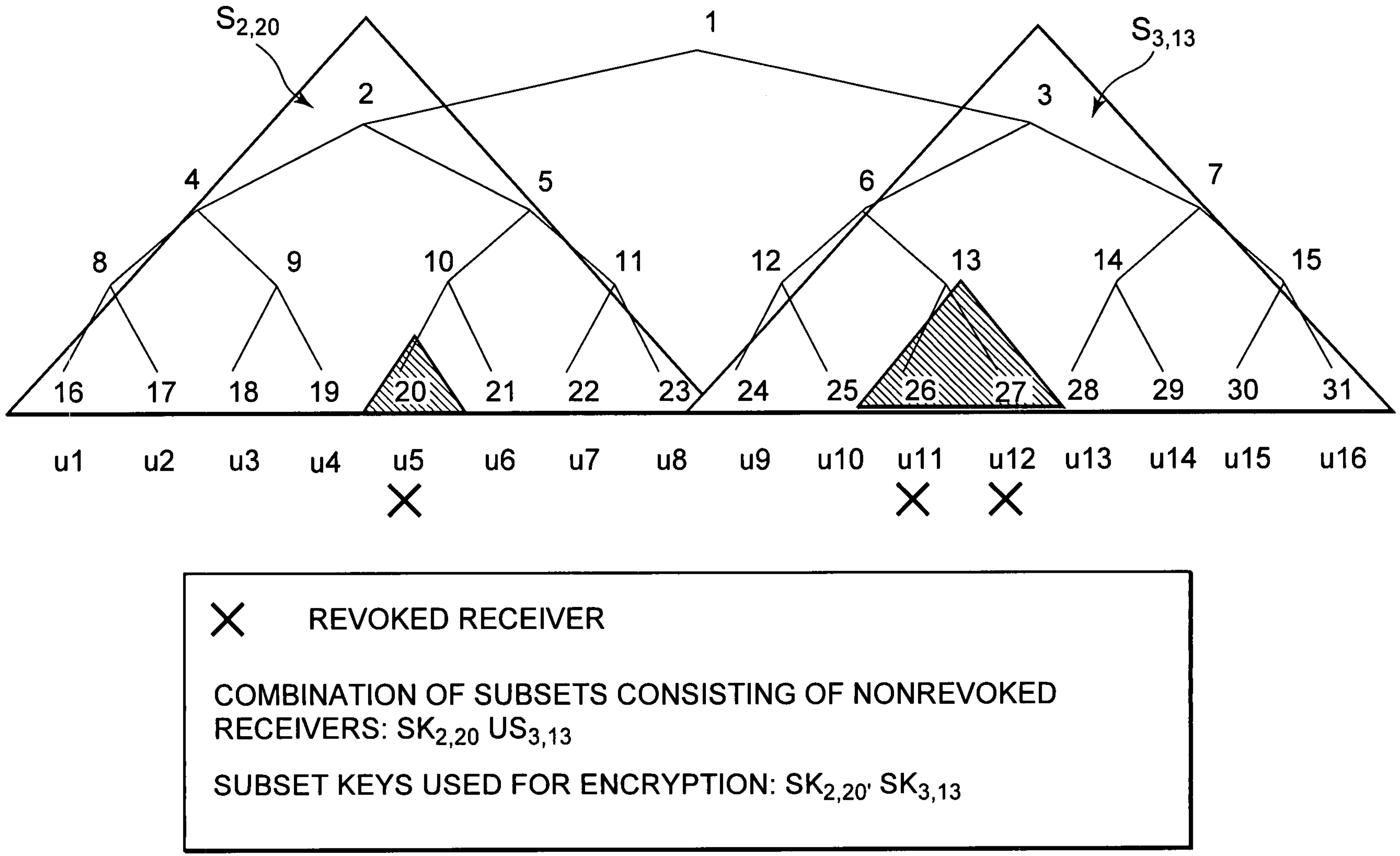

$S_{2,20}$
$S_{3,13}$
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
REVOKED RECEIVER
COMBINATION OF SUBSETS CONSISTING OF NONREVOKED RECEIVERS: $SK_{2,20}$ $US_{3,13}$
SUBSET KEYS USED FOR ENCRYPTION: $SK_{2,20}$, $SK_{3,13}$

FIG. 33

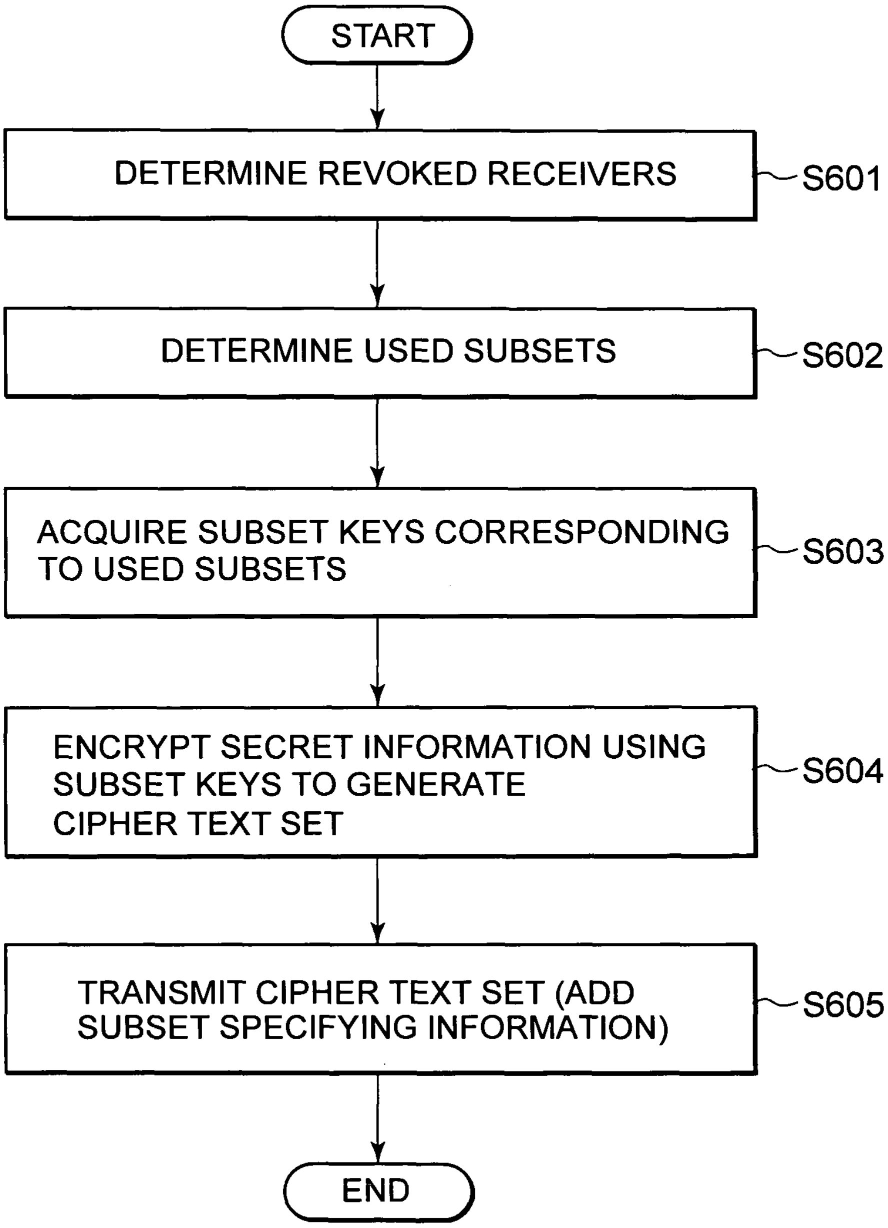
START
DETERMINE REVOKED RECEIVERS
S601
DETERMINE USED SUBSETS
S602
ACQUIRE SUBSET KEYS CORRESPONDING TO USED SUBSETS
S603
ENCRYPT SECRET INFORMATION USING SUBSET KEYS TO GENERATE CIPHER TEXT SET
S604
TRANSMIT CIPHER TEXT SET (ADD SUBSET SPECIFYING INFORMATION)
S605
END

# FIG. 34

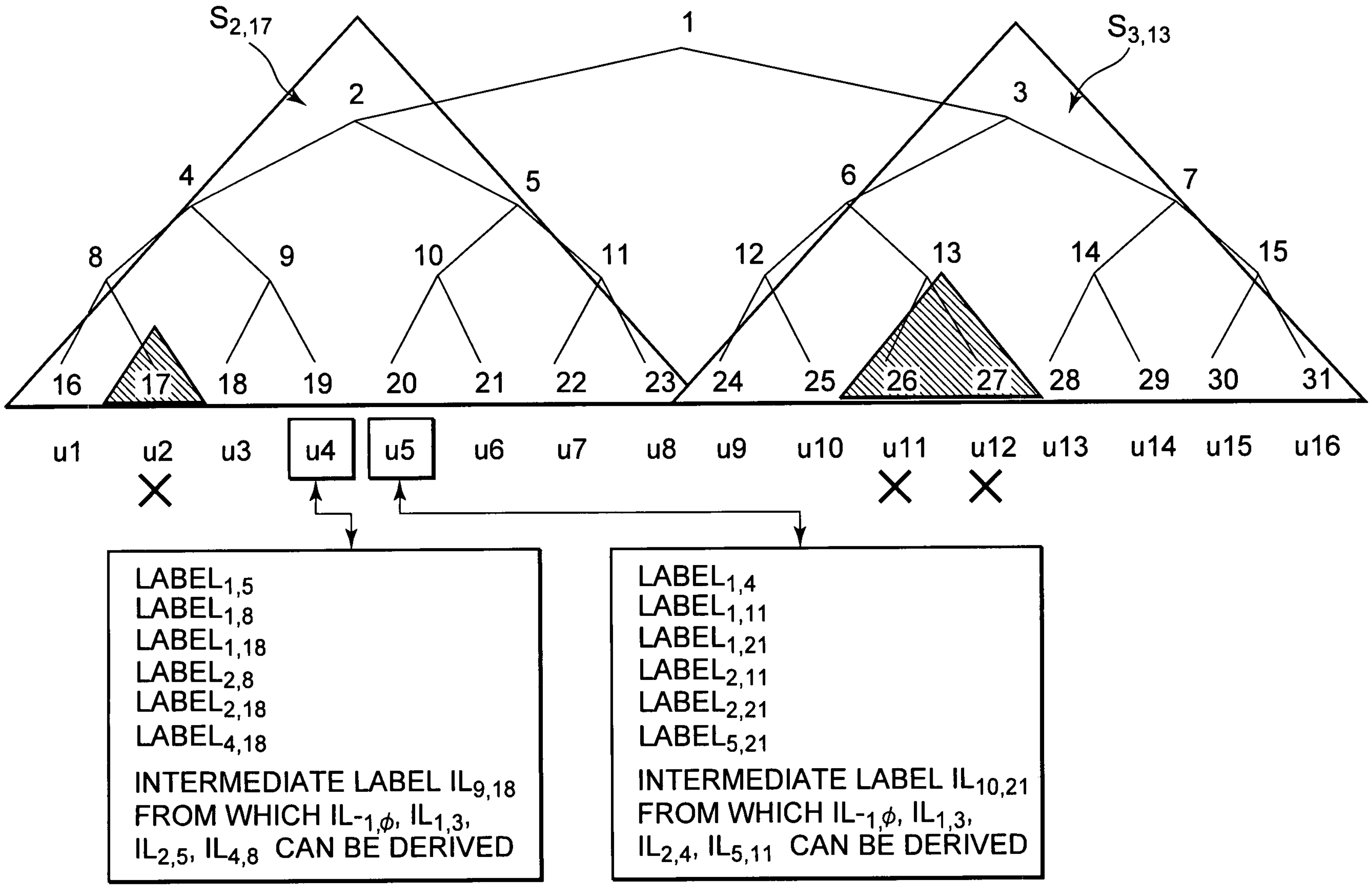
S2,17
S3,13
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
LABEL1,5
LABEL1,8
LABEL1,18
LABEL2,8
LABEL2,18
LABEL4,18
INTERMEDIATE LABEL IL9,18
FROM WHICH IL-1,φ, IL1,3,
IL2,5, IL4,8 CAN BE DERIVED
LABEL1,4
LABEL1,11
LABEL1,21
LABEL2,11
LABEL2,21
LABEL5,21
INTERMEDIATE LABEL IL10,21
FROM WHICH IL-1,φ, IL1,3,
IL2,4, IL5,11 CAN BE DERIVED

FIG. 35

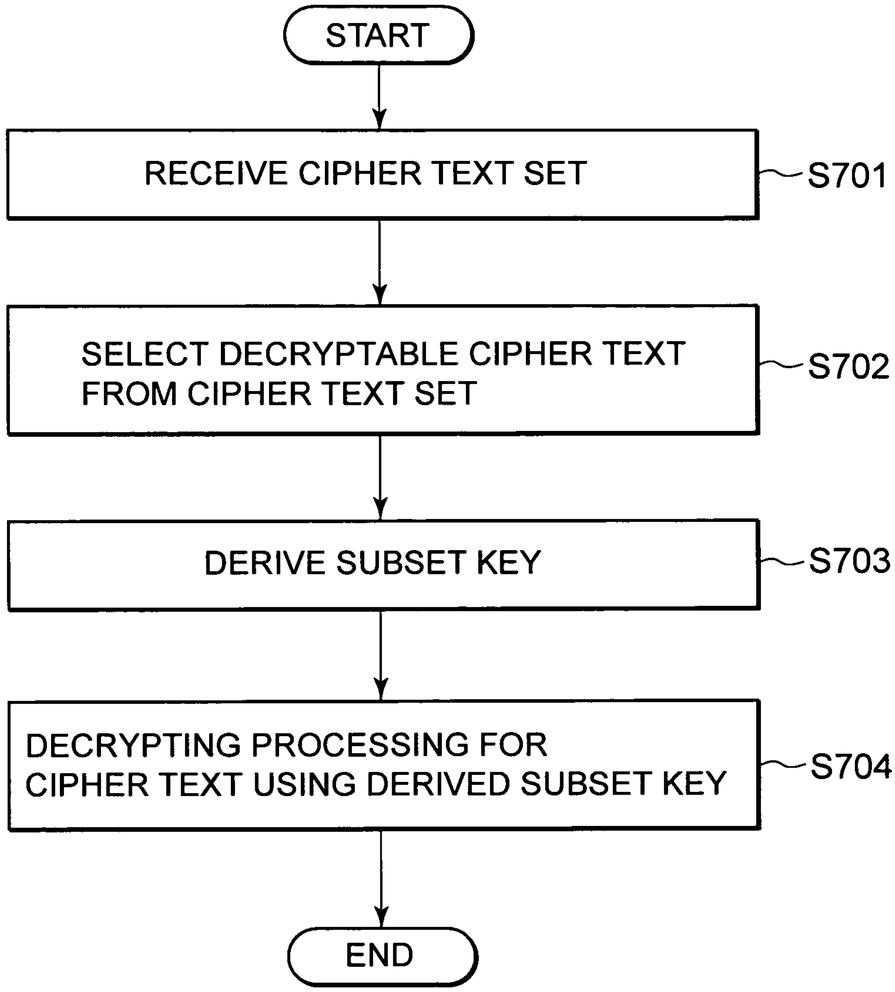
START
RECEIVE CIPHER TEXT SET
S701
SELECT DECRYPTABLE CIPHER TEXT FROM CIPHER TEXT SET
S702
DERIVE SUBSET KEY
S703
DECRYPTING PROCESSING FOR CIPHER TEXT USING DERIVED SUBSET KEY
S704
END

FIG. 36

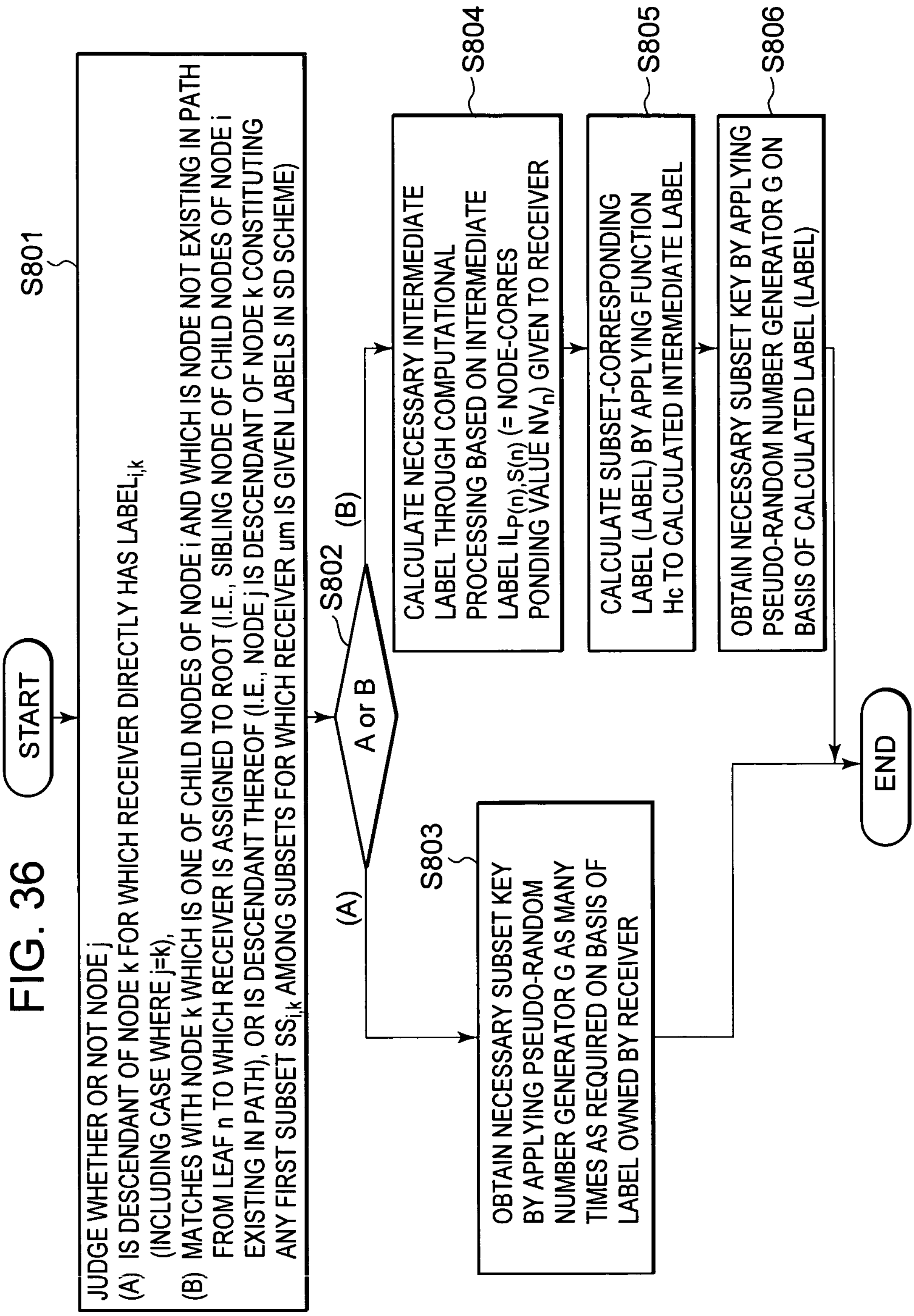
START
S801
JUDGE WHETHER OR NOT NODE j
(A) IS DESCENDANT OF NODE k FOR WHICH RECEIVER DIRECTLY HAS LABEL$_{i,k}$
(INCLUDING CASE WHERE j=k),
(B) MATCHES WITH NODE k WHICH IS ONE OF CHILD NODES OF NODE i AND WHICH IS NODE NOT EXISTING IN PATH FROM LEAF n TO WHICH RECEIVER IS ASSIGNED TO ROOT (I.E., SIBLING NODE OF CHILD NODES OF NODE i EXISTING IN PATH), OR IS DESCENDANT THEREOF (I.E., NODE j IS DESCENDANT OF NODE k CONSTITUTING ANY FIRST SUBSET SS$_{i,k}$ AMONG SUBSETS FOR WHICH RECEIVER um IS GIVEN LABELS IN SD SCHEME)
S802
A or B
(A)
(B)
S803
OBTAIN NECESSARY SUBSET KEY BY APPLYING PSEUDO-RANDOM NUMBER GENERATOR G AS MANY TIMES AS REQUIRED ON BASIS OF LABEL OWNED BY RECEIVER
S804
CALCULATE NECESSARY INTERMEDIATE LABEL THROUGH COMPUTATIONAL PROCESSING BASED ON INTERMEDIATE LABEL $IL_{P(n),S(n)}$ (= NODE-CORRES PONDING VALUE $NV_n$) GIVEN TO RECEIVER
S805
CALCULATE SUBSET-CORRESPONDING LABEL (LABEL) BY APPLYING FUNCTION Hc TO CALCULATED INTERMEDIATE LABEL
S806
OBTAIN NECESSARY SUBSET KEY BY APPLYING PSEUDO-RANDOM NUMBER GENERATOR G ON BASIS OF CALCULATED LABEL (LABEL)
END

FIG. 37

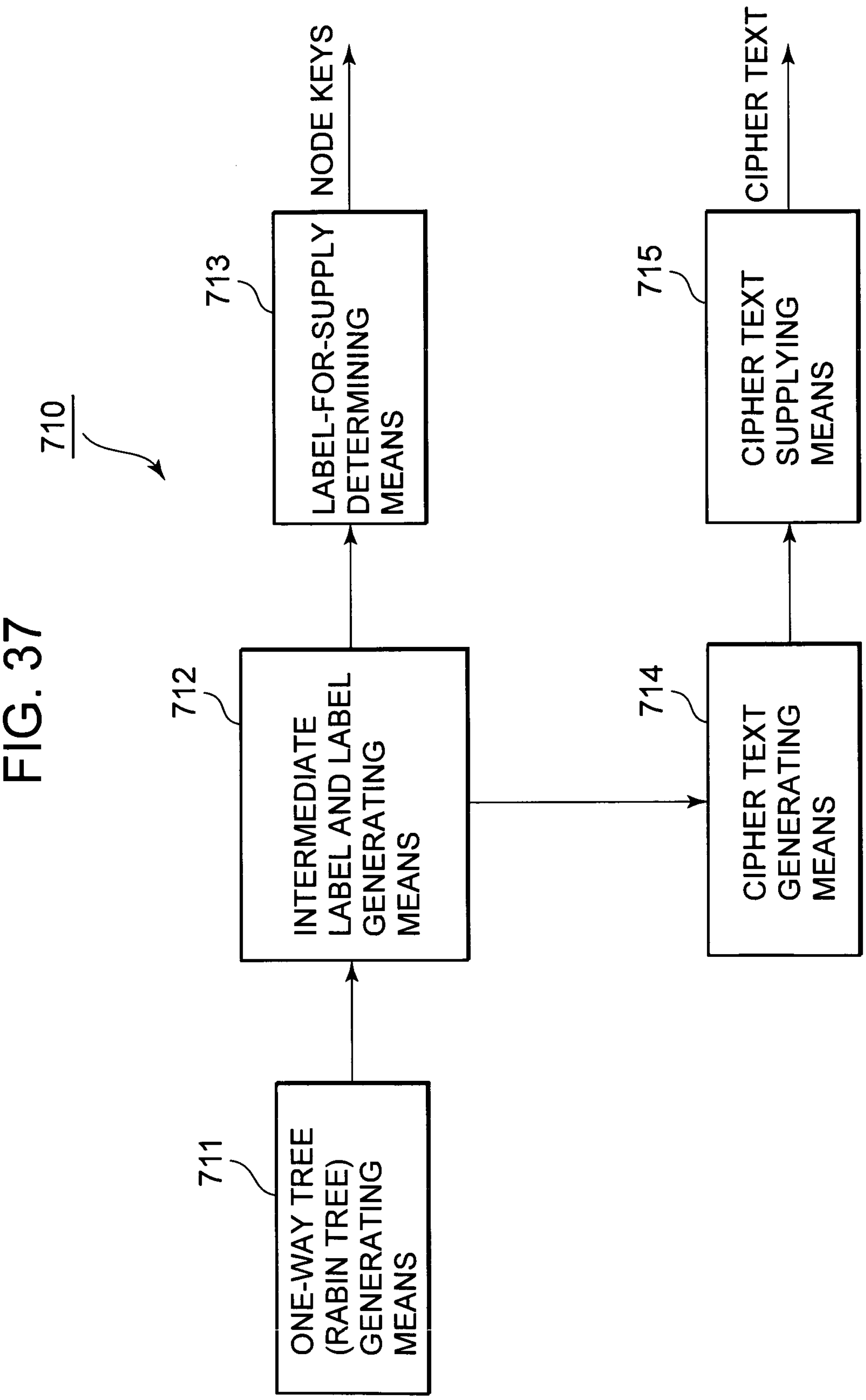
710
711
ONE-WAY TREE (RABIN TREE) GENERATING MEANS
712
INTERMEDIATE LABEL AND LABEL GENERATING MEANS
713
LABEL-FOR-SUPPLY DETERMINING MEANS
NODE KEYS
714
CIPHER TEXT GENERATING MEANS
715
CIPHER TEXT SUPPLYING MEANS
CIPHER TEXT

FIG. 38

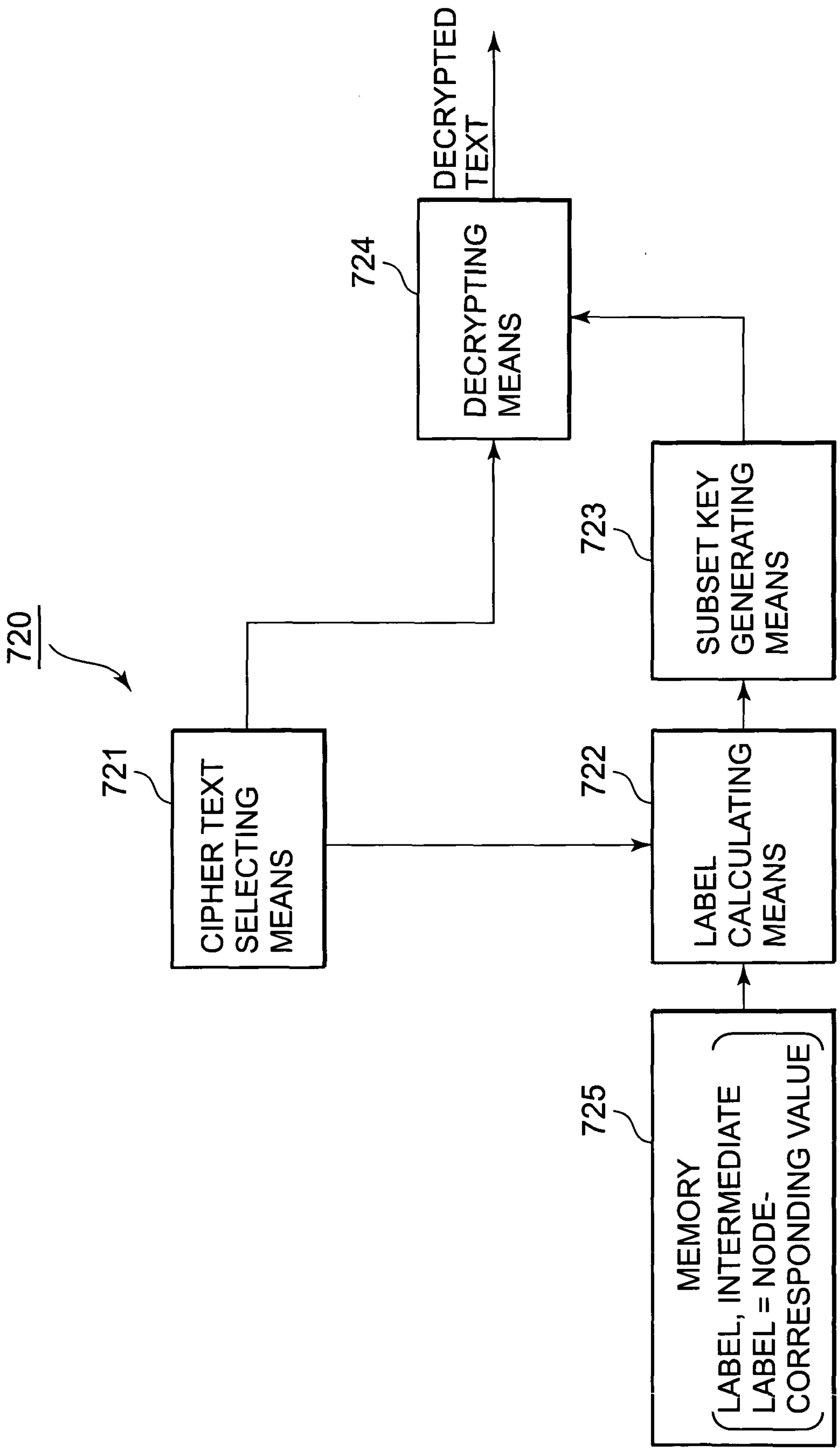
720
721
CIPHER TEXT SELECTING MEANS
722
LABEL CALCULATING MEANS
723
SUBSET KEY GENERATING MEANS
724
DECRYPTING MEANS
DECRYPTED TEXT
725
MEMORY
(LABEL, INTERMEDIATE LABEL = NODE-CORRESPONDING VALUE)

FIG. 39

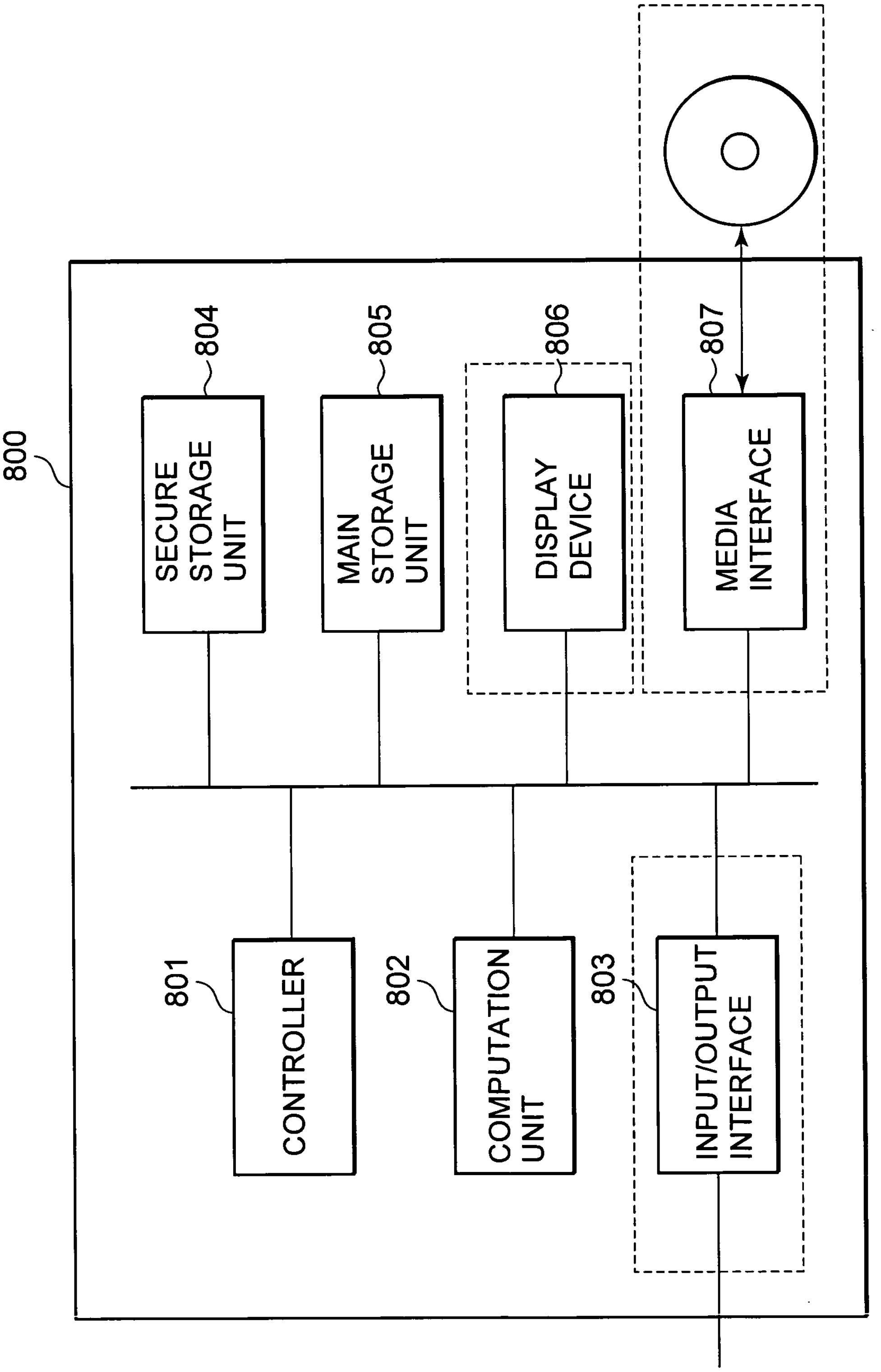
800
SECURE STORAGE UNIT
804
MAIN STORAGE UNIT
805
DISPLAY DEVICE
806
MEDIA INTERFACE
807
CONTROLLER
801
COMPUTATION UNIT
802
INPUT/OUTPUT INTERFACE
803

FIG. 40

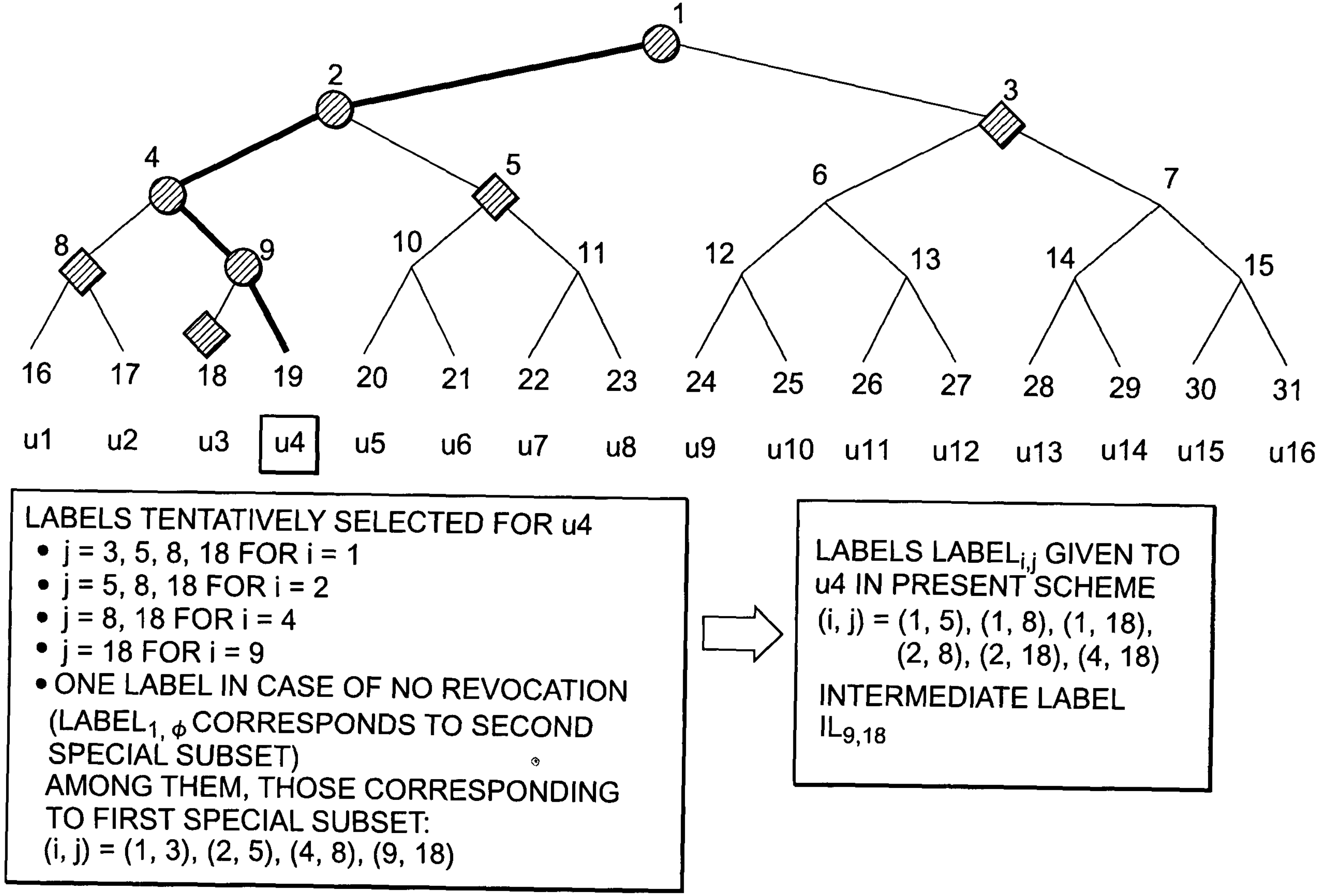
1
2
3
4
5
6
7
8
9
10
11
12
13
14
15
16
17
18
19
20
21
22
23
24
25
26
27
28
29
30
31
u1
u2
u3
u4
u5
u6
u7
u8
u9
u10
u11
u12
u13
u14
u15
u16
LABELS TENTATIVELY SELECTED FOR u4
• j = 3, 5, 8, 18 FOR i = 1
• j = 5, 8, 18 FOR i = 2
• j = 8, 18 FOR i = 4
• j = 18 FOR i = 9
• ONE LABEL IN CASE OF NO REVOCATION
(LABEL$_{1,\phi}$ CORRESPONDS TO SECOND
SPECIAL SUBSET)
AMONG THEM, THOSE CORRESPONDING
TO FIRST SPECIAL SUBSET:
(i, j) = (1, 3), (2, 5), (4, 8), (9, 18)
LABELS LABEL$_{i,j}$ GIVEN TO
u4 IN PRESENT SCHEME
(i, j) = (1, 5), (1, 8), (1, 18),
(2, 8), (2, 18), (4, 18)
INTERMEDIATE LABEL
$IL_{9,18}$

FIG. 41

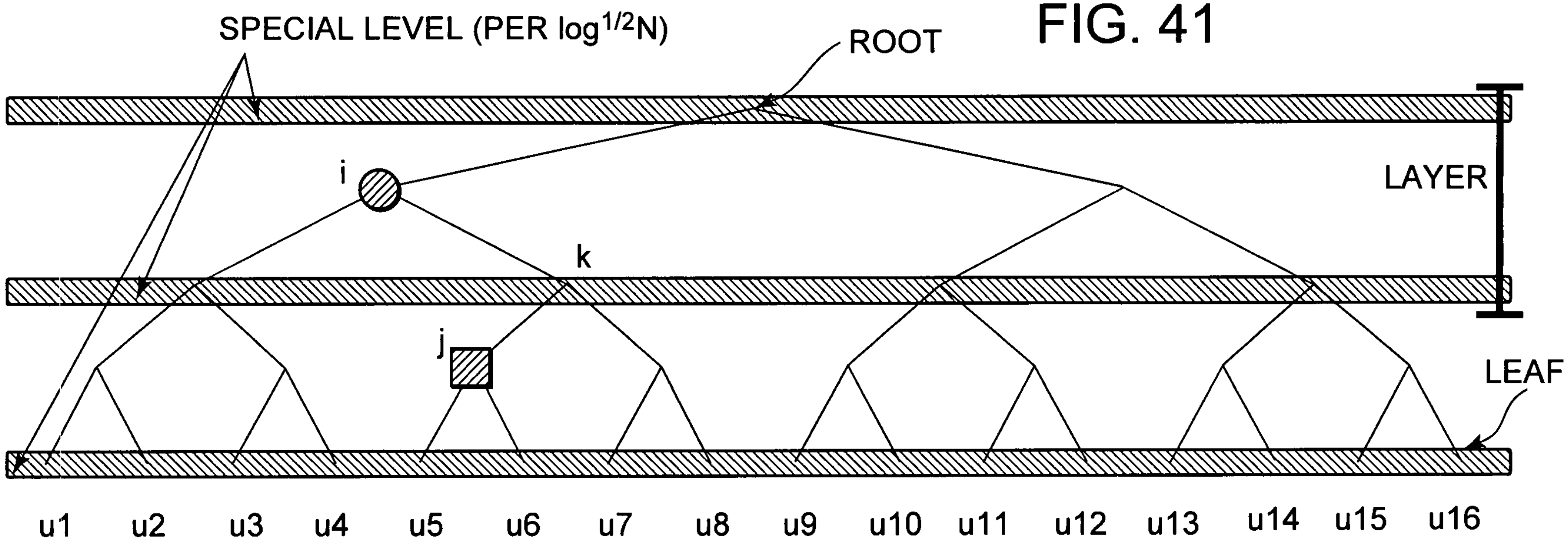


AMONG ALL SUBSET DIFFERENCE SETS $S_{i,j}$,
ANY SET SATISFYING AT LEAST ONE OF CONDITIONS

- BOTH i AND j BELONG TO SAME LAYER
- i IS AT SPECIAL LEVEL

IS DEFINED

IN ABOVE EXAMPLE, $S_{i,j}$ IS NOT DEFINED.
IT IS REPRESENTED AS UNION OF TWO SETS, SUCH AS
$S_{i,j} = S_{i,k} \cup S_{k,j}$
→ AMOUNTS OF COMMUNICATION DATA DOUBLES AT MAXIMUM COMPARED TO THAT IN SD

ONE KIND OF SPECIAL LEVEL IN Basic LSD
PLURAL KINDS OF SPECIAL LEVELS IN General LSD

FIG. 42

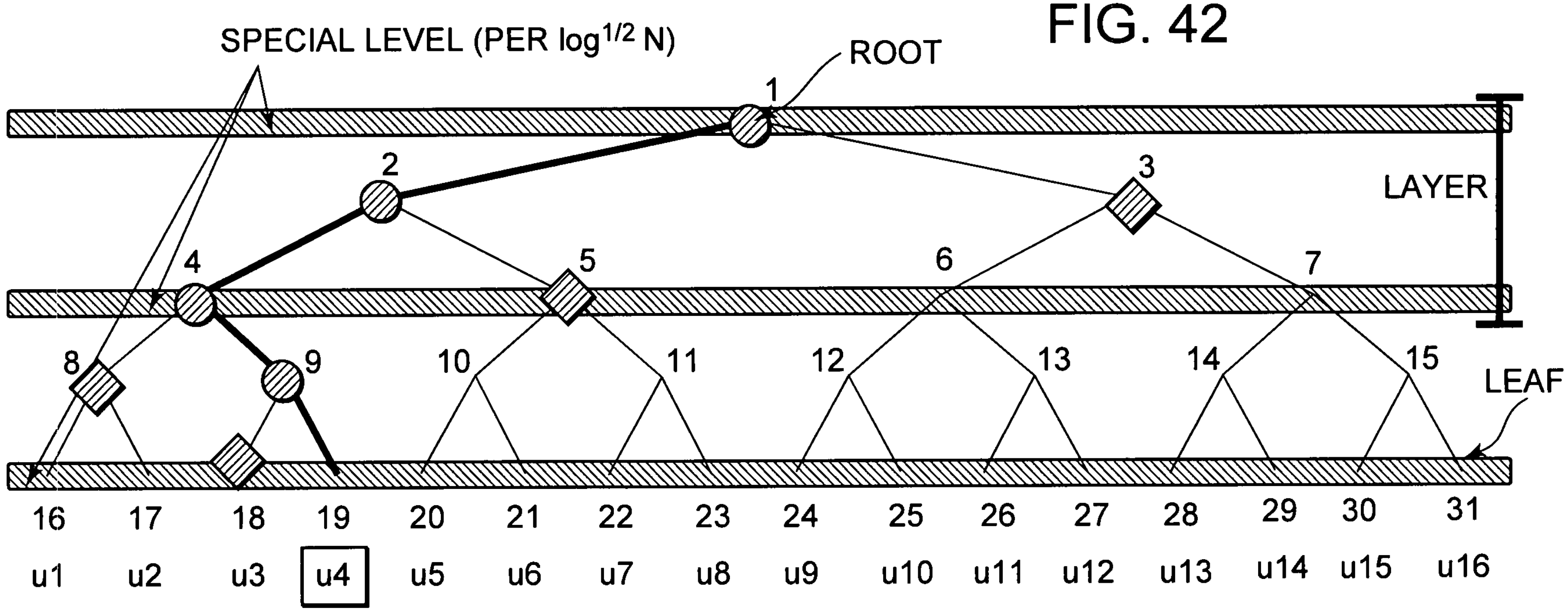


LABELS OWNED BY u4

- j = 3, 5, 8, 18 FOR i = 1
- j = 5 FOR i = 2
- j = 8, 18 FOR i = 4
- j = 18 FOR i = 9
- ONE LABEL ($LABEL_{1,\phi}$) IN CASE OF NO REVOCATION

NUMBER OF LABELS HELD BY RECEIVER (INCLUDING ONE USED WHERE NONE ARE REVOKED) $\log^{3/2} N+1$

FIG. 43

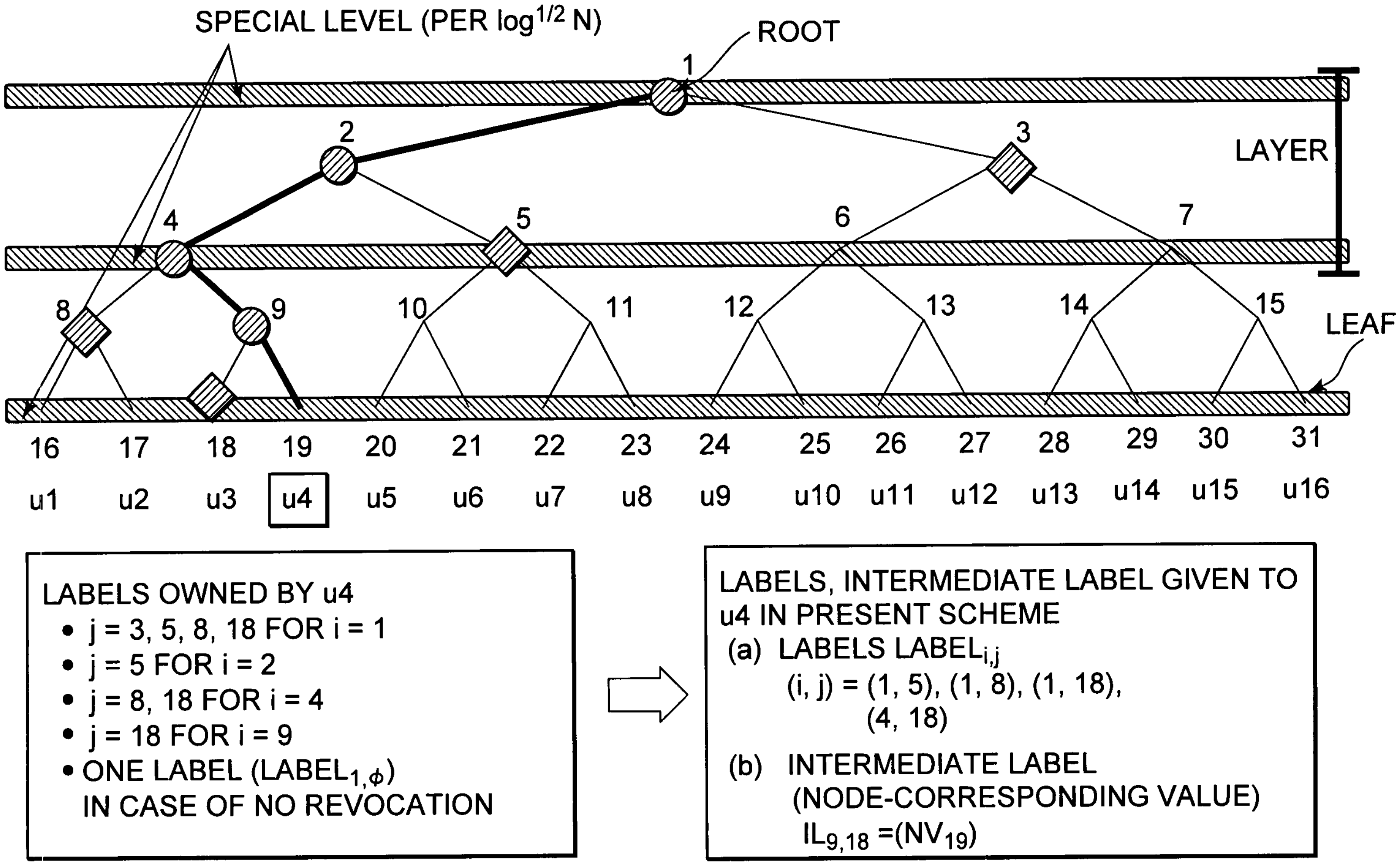
SPECIAL LEVEL (PER $\log^{1/2} N$)
ROOT
LAYER
LEAF
1
2
3
4
5
6
7
8
9
10
11
12
13
14
15
16 17 18 19 20 21 22 23 24 25 26 27 28 29 30 31
u1 u2 u3 u4 u5 u6 u7 u8 u9 u10 u11 u12 u13 u14 u15 u16
LABELS OWNED BY u4
• j = 3, 5, 8, 18 FOR i = 1
• j = 5 FOR i = 2
• j = 8, 18 FOR i = 4
• j = 18 FOR i = 9
• ONE LABEL ($LABEL_{1,\phi}$) IN CASE OF NO REVOCATION
LABELS, INTERMEDIATE LABEL GIVEN TO u4 IN PRESENT SCHEME
(a) LABELS $LABEL_{i,j}$
(i, j) = (1, 5), (1, 8), (1, 18), (4, 18)
(b) INTERMEDIATE LABEL (NODE-CORRESPONDING VALUE)
$IL_{9,18}$ =($NV_{19}$)

**INTERNATIONAL SEARCH REPORT**

International application No.
PCT/JP2005/015814

A. CLASSIFICATION OF SUBJECT MATTER
*H04L9/08* (2006.01)

According to International Patent Classification (IPC) or to both national classification and IPC

B. FIELDS SEARCHED

Minimum documentation searched (classification system followed by classification symbols)
*H04L9/08* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JST-PLUS, one-way, tree, key

C. DOCUMENTS CONSIDERED TO BE RELEVANT

| Category* | Citation of document, with indication, where appropriate, of the relevant passages | Relevant to claim No. |
|---|---|---|
| X<br><br><br>Y<br>A | "Ichihokosei Kansu ni yoru Ki Kozo Kagi Kanri Hoshiki no Koritsuka", 2004 Nen Ango to Joho Security Symposium Yokoshu, Vol.I of II, 27 January, 2004 (27.01.04), pages 189 to 194, particularly, 3.2 Teian Hoshiki 2 | 1,3,6,11,12, 17,19,22,27, 28,30,33,34<br>2,18<br>4,5,7-10, 13-16,20,21, 23-26,29,31, 32 |
| X | Key Establishment in Large Dynamic Groups Using One-Way Function Trees, IEEE Transactions on Software Engineering, Vol.29, No.5, 2003.05, pages 444 to 458, especially 4 ONE-WAY FUNCTION TREES | 1,3,6,11,12, 17,19,22,27, 28,30,33,34 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 December, 2005 (21.12.05) | 10 January, 2006 (10.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/015814

C (Continuation). DOCUMENTS CONSIDERED TO BE RELEVANT

| Category* | Citation of document, with indication, where appropriate, of the relevant passages | Relevant to claim No. |
|---|---|---|
| Y | "Rabin Tree to broadcast Ango eno Oyo", Information Processing Society of Japan Kenkyu Hokoku, Vol.2003, No.74, 17 July, 2003 (17.07.03), pages 9 to 12, particularly, 3. Teian Hoshiki | 2,18 |
| Y | "Risoteki Genkin Hoshiki", Denshi Tsushin Gakkai Gijutsu Kenkyu Hokoku, Vol.91, No.127, 15 July, 1991 (15.07.91), pages 39 to 47, particularly, 2 Junbi, 3.1 Protocol | 2,18 |
| Y | Universal Electronic Cash, Lecture Notes in Computer Science, Vol.576, 1992, pages 324 to 337, especially 2 Preparations, 3.1 Protocol | 2,18 |
| P,X<br><br>P,Y | Secure, Efficient and Practical Key Management Scheme in the Complete-Subtree Method, IEICE TRANSACTIONS on Fundamentals of Electronics, Communications and Computer Sciences, Vol.E88-A, No.1, 01 January, 2005 (01.01.05), pages 189 to 194, especially 3.1 The Proposed Scheme | 1,3,6,11,12, 17,19,22,27, 28,30,33,34<br>2,18 |
| P,Y | Rabin Tree and Its Application to Group Key Distribution, Lecture Notes in Computer Science, Vol.3299, 2004.11, pages 384 to 391, especially 3 The Proposed Protocol | 2,18 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001352322 A


### Non-patent literature cited in the description


- Advances in Cryptography - Crypto. 2001
- Lecture Notes in Computer Science. Revocation and Tracing Schemes for Stateless Receivers. Springer, 2001, vol. 2139, 41-62
- *Transactions of Symposium on Cryptography and Information Security,* 2004, 189-194
- *Transactions of Symposium on Cryptography and Information Security,* 2004, 195-199
- *Advances in Cryptography - Crypto,* 2001
- **A.J. MENEZES ; P.C. VAN OORSCHOT ; S.A VANSTONE.** Handbook of Applied Cryptography. CRC Press, 1996
- **TATSUAKI OKAMOTO ; HIROSUKE YAMAMOTO.** Modern Cryptography. Sangyo Tosho, 114
- **A.J. MENEZES ; P.C. VAN OORSCHOT ; S.A VANSTONE.** Handbook of Applied Cryptography. CRC Press, 1996, 292-294
- **D. HALEVY ; A. SCHAMIR.** Advances in Cryptography - Crypto 2002. Springer, 2002, vol. 2442, 47-60
- **A.J. MENEZES ; P.C. VAN OORSCHOT ; S.A VANSTONE.** Handbook of Applied Cryptography. CRC Press, 1996, 614